# EUROPÄISCHE PATENTSCHRIFT

(11) **EP 3 966 945 B1**
(45) Veröffentlichungstag und Bekanntmachung des Hinweises auf die Patenterteilung: **13.03.2024**
(21) Anmeldenummer: 20724822.0
(22) Anmeldetag: 07.05.2020
(51) Int. Cl.: H04B 5/00, H04B 5/02, H02J 50/12, H02J 50/80

(54) **ABSTIMMUNG EINES ELEKTROMAGNETISCHEN SCHWINGKREISES EINER KONFIGURATIONSSCHNITTSTELLE EINES TEILNEHMERS EINES KOMMUNIKATIONSSYSTEMS**
TUNING OF AN ELECTROMAGNETIC RESONANT CIRCUIT OF A CONFIGURATION INTERFACE OF A SUBSCRIBER OF A COMMUNICATION SYSTEM
ACCORD D'UN CIRCUIT OSCILLANT ÉLECTROMAGNÉTIQUE D'UNE INTERFACE DE CONFIGURATION D'UN ABONNÉ D'UN SYSTÈME DE COMMUNICATION

(30) Priorität: 10.05.2019 DE 102019206848
(43) Veröffentlichungstag der Anmeldung: 16.03.2022
(73) Patentinhaber: Fraunhofer-Gesellschaft zur Förderung der angewandten Forschung e.V., 80686 München (DE)
(72) Erfinder: KILIAN, Gerd, 91058 Erlangen (DE); JARRESCH, Alexej, 91058 Erlangen (DE); KOHLMANN, Martin, 91058 Erlangen (DE); ERETH, Stefan, 91058 Erlangen (DE); KEMETH, Ferdinand, 91058 Erlangen (DE); KOCH, Robert, 91058 Erlangen (DE)
(74) Vertreter: Schlenker, Julian
(86) Internationale Anmeldenummer: PCT/EP2020/062758
(87) Internationale Veröffentlichungsnummer: WO 2020/229309

(56) Entgegenhaltungen:
- US-A1- 2013 127 259
- US-A1- 2013 281 016
- US-A1- 2016 057 542
- US-A1- 2017 118 714
- US-A1- 2017 213 831

## Beschreibung

Ausführungsbeispiele der vorliegenden Erfindung beziehen sich auf ein Verfahren zur Übertragung von Daten zwischen einem Gerät und einem anderen Gerät. Manche Ausführungsbeispiele beziehen sich auf ein Gerät, ein anderes Gerät, und ein System mit einem Gerät und einem anderen Gerät. Manche Ausführungsbeispiele beziehen sich auf eine Abstimmung eines elektromagnetischen Schwingkreises einer Konfigurationsschnittstelle eines Teilnehmers eines Kommunikationssystems.

Herkömmlicherweise werden benutzerkonfigurierbare Geräte, wie z.B. IoT-Knoten (z.B. Sensorknoten) oder WLAN Kameras, über eine drahtgebundene Verbindung konfiguriert. Hierzu sind jedoch mehrere elektrische Kontakte sowohl am zu konfigurierenden Gerät als auch an dem zur Konfiguration des Geräts eingesetzten Benutzerendgerät, z.B. einem Mobiltelefon, erforderlich.

Alternativ können benutzerkonfigurierbare Geräte über eine Funkverbindung konfiguriert werden. Hierzu werden jedoch dedizierte Sende/Empfangsbausteine benötigt.

Des Weiteren können benutzerkonfigurierbare Geräte über eine optische Verbindung konfiguriert werden. Hierzu sind jedoch sowohl eine Sichtverbindung als auch dedizierte optische Komponenten erforderlich.

Darüber hinaus können benutzerkonfigurierbare Geräte über eine akustische Verbindung konfiguriert werden, wie dies beispielsweise bei Rauchmeldern üblich ist. Der Einsatz einer akustischen Verbindung erfordert jedoch ein Mikrofon im Gerät.

Ferner können benutzerkonfigurierbare Geräte mittels einer magnetischen Kopplung konfiguriert werden. Üblicherweise wird hierbei auf NFC (NFC = near field communication, dt. Nahfeldkommunikation) zurückgegriffen, wozu jedoch zusätzliche NFC Bausteine im Gerät erforderlich sind. Erschwerend kommt hinzu, dass nicht alle Benutzerendgeräte NFC unterstützen. Beispielweise unterstützen aktuell verfügbare iPhones ^{®} über NFC nur lesen, jedoch nicht schreiben.

Ferner ist die Ausnutzung des magnetischen Effekts von Lautsprechern bekannt. So beschreibt die US 2,381,097 A einen sog. Telefonmithörverstärker, der den magnetischen Effekt von Lautsprechern ausnutzt. Hierbei wird das magnetische Feld eines Lautsprechers empfangen, verstärkt, und wieder durch einen weiteren Lautsprecher in ein akustisches Signal verwandelt.

Die US 4,415,769 A beschreibt eine Vorrichtung, die es ermöglicht, Signale über eine Telefonleitung durch elektromagnetische Ankopplung an zumindest ein induktives Element des Telefonapparats zu senden und zu empfangen.

Die US 3,764,746 A beschreibt einen Datenkoppler zum Koppeln eines Datenterminals an ein Telefonnetz ohne direkte leitende Verbindung. Hierbei werden Datensignale von einer Induktionsspule elektromagnetisch in einen Lautsprecher eines Telefonhörers gekoppelt.

Die US 2017/118714 A1 beschreibt eine Energieempfangsvorrichtung. Die Energieempfangsvorrichtung umfasst eine erste Antenne, eine zweite Antenne und eine Steuereinheit, die eine Steuerung ausführt, um ausschließlich und abwechselnd eine Energieempfangsverarbeitung zum drahtlosen Erhalten von Energie von einer Energieübertragungsvorrichtung über die erste Antenne und eine Kommunikationsverarbeitung zum drahtlosen Kommunizieren über die zweite Antenne auszuführen, wobei während der Ausführung der Kommunikationsverarbeitung die Steuereinheit eine Steuerung ausführt, um eine Resonanzfrequenz der ersten Antenne auf eine Frequenz einzustellen, die niedriger ist als ein Trägerfrequenzband der zweiten Antenne für die Ausführung der Kommunikation.

Die US 2013/127259 A1 beschreibt eine Vorrichtung zur induktiven Energieübertragung. Die Vorrichtung umfasst einen Schwingkreis, der eine Induktivität und eine Kapazität aufweist, ein Leistungsbauteil zum Anregen einer elektrischen Schwingung im Schwingkreis und eine Bestimmungseinheit zum Bestimmen eines Eingangsstroms des Leistungsbauteils. Dabei umfasst die Vorrichtung außerdem eine Einrichtung, die dazu ausgebildet ist, eine Resonanzfrequenz des Schwingkreises zu verändern.

Die US 2016/057542 A1 bezieht sich auf eine Datenübertragung von Lautsprechern unter Verwendung von Magnetflusskopplung. Ein Lautsprechertreiber einer ersten Vorrichtung überträgt ein Magnetflusssignal, das Konfigurationsinformationen codiert. Ein Magnetflussdetektor einer zweiten Vorrichtung empfängt das Magnetflusssignal. Ein Prozessor der zweiten Vorrichtung demoduliert das Magnetflusssignal, um die Konfigurationsinformationen wiederherzustellen. Mindestens ein Betriebsparameter des zweiten Geräts wird unter Verwendung der Konfigurationsinformationen konfiguriert.

Die US 2017/213831 A1 beschreibt eine Operationsverstärkerschaltung), die eine Ausgangsverstärkerstufe aufweist, welche eine erste Spannung einer Differenzverstärkerstufe verstärkt, die die erste Spannung ausgibt, und die eine Spannung ausgibt, die verstärkt ist, und zwar von einem Ausgangsanschluss.

Die US 2013/281016 A1 beschreibt einen Sender/Empfänger zur Verwendung in einem Kommunikationssystem, das Magnetfeldinduktion zum Übertragen von Daten verwendet, wobei der Sender/Empfänger einen Verstärker zum Ansteuern einer Antenne aufweist, wobei der Verstärker mit einer Kapazität und einem Widerstand in Parallelschaltung mit der Antenne einen Parallelresonanzkreis bildet. Der Widerstandswert des Widerstands ist einstellbar, um eine Einstellung des Betriebsgütefaktors des Parallelresonanzkreises zu gestatten. Der Sender/Empfänger umfasst eine Verarbeitungseinheit, die ausgelegt ist, den Rauschabstand eines vom Sender/Empfänger empfangenen Signals zu bestimmen und auf der Basis dieses des Rauschabstands ein auf ein vom Sender/Empfänger zu übertragendes Datensignal anzuwendendes Modulationsschema auszuwählen. Der Wert des Widerstands wird auf einen Wert eingestellt, bei dem der Betriebsgütefaktor des Parallelresonanzkreises die von dem ausgewählten Modulationsschema erforderte Bandbreite und Datenrate unterstützen kann.

Der vorliegenden Erfindung liegt somit die Aufgabe zugrunde, ein Konzept zu schaffen, welches eine kostengünstige und durch einen Benutzer einfach durchzuführende Konfiguration eines Geräts ermöglicht.

Diese Aufgabe wird durch die unabhängigen Patentansprüche gelöst.

Vorteilhafte Weiterbildungen finden sich in den abhängigen Patentansprüchen.

Ausführungsbeispiele schaffen einen Teilnehmer eines Kommunikationssystems, wobei der Teilnehmer einen Microcontroller und eine Konfigurationsschnittstelle aufweist, wobei die Konfigurationsschnittstelle einen mit dem Microcontroller verbundenen elektromagnetischen Schwingkreis [z.B. mit einer ersten Spule L1 und einem ersten Kondensator C1] umfasst, der konfiguriert ist, um ein magnetisches Signal zu detektieren und/oder zu erzeugen, das zu und/oder von dem Teilnehmer zu übertragene Daten aufweist, wobei der Microcontroller mit zumindest einem Abstimmelement zur Abstimmung des elektromagnetischen Schwingkreises verbunden ist, wobei der Microcontroller konfiguriert ist, um zumindest einen Pin des Microcontrollers, mit dem das zumindest eine Abstimmelement verbunden ist, auf einen aus mehreren unterschiedlichen Betriebsmodi zu schalten, um den elektromagnetischen Schwingkreis abzustimmen.

Bei Ausführungsbeispielen sind die mehreren unterschiedlichen Betriebsmodi zumindest zwei aus einem hochohmigen Eingangsmodus, einem Pull-up-Eingangsmodus, und einem

Ausgangsmodus, in dem an dem jeweiligen Pin ein Bezugspotential [z.B. Masse] oder ein Versorgungspotential [z.B. Vcc] bereitgestellt wird.

Bei Ausführungsbeispielen ist der zumindest eine Pin des Microcontrollers ein Eingangs-/Ausgangs-Pin.

Bei Ausführungsbeispielen ist der Microcontroller konfiguriert, um den zumindest einen Pin zwischen zumindest zwei der mehreren unterschiedlichen Betriebsmodi umzuschalten, um den elektromagnetischen Schwingkreis abzustimmen.

Bei Ausführungsbeispielen ist das zumindest eine Abstimmelement Teil des elektromagnetischen Schwingkreises.

Beispielsweise kann der elektromagnetische Schwingkreis eine Spule und einen oder mehrere Kondensatoren aufweisen, wobei der eine Kondensator oder zumindest einer der mehreren Kondensatoren als das zumindest eine Abstimmelement verwendet werden bzw. das zumindest eine Abstimmelement sind.

Bei Ausführungsbeispielen ist das zumindest eine Abstimmelement mit dem elektromagnetischen Schwingkreis verbunden.

Bei Ausführungsbeispielen ist der Microcontroller konfiguriert, um den magnetischen Schwingkreis in Abhängigkeit von einer Trägerfrequenz des zu detektierenden und/oder zu erzeugenden magnetischen Signals abzustimmen.

Beispielsweise kann der Microcontroller konfiguriert sein, um eine Resonanzfrequenz des elektromagnetischen Schwingkreises und die Trägerfrequenz des zu detektierenden und/oder zu erzeugenden magnetischen Signals aufeinander abzustimmen, beispielsweise so dass die Resonanzfrequenz und die Trägerfrequenz gleich sind, z.B. mit einer Toleranz von ±5% oder ±10% oder ± 20%.

Bei Ausführungsbeispielen liegt das zu detektierende und/oder zu erzeugende magnetische Signal im Frequenzbereich von 10 Hz bis 20 kHz.

Bei Ausführungsbeispielen weist der elektromagnetische Schwingkreis eine erste Spule [z.B. L1] und einen ersten Kondensator [z.B. C1] auf.

Bei Ausführungsbeispielen ist der elektromagnetische Schwingkreis in Reihe zwischen einem ersten Pin [z.B. Pin E] des Microcontrollers und einem Bezugspotentialanschluss [z.B. Masseanschluss] geschaltet, wobei das zumindest eine Abstimmelement zwischen dem ersten Pin [z.B. Pin E] und zumindest einem zweiten Pin [z.B. einen zweiten Pin und/oder einen dritten Pin, z.B. Pins A und/oder B] des Microcontrollers geschaltet ist, wobei der Microcontroller konfiguriert ist, um den zumindest einen zweiten Pin auf einen aus mehreren unterschiedlichen Betriebsmodi zu schalten, um den elektromagnetischen Schwingkreis abzustimmen.

Beispielsweise kann der elektromagnetische Schwingkreis eine erste Spule L1 und einen ersten Kondensator C1 aufweisen, wobei die Spule und der Kondensator parallel geschaltet sind, z.B. so dass der Kondensator zwischen dem ersten Pin des Microcontrollers und dem Bezugspotentialanschluss geschaltet ist und die Spule zwischen dem ersten Pin des Microcontrollers und dem Bezugspotentialanschluss geschaltet ist.

Beispielsweise kann das zumindest eine Abstimmelement zumindest ein Abstimmkondensator sein.

Bei Ausführungsbeispielen ist der Microcontroller konfiguriert, um den elektromagnetischen Schwingkreis durch Schalten des zumindest einen zweiten Pins jeweils auf einen aus folgenden unterschiedlichen Betriebsmodi abzustimmen:
- einem hochohmigen Eingangsmodus, und
- einem Ausgangsmodus, in dem an dem jeweiligen Pin ein Bezugspotential [z.B. Masse] bereitgestellt wird.

Bei Ausführungsbeispielen ist der elektromagnetische Schwingkreis in Reihe zwischen einem ersten Pin [z.B. Pin A] und einem zweiten Pin [z.B. Pin B] des Microcontrollers geschaltet, wobei der elektromagnetische Schwingkreis zwei in Reihe geschaltete Kondensatoren aufweist, wobei ein Anschluss zwischen den zwei in Reihe geschalteten Kondensatoren [z.B. C1 und C2] mit einem dritten Pin des Microcontrollers verbunden ist, wobei eine Spannungsabhängigkeit der Kapazitäten der zwei in Reihe geschalteten Kondensatoren [z.B. C1 und C2] als das zumindest eine Abstimmelement verwendet wird, wobei der Microcontroller konfiguriert ist, um den dritten Pin auf einen aus mehreren unterschiedlichen Betriebsmodi zu schalten, um den elektromagnetischen Schwingkreis abzustimmen.

Beispielsweise kann der elektromagnetische Schwingkreis eine erste Spule L1 und die zwei in Reihe geschaltete Kondensatoren, z.B. einen ersten und zweiten in Reihe geschaltete Kondensator C1 und C2, aufweisen, wobei die erste Spule L1 und die zwei in Reihe geschaltete Kondensatoren C1 und C2 parallel geschaltet sind, so dass die erste Spule L1 zwischen dem ersten Pin und dem zweiten Pin geschaltet ist und die zwei in Reihe geschaltete Kondensatoren C1 und C2 zwischen dem ersten Pin und dem zweiten Pin geschaltet sind.

Beispielsweise kann der erste Pin des Microcontrollers mit einem Bezugspotentialanschluss [z.B. Masseanschluss] verbunden sein. Alternativ oder zusätzlich kann auch der erste Pin [z.B. Pin A] des Microcontrollers auf einen Ausgangsmodus geschaltet werden, in dem an dem ersten Pin ein Bezugspotential [z.B. Masse] bereitgestellt wird.

Bei Ausführungsbeispielen ist der Anschluss zwischen den zwei in Reihe geschalteten Kondensatoren über einen ersten Widerstand [z.B. R1] mit dem dritten Pin des Microcontrollers verbunden.

Bei Ausführungsbeispielen ist der Anschluss zwischen den zwei in Reihe geschalteten Kondensatoren über einen ersten Widerstand [z.B. R1] und einem zu dem Widerstand parallel geschalteten dritten Kondensator [z. B. C3] mit dem dritten Pin des Microcontrollers verbunden.

Bei Ausführungsbeispielen ist der Microcontroller konfiguriert, um den elektromagnetischen Schwingkreis abzustimmen durch
- Schalten des dritten Pins von einem Ausgangsmodus, in dem an dem jeweiligen Pin ein Bezugspotential [z.B. Masse] bereitgestellt wird, auf einen Pull-up-Eingangsmodus oder einen Ausgangsmodus, in dem an dem jeweiligen Pin ein Versorgungspotential bereitgestellt wird, für eine definierte Zeit T, und
- Schalten des dritten Pins, nach der definierten Zeit T, in einen hochohmigen Eingangsmodus.

Bei Ausführungsbeispielen ist der Microcontroller konfiguriert, um die definierte Zeit T adaptiv anzupassen [z.B. in Abhängigkeit von einer Soll-Resonanzfrequenz des elektromagnetischen Schwingkreises oder einer Trägerfrequenz des magnetischen Signals], um den elektromagnetischen Schwingkreis abzustimmen.

Bei Ausführungsbeispielen ist der Microcontroller konfiguriert, um [z.B. in einem Empfangsmodus] den elektromagnetischen Schwingkreis vor dem Detektieren des magnetischen Signals mit dem elektromagnetischen Schwingkreis abzustimmen, wobei der Microcontroller konfiguriert ist, um nach dem Abstimmen des elektromagnetischen Schwingkreises das magnetische Signal mit dem elektromagnetischen Schwingkreis zu detektieren.

Beispielsweise kann der Microcontroller konfiguriert sein, um in dem Empfangsmodus, den ersten Pin [z.B. Pin A] und den zweiten Pin [z.B. Pin B] auf einen Komparator-Eingangsmodus zu schalten.

Bei Ausführungsbeispielen ist der Microcontroller konfiguriert, um [z.B. in einem Sendemodus] den dritten Pin [z.B. Pin C] auf einen PWM Ausgangsmodus zu schalten, in dem an dem jeweiligen Pin ein PWM Signal bereitgestellt wird, um ein magnetisches Signal mit dem elektromagnetischen Schwingkreis zu erzeugen, wobei der Microcontroller konfiguriert ist, um den elektromagnetischen Schwingkreis durch Einstellen eines Pulsweitenverhältnis des PWM Signals abzustimmen.

Bei Ausführungsbeispielen ist der Microcontroller konfiguriert, um die von dem Teilnehmer zu übertragenen Daten durch eine Änderung einer Pulsdauer des PWM Signals zu modulieren.

Beispielsweise kann der Microcontroller konfiguriert sein, um in dem Sendemodus den ersten Pin [z.B. Pin A] und den zweiten Pin [z.B. Pin C] jeweils auf einen hochohmigen Eingangsmodus zu schalten.

Weitere Ausführungsbeispiele schaffen einen Teilnehmer eines Kommunikationssystems, wobei der Teilnehmer einen Microcontroller und eine Konfigurationsschnittstelle aufweist, wobei die Konfigurationsschnittstelle einen mit dem Microcontroller verbundenen elektromagnetischen Schwingkreis [z.B. mit einer ersten Spule L1 und einem ersten Kondensator C1] umfasst, der konfiguriert ist, um ein magnetisches Signal zu detektieren und/oder zu erzeugen, das zu und/oder von dem Teilnehmer zu übertragene Daten aufweist, wobei der elektromagnetische Schwingkreis in Reihe zwischen einem ersten Pin [z.B. Pin A] und einem zweiten Pin [z.B. Pin B] des Microcontrollers geschaltet ist, wobei der elektromagnetische Schwingkreis [z.B. ein Anschluss des elektromagnetischen Schwingkreises, der auch mit dem ersten Pin [z.B. Pin A des Microcontrollers verbunden ist,] ferner mit einem dritten Pin [z.B. Pin C] des Microcontrollers verbunden ist, wobei der elektromagnetische Schwingkreis zwei in Reihe geschaltete Kondensatoren [z.B. C1 und C2] aufweist, wobei ein Anschluss zwischen den zwei in Reihe geschalteten Kondensatoren [z.B. C1 und C2] mit einem Bezugspotentialanschluss verbunden ist, wobei der Microcontroller konfiguriert ist, um [z.B. in einem Sendemodus] vor dem Erzeugen eines magnetischen

Signals mit dem elektromagnetischen Schwingkreis die zwei in Reihe geschalteten Kondensatoren aufzuladen [z.B. auf jeweils das halbe Versorgungspotential; z.B. Vcc/2] durch
- Schalten des dritten Pins auf einen Ausgangsmodus, in dem an dem jeweiligen Pin ein Versorgungspotential bereitgestellt wird, für eine definierte Ladezeit TL, und
- Schalten des dritten Pins, nach der definierten Ladezeit TL, auf einen hochohmigen Eingangsmodus.

[Beispielsweise kann der elektromagnetische Schwingkreis eine Spule und die zwei in Reihe geschaltete Kondensatoren aufweisen, wobei die Spule und die zwei in Reihe geschaltete Kondensatoren parallel geschaltet sind, so dass die Spule zwischen dem ersten Pin und dem zweiten Pin geschaltet ist und die zwei in Reihe geschaltete Kondensatoren zwischen dem ersten Pin und dem zweiten Pin geschaltet sind.

Bei Ausführungsbeispielen ist der Microcontroller konfiguriert, um nach dem Aufladen der zwei in Reihe geschalteten Kondensatoren des elektromagnetischen Schwingkreises das magnetische Signal mit dem elektromagnetischen Schwingkreis zu erzeugen.

Bei Ausführungsbeispielen ist der Microcontroller konfiguriert, um den dritten Pin [z.B. Pin C] auf einen PWM Ausgangsmodus zu schalten, um das magnetische Signal mit dem elektromagnetischen Schwingkreis zu erzeugen.

Bei Ausführungsbeispielen ist der elektromagnetische Schwingkreis über einen Widerstand [z.B. R1] mit dem dritten Pin des Microcontrollers verbunden.

Bei Ausführungsbeispielen ist der elektromagnetische Schwingkreis über einen Widerstand [z.B. R1] und einem zu dem Widerstand parallel geschalteten Kondensator [z.B. C3] mit dem dritten Pin des Microcontrollers verbunden.

Bei Ausführungsbeispielen ist zumindest ein dritter Kondensator [z.B. ein dritter Kondensator und/oder ein vierter Kondensator; z.B. C3 und/oder C4] als das zumindest eine Abstimmelement in Reihe zwischen dem elektromagnetischen Schwingkreises und zumindest einem vierten Pin [z.B. einen vierten Pin und/oder einen fünften Pin; z.B. Pin D und/oder Pin E] geschaltet, wobei der Microcontroller konfiguriert ist, um den elektromagnetischen Schwingkreis [z.B. in dem Sendemodus und in einem Empfangsmodus] durch Schalten des zumindest einen vierten Pins [z.B. in dem Aufwachmodus, normalen Empfangsmodus und/oder Sendemodus] jeweils auf einen aus folgenden unterschiedlichen Betriebsmodi abzustimmen:
- einem hochohmigen Eingangsmodus, und
- einem Ausgangsmodus, in dem an dem jeweiligen Pin ein Bezugspotential [z.B. Masse] bereitgestellt wird.

Bei Ausführungsbeispielen ist der Teilnehmer konfiguriert, um [z.B. in einem Empfangsmodus] vor dem Detektieren des magnetischen Signals mit dem elektromagnetischen Schwingkreis den elektromagnetischen Schwingreis abzustimmen, wobei eine Spannungsabhängigkeit der Kapazitäten der zwei in Reihe geschalteten Kondensatoren [z.B. C1 und C2] als das zumindest eine Abstimmelement verwendet wird, wobei der Microcontroller konfiguriert ist, um den dritten Pin auf einen aus mehreren unterschiedlichen Betriebsmodi zu schalten, um den elektromagnetischen Schwingkreis abzustimmen.

Bei Ausführungsbeispielen ist der Microcontroller konfiguriert, um nach dem Abstimmen des elektromagnetischen Schwingkreises das magnetische Signal mit dem elektromagnetischen Schwingkreis zu detektieren.

Bei Ausführungsbeispielen ist der Microcontroller konfiguriert, um den elektromagnetischen Schwingkreis abzustimmen durch
- Schalten des dritten Pins von einem Ausgangsmodus, in dem an dem jeweiligen Pin ein Bezugspotential [z.B. Masse] bereitgestellt wird, auf einen Pull-up-Eingangsmodus oder einen Ausgangsmodus, in dem an dem jeweiligen Pin ein Versorgungspotential bereitgestellt wird, für eine definierte Zeit T, und
- Schalten des dritten Pins, nach der definierten Zeit T, in einen hochohmigen Eingangsmodus.

Weitere Ausführungsbeispiele schaffen einen Teilnehmer eines Kommunikationssystems, wobei der Teilnehmer einen Microcontroller und eine Konfigurationsschnittstelle aufweist, wobei die Konfigurationsschnittstelle einen mit dem Microcontroller verbundenen elektromagnetischen Schwingkreis [z.B. mit einer ersten Spule L1 und einem ersten Kondensator C1] umfasst, der konfiguriert ist, um ein magnetisches Signal zu detektieren und/oder zu erzeugen, das zu und/oder von dem Teilnehmer zu übertragene Daten aufweist, wobei ein erster Anschluss des elektromagnetischen Schwingkreises auf ein Bezugspotential geschaltet ist, wobei ein zweiter Anschluss des elektromagnetischen Schwingkreises [z.B. direkt] mit einem Gate eines Transistors [z.B. ECM Transistors] verbunden ist, der mit dem Microcontroller verbunden ist.

Bei Ausführungsbeispielen ist ein Drain-Anschluss des Transistors [z.B. ECM Transistors] direkt mit einem zweiten Pin [z.B. Pin B] des Microcontrollers verbunden.

Bei Ausführungsbeispielen ist der Microcontroller konfiguriert, um in einem [z.B. periodischen] Aufwachmodus [z.B. Peeking-Modus], in dem überprüft wird, ob ein magnetisches Signal mit einer Aufwachsequenz empfangen wird, nur in Wachphasen den zweiten Pin [z.B. Pin B] auf einen Pull-up-Eingangsmodus zu schalten [z.B. und sonst in den hochohmigen Eingangsmodus zu schalten].

Bei Ausführungsbeispielen ist der Microcontroller konfiguriert, um in einem normalen Empfangsmodus den zweiten Pin [z.B. Pin B] auf einen Pull-up-Eingangsmodus zu schalten.

Bei Ausführungsbeispielen ist der Microcontroller konfiguriert, um in einem Energiesparmodus den zweiten Pin auf einen hochohmigen Eingangsmodus zu schalten.

Beispielsweise kann der Microcontroller ferner konfiguriert sein, um in dem Energiesparmodus den ersten Pin und/oder den dritten Pin und/oder den vierten Pin und/oder den fünften Pin jeweils auf einen hochohmigen Eingangsmodus oder einem Ausgangsmodus, in dem an dem jeweiligen Pin ein Bezugspotential bereitgestellt wird, zu schalten.

Bei Ausführungsbeispielen ist der zweite Anschluss des elektromagnetischen Schwingkreises über einen zweiten Kondensator [z.B. C2] mit einem dritten Pin [z.B. Pin C] des Microcontrollers verbunden.

Bei Ausführungsbeispielen ist der zweite Anschluss des elektromagnetischen Schwingkreises über eine Reihenschaltung aus einem ersten Widerstand [z.B. R1] und einem zweiten Kondensator [z.B. C2] mit einem dritten Pin [z.B. Pin C] des Microcontrollers verbunden.

Bei Ausführungsbeispielen ist der Microcontroller konfiguriert, um in einem Sendemodus den dritten Pin [z.B. Pin C] auf einen PWM Ausgangsmodus zu schalten.

Beispielsweise kann der dritte Pin ein PWM Pin sein oder ein Eingangs-/Ausgangs-Pin, der im PWM Ausgangsmodus zwischen einem Versorgungspotential [z.B. Vcc] und Bezugspotential [z.B. Masse] umgeschaltet wird.

Beispielsweise kann der Microcontroller konfiguriert sein, um in dem Sendemodus den zweiten Pin [z.B. Pin B] auf einen hochohmigen Eingangsmodus und/oder einen Ausgangsmodus, in dem an dem jeweiligen Pin ein Bezugspotential bereitgestellt wird, zu schalten.

Bei Ausführungsbeispielen ist der Microcontroller konfiguriert, um in einem normalen Empfangsmodus oder einem Aufwachmodus, in dem überprüft wird, ob ein magnetisches Signal mit einer Aufwachsequenz empfangen wird, den elektromagnetischen Schwingkreis mittels des zweiten Kondensators [z.B. C2], der als das zumindest eine Abstimmelement verwendet wird, durch Schalten des dritten Pins auf einen aus folgenden unterschiedlichen Betriebsmodi abzustimmen:
- einem hochohmigen Eingangsmodus, und
- einem Ausgangsmodus, in dem an dem jeweiligen Pin ein Bezugspotential [z.B. Masse] bereitgestellt wird.

Bei Ausführungsbeispielen ist zumindest ein dritter Kondensator [z.B. ein dritter Kondensator und/oder ein vierter Kondensator; z.B. C3 und/oder C4] als das zumindest eine Abstimmelement in Reihe zwischen dem zweiten Anschluss des elektromagnetischen Schwingkreises und zumindest einem vierten Pin [z.B. einen vierten Pin und/oder einen fünften Pin; z.B. Pin D und/oder Pin E] geschaltet, wobei der Microcontroller konfiguriert ist, um den elektromagnetischen Schwingkreis durch Schalten des zumindest einen vierten Pins [z.B. in dem Aufwachmodus, normalen Empfangsmodus und/oder Sendemodus] jeweils auf einen aus folgenden unterschiedlichen Betriebsmodi abzustimmen:
- einem hochohmigen Eingangsmodus, und
- einem Ausgangsmodus, in dem an dem jeweiligen Pin ein Bezugspotential [z.B. Masse] bereitgestellt wird.

Bei Ausführungsbeispielen ist ein Source-Anschluss des Transistors [z.B. ECM Transistors] direkt oder über einen zweiten Widerstand [z.B. R2] mit einem ersten Pin [z.B. Pin A] des Microcontrollers verbunden.

Bei Ausführungsbeispielen ist der Microcontroller konfiguriert, um in einem normalen Empfangsmodus oder in einem Aufwachmodus, in dem überprüft wird, ob ein magnetisches Signal mit einer Aufwachsequenz empfangen wird, den ersten Pin [z.B. Pin A] auf einen Ausgangsmodus zu schalten, in dem an dem jeweiligen Pin ein Bezugspotential [z.B. Masse] bereitgestellt wird.

Bei Ausführungsbeispielen ist der Microcontroller konfiguriert, um in einem Sendemodus den ersten Pin [z.B. Pin A] auf einen hochohmigen Eingangsmodus zu schalten.

Im Folgenden werden weitere Ausführungsbeispiele der oben beschriebenen Teilnehmer beschrieben.

Bei Ausführungsbeispielen ist der Microcontroller konfiguriert, um nach einer Anregung des elektromagnetischen Schwingkreises zumindest eine Schwingungsperiode des zumindest einen Abstimmelements zu ermitteln, um daraus eine aktuelle Resonanzfrequenz des elektromagnetischen Schwingkreises zu ermitteln.

Bei Ausführungsbeispielen wird der elektromagnetische Schwingkreis durch eine Erzeugung des magnetischen Signals oder eines magnetischen Testsignals angeregt.

Bei Ausführungsbeispielen ist der elektromagnetische Schwingkreis konfiguriert, um den elektromagnetischen Schwingkreis mittels eines durch einen PWM Pin des Microcontrollers bereitgestellten PWM Signals anzuregen.

Bei Ausführungsbeispielen ist der Microcontroller konfiguriert, um in Abhängigkeit von der aktuellen Resonanzfrequenz die Resonanzfrequenz des elektromagnetischen Schwingkreises auf eine Soll-Resonanzfrequenz hin zu verschieben durch Schalten des zumindest einen Pins, der mit dem zumindest einem Abstimmelement verbunden ist, auf einen aus mehreren unterschiedlichen Betriebsmodi.

Bei Ausführungsbeispielen ist der elektromagnetische Schwingkreis über einen externen Komparator mit dem Microcontroller verbunden, so dass ein erster Eingang des Komparators mit dem elektromagnetischen Schwingkreis verbunden ist und ein Ausgang des externen Komparators mit einem ersten Pin des Microcontrollers verbunden ist, wobei der Microcontroller konfiguriert ist, um den ersten Pin in einen Interrupt-Modus zu schalten, wobei der Microcontroller konfiguriert ist, um ansprechend auf einen durch den ersten Pin erzeugten Interrupt von einem Energiesparmodus in einen normalen Empfangsmodus oder Aufwachmodus [z.B. Peeking-Modus], in dem überprüft wird, ob ein magnetisches Signal mit einer Aufwachsequenz empfangen wird, zu wechseln.

Bei Ausführungsbeispielen ist der Microcontroller konfiguriert, um den ersten Pin in einen Capture -Modus [z.B. Aufnehm-Modus; z.B. eines Capture/Compare-Moduls] zu schalten, in dem der Interrupt erzeugt werden kann.

Bei Ausführungsbeispielen ist der Ausgang des Komparators ferner mit einem zweiten Pin [z.B. Pin B] des Microcontrollers verbunden, wobei der Microcontroller konfiguriert ist, um den zweiten Pin [z.B. in dem normalen Empfangsmodus oder dem Aufwachmodus] in einen in einen Capture-Modus [z..B. Aufnehm-Modus; z.B. eines Capture/Compare-Moduls] zu schalten zu schalten.

Bei Ausführungsbeispielen ist der elektromagnetische Schwingkreis in Reihe zwischen einem ersten Eingangsanschluss und einem zweiten Eingangsanschluss des Komparators geschaltet, wobei der elektromagnetische Schwingkreis zwei in Reihe geschaltete Kondensatoren [z.B. C1 und C2] aufweist, wobei ein Anschluss zwischen den zwei in Reihe geschalteten Kondensatoren [z.B. C1 und C2] mit einem Bezugspotentialanschluss verbunden ist.

Bei Ausführungsbeispielen ist zumindest ein vierter Kondensator [z.B. ein vierter Kondensator und/oder ein fünfter Kondensator; z.B. C4 und/oder C5] als das zumindest eine Abstimmelement in Reihe zwischen dem elektromagnetischen Schwingkreis und zumindest einem vierten Pin [z.B. einen vierten Pin und/oder einen fünften Pin; z.B. Pin D und/oder Pin E] geschaltet, wobei der Microcontroller konfiguriert ist, um den elektromagnetischen Schwingkreis [z.B. in dem Aufwachmodus, dem normalen Empfangsmodus und/oder dem Sendemodus] durch Schalten des zumindest einen vierten Pins jeweils auf einen aus folgenden unterschiedlichen Betriebsmodi abzustimmen:
- einem hochohmigen Eingangsmodus, und
- einem Ausgangsmodus, in dem an dem jeweiligen Pin ein Bezugspotential [z.B. Masse] bereitgestellt wird.

Bei Ausführungsbeispielen ist der elektromagnetische Schwingkreis über eine Parallelschaltung aus einem ersten Widerstand und einem dritten Kondensator mit einem dritten Pin [z.B. Pin C] des Microcontroller verbunden.

Bei Ausführungsbeispielen ist der Microcontroller konfiguriert, um in einem Energiesparmodus den dritten Pin [z.B. Pin C] auf einen Ausgangsmodus, in dem an dem jeweiligen Pin ein Versorgungspotential [z.B. Vcc] oder Bezugspotential [z.B. Masse] bereitgestellt wird, zu schalten.

Bei Ausführungsbeispielen ist der Microcontroller konfiguriert ist, um in einem normalen Empfangsmodus und/oder einem Aufwachmodus, in dem überprüft wird, ob ein magnetisches Signal mit einer Aufwachsequenz empfangen wird, den elektromagnetischen Schwingkreis durch Schalten des dritten Pins auf einen aus folgenden unterschiedlichen Betriebsmodi abzustimmen:
- einem hochohmigen Eingangsmodus, und
- einem Ausgangsmodus, in dem an dem jeweiligen Pin ein Bezugspotential [z.B. Masse] bereitgestellt wird.

Bei Ausführungsbeispielen ist der Microcontroller konfiguriert, um in einem Sendemodus den dritten Pin [z.B. Pin C] auf einen PWM Ausgangsmodus zu schalten.

Bei Ausführungsbeispielen ist der Microcontroller konfiguriert, um [z.B. in einem Sendemodus] durch Entladen eines sechsten Kondensators [z.B. C6] einen magnetischen Impuls mit dem elektromagnetischen Schwingkreis zu erzeugen.

Bei Ausführungsbeispielen ist der sechste Kondensator [z.B. C6] über einen steuerbaren Schalter mit dem elektromagnetischen Schwingkreis verbunden, wobei ein sechster Pin [z.B. Pin F] mit einem Steueranschluss des steuerbaren Schalters verbunden ist, wobei der Microcontroller konfiguriert ist, um den sechsten Kondensator durch Schalten des sechsten Pins [z.B. Pin F] von einem Betriebsmodi auf einen anderen Betriebsmodi zu entladen.

Bei Ausführungsbeispielen ist der Microcontroller konfiguriert, um den sechsten Kondensator durch Schalten eines siebten Pins [z.B. Pin G], der mit dem sechsten Kondensator verbunden ist, von einem Betriebsmodi auf einen anderen Betriebsmodi aufzuladen.

Bei Ausführungsbeispielen ist der steuerbare Schalter ein Feldeffekttransistor [z.B. MOSFET, p-Kanal MOSFET], wobei der sechste Pin [z.B. Pin F] des Microcontroller mit einem Gate-Anschluss des Feldeffekttransistors verbunden ist, wobei der siebte Pin [z.B. Pin G] des Microcontrollers über einen dritten Widerstand [z.B. R3] mit einem Drain-Anschluss des Feldeffekttransistors verbunden ist, wobei der Drain-Anschluss des Feldeffekttransistors mit dem sechsten Kondensator verbunden ist, wobei ein Source-Anschluss des Feldeffekttransistors mit dem elektromagnetischen Schwingkreis verbunden ist.

Bei Ausführungsbeispielen ist der Microcontroller konfiguriert, um den sechsten Kondensator durch Schalten des sechsten Pins [z.B. Pin F] von einem Pull-up-Eingangsmodus in einen Ausgangsmodus, in dem an dem jeweiligen Pin ein Bezugspotential [z.B. Masse] bereitgestellt wird, zu entladen.

Bei Ausführungsbeispielen ist der Microcontroller konfiguriert, um den sechsten Kondensator durch Schalten des siebten Pins [z.B. Pin G], der mit dem sechsten Kondensator verbunden ist, auf einen Ausgangsmodus, in dem an dem jeweiligen Pin ein Versorgungspotential [z.B. Vcc] bereitgestellt wird, aufzuladen.

Weitere Ausführungsbeispiele schaffen ein Verfahren zum Abstimmen eines elektromagnetischen Schwingkreises einer Konfigurationsschnittstelle eines Teilnehmers eines Kommunikationssystems, wobei der elektromagnetischen Schwingkreis konfiguriert ist, um ein magnetisches Signal zu detektieren und/oder zu erzeugen, das zu und/oder von dem Teilnehmer zu übertragene Daten aufweist, wobei der elektromagnetische Schwingkreis mit einem Microcontroller des Teilnehmers verbunden ist, wobei der Microcontroller mit zumindest einem Abstimmelement zur Abstimmung des elektromagnetischen Schwingkreises verbunden ist. Das Verfahren umfasst einen Schritt des Abstimmens des elektromagnetischen Schwingkreises durch Schalten zumindest eines Pins des Microcontrollers, mit dem das zumindest eine Abstimmelement verbunden ist, auf einen aus mehreren unterschiedlichen Betriebsmodi zu schalten.

Weitere Ausführungsbeispiele schaffen ein Verfahren zum Betrieb eines elektromagnetischen Schwingkreises einer Konfigurationsschnittstelle eines Teilnehmers eines Kommunikationssystems, wobei der elektromagnetischen Schwingkreis konfiguriert ist, um ein magnetisches Signal zu detektieren und/oder zu erzeugen, das zu und/oder von dem Teilnehmer zu übertragene Daten aufweist, wobei der elektromagnetische Schwingkreis mit einem Microcontroller des Teilnehmers verbunden ist, wobei der elektromagnetische Schwingkreis in Reihe zwischen einem ersten Pin und einem zweiten Pin des Microcontrollers geschaltet ist, wobei der elektromagnetische Schwingkreis ferner mit einem dritten Pin des Microcontrollers verbunden ist, wobei der elektromagnetische Schwingkreis zwei in Reihe geschaltete Kondensatoren aufweist, wobei ein Anschluss zwischen den zwei in Reihe geschalteten Kondensatoren mit einem Bezugspotentialanschluss verbunden ist. Das Verfahren umfasst einen Schritt des Aufladens der zwei in Reihe geschalteten Kondensatoren vor dem Erzeugen eines magnetischen Signals mit dem elektromagnetischen Schwingkreis durch
- Schalten des dritten Pins auf einen Ausgangsmodus, in dem an dem jeweiligen Pin ein Versorgungspotential bereitgestellt wird, für eine definierte Ladezeit TL, und
- Schalten des dritten Pins, nach der definierten Ladezeit TL, auf einen hochohmigen Eingangsmodus.

Weitere Ausführungsbeispiele schaffen ein Verfahren zum Betrieb eines elektromagnetischen Schwingkreises einer Konfigurationsschnittstelle eines Teilnehmers eines Kommunikationssystems, wobei der elektromagnetischen Schwingkreis konfiguriert ist, um ein magnetisches Signal zu detektieren und/oder zu erzeugen, das zu und/oder von dem Teilnehmer zu übertragene Daten aufweist, wobei der elektromagnetische Schwingkreis mit einem Microcontroller des Teilnehmers verbunden ist, wobei ein erster Anschluss des elektromagnetischen Schwingkreises auf ein Bezugspotential geschaltet ist, wobei ein zweiter Anschluss des elektromagnetischen Schwingkreises mit einem Gate eines Transistors verbunden ist, der mit dem Microcontroller verbunden ist, wobei ein Drain-Anschluss des Transistors direkt mit einem zweiten Pin des Microcontrollers verbunden ist. Das Verfahren umfasst einen Schritt des Schaltens des zweiten Pins des Microcontrollers nur in Wachphasen eines Aufwachmodus, in dem überprüft wird, ob ein magnetisches Signal mit einer Aufwachsequenz empfangen wird, auf einen Pull-up-Eingangsmodus.

Ausführungsbeispiele befassen sich mit einem System zur preisgünstigen und allgemein verfügbaren Methode, Geräte, vor allem Sensorknoten, zu konfigurieren.

Ausführungsbeispiele der vorliegenden Erfindung werden bezugnehmend auf die beiliegenden Figuren näher beschrieben. Es zeigen:
- Fig. 1: ein Flussdiagramm eines Verfahrens zum Übertragen von Daten zwischen einem Gerät und einem anderen Gerät, gemäß einem Ausführungsbeispiel der vorliegenden Erfindung;
- Fig. 2a: ein schematisches Blockschaltbild eines Systems mit einem Gerät und einem anderen Gerät, gemäß einem Ausführungsbeispiel der vorliegenden Erfindung;
- Fig. 2b: ein schematisches Blockschaltbild eines Systems mit einem Gerät und einem anderen Gerät, gemäß einem weiteren Ausführungsbeispiel der vorliegenden Erfindung;
- Fig. 2c: ein schematisches Blockschaltbild eines Systems mit einem Gerät und einem anderen Gerät, gemäß einem weiteren Ausführungsbeispiel der vorliegenden Erfindung;
- Fig. 3: ein schematisches Blockschaltbild eines beispielhaften elektromagnetischen Schwingkreises mit exemplarisch gewählten Werten mit der Resonanzfrequenz f₀ sowie in Diagrammen einen Frequenzgang und einen Phasenverlauf des beispielhaften elektromagnetischen Schwingkreises,
- Fig. 4: in einem Diagramm einen Frequenzgang eines MSK modulierten Signals und zweier GMSK modulierter Signale mit unterschiedlichen Zeit-Bandbreiten B_{T} (B_{T} = 0,5 und B_{T} = 0,3),
- Fig. 5a: in Diagrammen einen Vergleich zwischen Ausschnitten des am Komparatoreingang anliegenden Eingangssignals der Frequenz f₀ (d.h. bei der Übertragung eines Bits mit dem Wert "0") sowie eines entsprechenden am Komparatorausgang anliegenden Ausgangssignals,
- Fig. 5b: in Diagrammen einen Vergleich zwischen Ausschnitten des am Komparatoreingang anliegenden Eingangssignals der Frequenz f₁ (d.h. bei der Übertragung eines Bits mit dem Wert "1") sowie eines entsprechenden am Komparatorausgang anliegenden Ausgangssignals,
- Fig. 6: eine schematische Ansicht einer Aufwachsequenz, die einer Datenübertragung vorangeht, gemäß einem Ausführungsbeispiel der vorliegenden Erfindung,
- Fig. 7a: eine schematische Ansicht einer Bitfolge der zu dem anderen Gerät zu übertragenen Daten, wobei der Bitfolge mehrere durch ein zufälliges Signal oder Rauschen verursachte Bits vorangehen,
- Fig. 7b: eine schematische Ansicht einer Bitfolge der zu dem anderen Gerät zu übertragenen Daten, wobei der Bitfolge eine Präambel-Bitfolge vorangestellt ist, und wobei der Präambel-Bitfolge mehrere durch ein zufälliges Signal oder Rauschen verursachte Bits vorangehen,
- Fig. 8: ein schematisches Blockschaltbild des anderen Geräts, gemäß einem Ausführungsbeispiel der vorliegenden Erfindung,
- Fig. 9: ein schematisches Blockschaltbild des anderen Geräts, gemäß einem Ausführungsbeispiel der vorliegenden Erfindung,
- Fig. 10: ein schematisches Blockschaltbild des anderen Geräts, gemäß einem weiteren Ausführungsbeispiel der vorliegenden Erfindung,
- Fig. 11: ein schematisches Blockschaltbild des anderen Geräts, gemäß einem weiteren Ausführungsbeispiel der vorliegenden Erfindung,
- Fig. 12: in einem Diagramm einen Verlauf der Spannung am zweiten Pin des Microcontrollers bei einer Amplitude von mehr als 0,6 V, aufgetragen über die Zeit,
- Fig. 13: ein schematisches Blockschaltbild des anderen Geräts, gemäß einem weiteren Ausführungsbeispiel der vorliegenden Erfindung,
- Fig. 14: in einem Diagramm einen Verlauf der Spannung am zweiten Pin 220_2 des Microcontrollers bei einer Amplitude von mehr als 0,6 V, aufgetragen über die Zeit,
- Fig. 15: ein schematisches Blockschaltbild des anderen Geräts, gemäß einem weiteren Ausführungsbeispiel der vorliegenden Erfindung,
- Fig. 16: ein schematisches Blockschaltbild des anderen Geräts, gemäß einem weiteren Ausführungsbeispiel der vorliegenden Erfindung,
- Fig. 17: ein schematisches Blockschaltbild des anderen Geräts, gemäß einem weiteren Ausführungsbeispiel der vorliegenden Erfindung,
- Fig. 18: ein Flussdiagramm eines Verfahrens zum Abstimmen eines elektromagnetischen Schwingkreises einer Konfigurationsschnittstelle eines Teilnehmers eines Kommunikationssystems, gemäß einem Ausführungsbeispiel der vorliegenden Erfindung,
- Fig. 19: ein Flussdiagramm eines Verfahrens zum Betrieb eines elektromagnetischen Schwingkreises einer Konfigurationsschnittstelle eines Teilnehmers eines Kommunikationssystems, gemäß einem Ausführungsbeispiel der vorliegenden Erfindung, und
- Fig. 20: ein Flussdiagramm eines Verfahrens zum Betrieb eines elektromagnetischen Schwingkreises einer Konfigurationsschnittstelle eines Teilnehmers eines Kommunikationssystems, gemäß einem Ausführungsbeispiel der vorliegenden Erfindung.

In der nachfolgenden Beschreibung der Ausführungsbeispiele der vorliegenden Erfindung werden in den Figuren gleiche oder gleichwirkende Elemente mit dem gleichen Bezugszeichen versehen, so dass deren Beschreibung untereinander austauschbar ist.

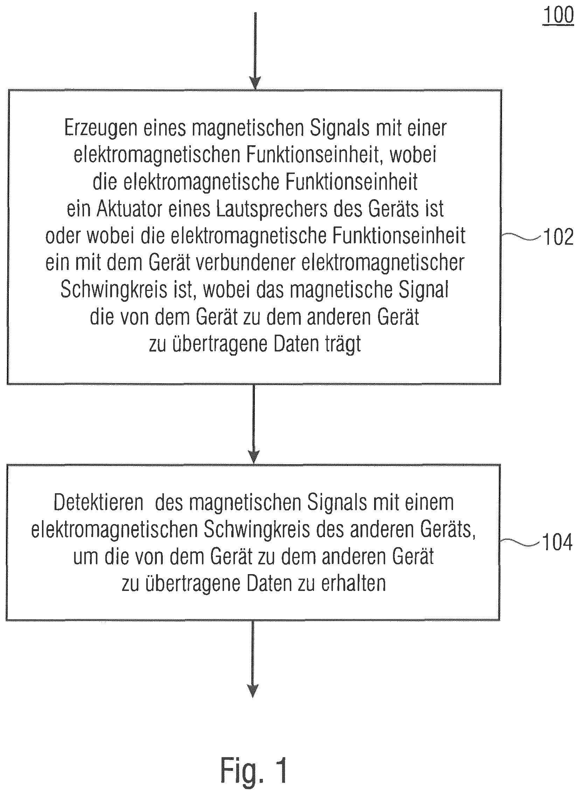

Fig. 1 zeigt ein Flussdiagramm eines Verfahrens 100 zum Übertragen von Daten zwischen einem Gerät und einem anderen Gerät, gemäß einem Ausführungsbeispiel der vorliegenden Erfindung. Das Verfahren 100 umfasst einen Schritt 102 des Erzeugen eines magnetischen Signals (z.B. magnetischen Feldes) mit einer elektromagnetischen Funktionseinheit, wobei die elektromagnetische Funktionseinheit ein Aktuator eines Lautsprechers des Geräts ist oder wobei die elektromagnetische Funktionseinheit ein mit dem Gerät verbundener elektromagnetischer Schwingkreis (z.B. LC Schwingkreis) ist, wobei das magnetische Signal die von dem Gerät zu dem anderen Gerät zu übertragene Daten trägt. Ferner umfasst das Verfahren 100 einen Schritt 104 des Detektierens (z.B. Empfangens) des magnetischen Signals mit einem elektromagnetischen Schwingkreis (z.B. LC Schwingkreis) des anderen Geräts, um die von dem Gerät zu dem anderen Gerät zu übertragene Daten zu erhalten.

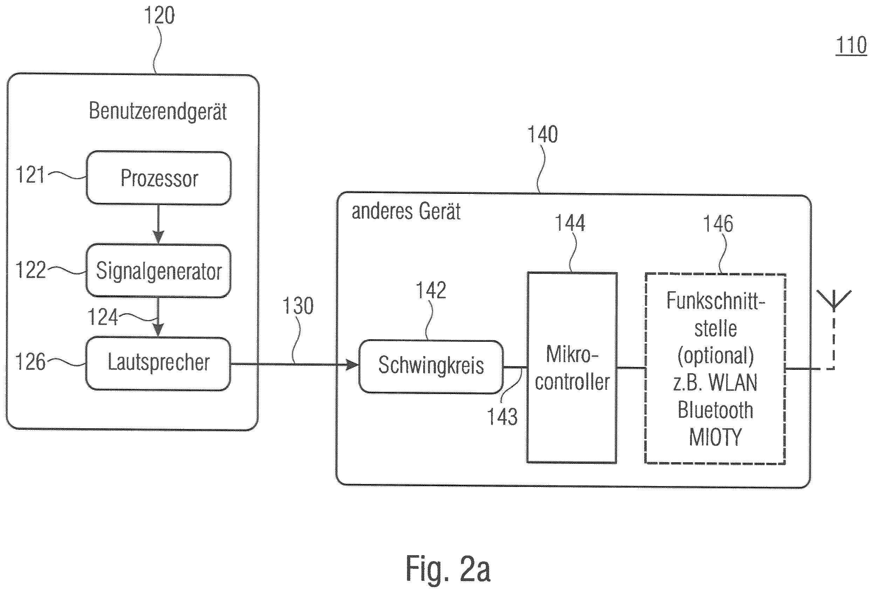

Im Folgenden werden Ausführungsbeispiele des in Fig. 1 gezeigten Verfahrens 100 zum Übertragen von Daten zwischen einem Gerät und einem anderen Gerät anhand der Fig. 2a bis 2c näher erläutert.

Fig. 2a zeigt ein schematisches Blockschaltbild eines Systems 110 mit einem Benutzerendgerät 120 (z.B. Mobiltelefon, Tablet, Notebook) und einem anderen Gerät 140, gemäß einem Ausführungsbeispiel der vorliegenden Erfindung.

Das Benutzerendgerät 120 kann einen Signalgenerator 122 (z.B. einen Audiosignalgenerator, wie z.B. einen Verstärker) und einen Lautsprecher 126 mit einem elektromagnetischen Aktuator (z.B. einer Schwingspule) aufweisen. Das Benutzerendgerät 120 (oder z.B. ein Prozessor 121 des Benutzerendgeräts 120) kann ausgebildet sein, um den Signalgenerator 122 anzusteuern, um ein Signal 124 zur Ansteuerung des elektromagnetischen Aktuators des Lautsprechers 126 zu generieren, und um den elektromagnetischen Aktuator des Lautsprechers 126 mit dem generierten Signal 124 anzusteuern, um durch den elektromagnetischen Aktuator des Lautsprechers 126 ein (parasitäres) magnetisches Signal 130 (z.B. ein (parasitäres) magnetisches Feld) zu erzeugen, das die von dem Gerät 120 zu dem anderen Gerät 140 zu übertragenen Daten trägt.

Das andere Gerät 140 kann einen Microcontroller 144 und einen mit dem Microcontroller 144 verbundenen elektromagnetischen Schwingkreis 142 aufweisen. Der elektromagnetische Schwingkreis 142 kann ausgebildet sein, um das magnetische Signal 130 (z.B. magnetische Feld) zu detektieren, das die von dem Gerät 120 zu dem anderen Gerät 140 zu übertragenen Daten trägt. Der Microcontroller 144 kann ausgebildet sein, um ein von dem elektromagnetischen Schwingkreis 142 bereitgestelltes Signal 143 (z.B. Empfangssignal), das von dem detektierten magnetischen Signal abhängig ist, auszuwerten, um die von dem Gerät 120 zu dem anderen Gerät 140 zu übertragene Daten zu erhalten, die das magnetische Signal 130 trägt.

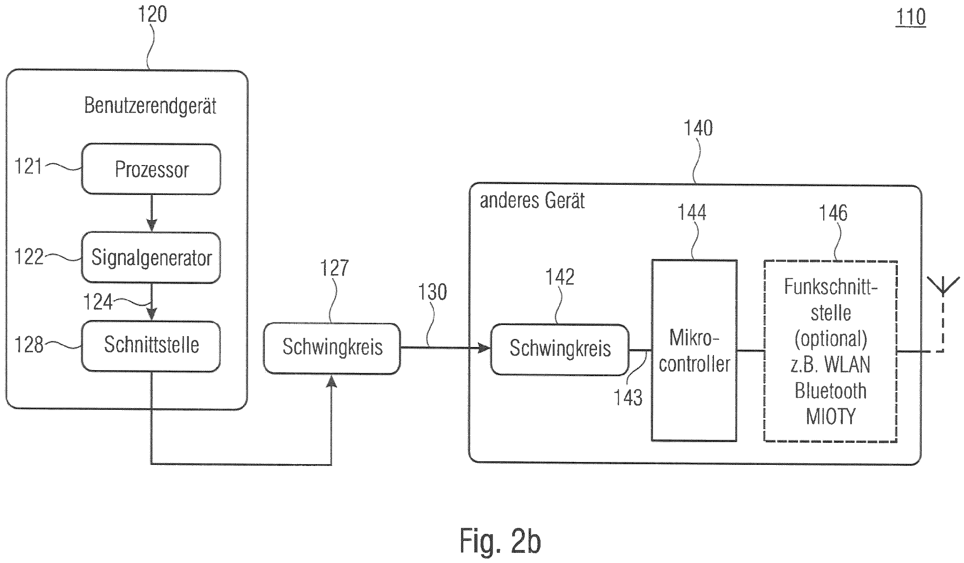

Fig. 2b zeigt ein schematisches Blockschaltbild eines Systems 110 mit einem Benutzerendgerät 120 (z.B. Mobiltelefon, Tablet, Notebook) und einem anderen Gerät 140, gemäß einem weiteren Ausführungsbeispiel der vorliegenden Erfindung.

Verglichen mit dem in Fig. 2a gezeigten Ausführungsbeispiel wird bei dem in Fig. 2b gezeigtem Ausführungsbeispiel das magnetische Signal 130 (z.B. magnetische Feld) nicht mit einem Lautsprecher 126 des Benutzerendgeräts 120 erzeugt, sondern mit einem mit dem Benutzerendgerät 120 verbundenen elektromagnetischen Schwingkreis 127 (z.B. LC-Schwingkreis).

Im Detail kann das in Fig. 2b gezeigte Benutzerendgerät einen Signalgenerator 122 und eine Schnittstelle 128 aufweisen, wobei der elektromagnetische Schwingkreis 127 über die Schnittstelle 128 mit dem Benutzerendgerät 120 verbunden ist.

Das Benutzerendgerät 120 (oder z.B. ein Prozessor 121 des Benutzerendgeräts 120) kann ausgebildet sein, um den Signalgenerator 122 anzusteuern ein Signal 124 zum Ansteuern des elektromagnetischen Schwingkreises 127 zu generieren und den elektromagnetischen Schwingkreises 127 mit dem generierten Signal 124 anzusteuern, um durch den elektromagnetischen Schwingkreis 127 ein magnetisches Signal (z.B. magnetisches Feld) 130 zu erzeugen, das von dem Benutzerendgerät 120 zu dem anderen Gerät 140 zu übertragene erste Daten trägt.

Der in den Fig. 2a und 2b gezeigte Signalgenerator 122 kann ein Audiosignalgenerator sein. Herkömmlicherweise ist ein solcher Audiosignalgenerator 122 (z.B. ein Verstärker) ausgebildet, um ein Audiosignal 124 zur Ansteuerung eines Lautsprechers 126 des Benutzerendgeräts 120 oder eines mit dem Benutzerendgerät 120 verbundenen Audiowiedergabegeräts (z.B. Kopfhörers) zu generieren.

Bei dem in Fig. 2a gezeigtem Ausführungsbeispiel wird der Lautsprecher 126 des Benutzerendgeräts 120 mit dem vom Audiosignalgenerators 122 generierten Signal 124 angesteuert wird, um das magnetische Signal 130 zu generieren, das die ersten Daten trägt.

Bei dem in Fig. 2b gezeigtem Ausführungsbeispiel wird hingegen der mit dem Benutzerendgerät 120 verbundene elektromagnetische Schwingkreis 127 mit dem vom Audiosignalgenerators 122 generierten Signal 124 angesteuert, um das magnetische Signal 130 zu generieren, das die ersten Daten trägt.

Hierbei kann die Schnittstelle 128, über die der elektromagnetische Schwingkreis 127 mit dem Benutzerendgerät 120 verbunden ist, eine Audioschnittstelle sein. Beispielsweise kann die Audioschnittstelle eine kabelgebundene Audioschnittstelle sein, wie z.B. eine Klinkenbuchse, ein USB-C^{®}-Audio Anschluss oder ein Lightning^{®}-Audio Anschluss.

Bei dem in Fig. 2b gezeigtem Ausführungsbeispiel weist das Benutzerendgerät 120 den Signalgenerator 122 auf. Alternativ kann der Signalgenerator 122 auch extern zu dem Benutzerendgerät 120 ausgeführt sein. Beispielsweise kann der Signalgenerator 122 in einem mit dem Benutzerendgerät 120 verbundenen drahtlosen Audioadapter implementiert sein. In diesem Fall kann das Benutzerendgerät über eine drahtlose Schnittstelle (als Schnittstelle 128), wie z.B. Bluetooth, WLAN oder Certified Wireless USB, mit dem drahtlosen Audioadapter verbunden sein, wobei der elektromagnetische Schwingkreis 127 über eine Audioschnittstelle (z.B. eine Klinkenbuchse, ein USB-CO-Audio Anschluss oder ein Lightning^{®}-Audio Anschluss) mit dem im drahtlosen Audioadapter implementierten Signalgenerator 122 verbunden ist.

Im Folgenden werden weitere Ausführungsbeispiele beschrieben, die sowohl auf das in Fig. 2a gezeigte Ausführungsbeispiel als auch auf das in Fig. 2b gezeigte Ausführungsbeispiel anwendbar sind.

Bei Ausführungsbeispielen kann der mit dem Benutzerendgerät 120 verbundene elektromagnetische Schwingkreis 127 eine Spule und ein Kondensator aufweisen. Die Spule kann beispielsweise eine Ferritspule sein mit einer Induktivität von 20 µH bis 20.000 µH und/oder einem Volumen von 0,5 cm³ oder weniger.

Bei Ausführungsbeispielen kann der elektromagnetische Schwingkreis 142 des anderen Geräts 140 eine Spule und ein Kondensator aufweisen. Die Spule kann beispielsweise eine Ferritspule sein mit einer Induktivität von 20 µH bis 20.000 µH und/oder einem Volumen von 0,5 cm³ oder weniger.

Bei Ausführungsbeispielen kann das generierte Signal 124 im Frequenzbereich zwischen 10 Hz und 22 KHz liegen. Alternativ kann das generierte Signal 124 im Ultraschallfrequenzbereich oberhalb von 16 kHz liegen, wobei eine obere Grenzfrequenz des generierten Signals 124 von dem Signalgenerator begrenzt sein kann. Beispielsweise kann die obere Grenzfrequenz im Falle eines Audiosignalgenerators bei 20 KHz bis 22 KHz liegen.

Bei Ausführungsbeispielen können die Daten dem generierten Signal 124 aufmoduliert sein, beispielsweise durch FSK (FSK = frequency shift keying, d.t. Frequenzumtastung), MSK (MSK = minimum shift keying) oder GMSK (GMSK = gaussian minimum shift keying). Natürlich kann auch eine andere Modulationsart zum Einsatz kommen, wie z.B. ASK (ASK = amplitude shift keying, dt. Amplitudenumtastung), PSK (PSK = phase shift keying, dt. PHasenumtastung) oder OOK (OOK = on-off keying, dt. eine Art der Amplitudenumtastung, bei der der Träger an- und ausgeschaltet wird).

Bei Ausführungsbeispielen kann ein Verhältnis zwischen Trägerfrequenz und Modulationsbandbreite des generierten Signals kleiner sein als 25% (oder beispielsweise kleiner als 20% oder kleiner als 15%).

Bei Ausführungsbeispielen kann das andere Gerät 140 ein Teilnehmer eines Kommunikationssystems sein, wie dies in den Fig. 2a und 2b angedeutet. In diesem Fall kann das andere Gerät 140 eine Funkschnittstelle 146 zur Kommunikation entsprechend eines Funkstandards, wie z.B. WLAN, Bluetooth, MIOTY [9] oder IEEE 802.15.4w, aufweisen. Beispielsweise kann das andere Gerät 140 ein IoT-Knoten (loT = internet of things, dt. Internet der Dinge) (z.B. ein Sensorknoten oder Aktorknoten) oder eine WLAN Kamera sein.

Bei Ausführungsbeispielen können die Daten, die das magnetische Signal 130 trägt, Konfigurationsdaten sein. Der Microcontroller 144 kann dabei ausgebildet sein, um das andere Gerät 140 basierend auf den Konfigurationsdaten zu konfigurieren.

Beispielsweise kann der Teilnehmer basierend auf den Daten, die das magnetische Signal 130 trägt, konfiguriert werden, wie z.B. in das jeweilige Kommunikationssystem eingebunden werden. Zum Beispiel können die Konfigurationsdaten eine Information zur Einbindung des benutzerkonfigurierbaren Geräts 140 in ein drahtloses Netzwerk (z.B. Sensornetzwerk oder WLAN) aufweisen, wie z.B. ein Netzwerkname und Netzwerkschlüssel. Natürlich können dem benutzerkonfigurierbaren Gerät 140 durch die Konfigurationsdaten auch andere Parameter zugewiesen werden, wie z.B. einen zu verwenden Frequenzkanal, zu verwendende Zeitschlitze, oder ein zu verwendendes Sprungmuster (engl. hopping pattern).

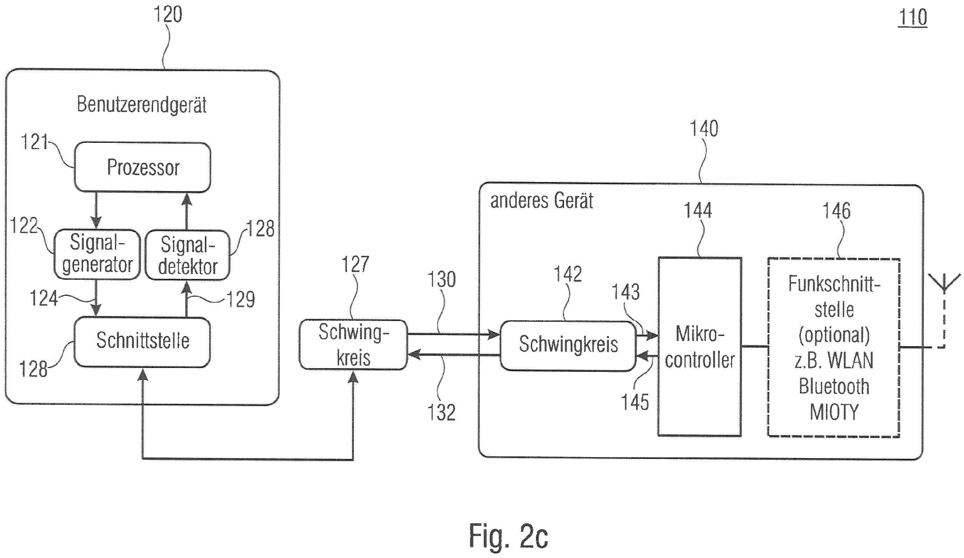

Die in Fig. 2b gezeigte Anordnung kann auch zur bidirektionalen Übertragung von Daten zwischen dem Benutzerendgerät 120 und dem anderen Gerät 140 genutzt werden, wie dies nachfolgend anhand von dem in Fig. 2c gezeigtem Ausführungsbeispiel erläutert wird.

Fig. 2c zeigt ein schematisches Blockschaltbild eines Systems 110 mit einem Benutzerendgerät 120 (z.B. Mobiltelefon, Tablet, Notebook) und einem anderen Gerät 140, gemäß einem weiteren Ausführungsbeispiel der vorliegenden Erfindung.

Wie in Fig. 2c zu erkennen ist, kann von dem Benutzerendgerät 120 zu dem anderen Gerät 140 ein erstes magnetisches Signal 130 übertragen werden, wie dies in Bezug auf die Fig. 2b bereits ausführlich erläutert wurde, während von dem anderen Gerät 140 zu dem Benutzerendgerät 120 ein zweites magnetisches Signal 132 übertragen werden kann.

Im Detail kann das andere Gerät 140 konfiguriert sein, um mit dem elektromagnetischen Schwingkreis 142 ein zweites magnetisches Signal 132 zu erzeugen, das von dem anderen Gerät 140 zu dem Benutzerendgerät 120 zu übertragenen Daten trägt.

Beispielsweise kann der Microcontroller 144 konfiguriert sein, um ein moduliertes Sendesignal (z.B. Rechtecksignal) 145 zu generieren bzw. erzeugen und um den elektromagnetischen Schwingkreis 142 mit dem modulierten Sendesignal (z.B. Rechtecksignal) 145 anzusteuern, um das zweite magnetische Signal 132 zu erzeugen, das die von dem anderen Gerät 140 zu dem Benutzerendgerät 120 zu übertragenen Daten trägt.

Der elektromagnetische Schwingkreis 127 des Benutzerendgeräts 120 kann ausgebildet sein, um das zweite magnetische Signal 130 (z.B. magnetische Feld) zu detektieren, das die von dem anderen Gerät 140 zu dem Benutzerendgerät 140 zu übertragenen Daten trägt. Das Benutzerendgerät 120 kann dabei ausgebildet sein, um ein von dem elektromagnetischen Schwingkreis 127 bereitgestelltes Signal 129, das von dem detektierten zweiten magnetischen Signal abhängig ist, auszuwerten (z.B. mittels eines Signaldetektors 128 und des Prozessors 121 des Benutzerendgeräts 120), um die von dem anderen Gerät 120 zu dem Benutzerendgerät 120 zu übertragene Daten zu erhalten, die das magnetische Signal 130 trägt.

Bei Ausführungsbeispielen kann anstelle des Benutzerendgeräts 120 auch ein anderes Gerät, wie z.B. ein Computer (Steuerungscomputer), zum Einsatz kommen, um das andere Gerät 140 zu konfigurieren, z.B. bei der Herstellung, Ausbringung, Installation oder Wartung des anderen Geräts 140.

Alternativ kann auch ein (z.B. batteriebetriebener) Controller zum Einsatz kommen, der den Signalgenerator 122 den elektromagnetischen Schwingkreis 127, und, im Falle von bidirektionaler Kommunikation, auch den Signaldetektor 128 umfasst.

### 1. Effiziente Kommunikation zur Konfiguration von Sensorknoten

Durch die besonderen Begebenheiten der in den Fig. 2a bis 2c beschriebenen Hardware, die zur Übertragung von Daten verwendet wird, sind übliche aus der Nachrichtentechnik bekannte Datenübertragungsverfahren nur begrenzt anwendbar. Teilweise würden diese aus der Nachrichtentechnik bekannten Datenübertragungsverfahren den zulässigen Stromverbrauch oder den maximal möglichen Preis übersteigen.

An diesem Punkt setzen die im Folgenden beschriebenen Ausführungsbeispiele an. Es wird ein Datenübertragungsverfahren beschrieben, welches einen geringeren Stromverbrauch hat und/oder Hardwarekosten auf Seite des anderen Geräts einspart.

Die Datenübertragung kann dabei mit der gleichen Wellenform unidirektional von einem Lautsprecher 126 eines Benutzerendgeräts 120 oder von einem mit dem Benutzerendgerät verbundenen elektromagnetischen Schwingkreis 127 zu einem anderen Gerät 140 erfolgen, als auch bidirektional zwischen einem mit dem Benutzerendgerät oder einem Computer verbundenen elektromagnetischen Schwingkreis 127, oder einem Controller, der den elektromagnetischen Schwingkreis aufweist, und dem anderen Gerät 140. Die Datenübertragung kann dabei von dem Gerät 120 (z.B. Benutzerendgerät, Steuerungscomputer oder Controller) initiiert werden, wobei über das Gerät 120 auf dem anderen Gerät 140 Parameter gesetzt und auch von dem anderen Gerät 140 Parameter gelesen werden können.

### 1.1 Verwendung des elektromagnetischen Schwingkreises als Empfangs-(Matched-)Filter

Herkömmlicherweise wird bei Empfang einer Nachricht im Empfänger das Empfangssignal mit einem Optimalfilter (engl. matched filter) gefiltert, um das Signal- zu Rausch-Verhältnis der Empfangssymbole zu optimieren [4].

Ein solches Optimalfilter wird entweder in analoger Hardware ausgeführt oder bei digitaler Signalverarbeitung als digitaler Filter angewandt.

Im Falle des anhand der Fig. 2a bis 2c beschriebenen Verfahrens zur Übertragung von Daten, z.B. zur Konfiguration eines Sensorknotens, ist eine zusätzliche Hardware zur Ausführung als analoger Filter jedoch typischerweise zu teuer und eine digitale Verarbeitung häufig aufgrund von begrenzter Rechenleistung ebenfalls nicht möglich.

Der vorliegenden Erfindung liegt daher die Idee zugrunde, den elektromagnetischen Schwingkreis 142 oder 127 (z.B. des anderen Geräts 140 oder des Geräts 120) als Empfangsfilter (z.B. Optimalfilter) für das (z.B. FSK, MSK oder GMSK modulierte) magnetische Signal 130 oder 132 zu verwenden, wie dies im Folgenden ausgeführt wird.

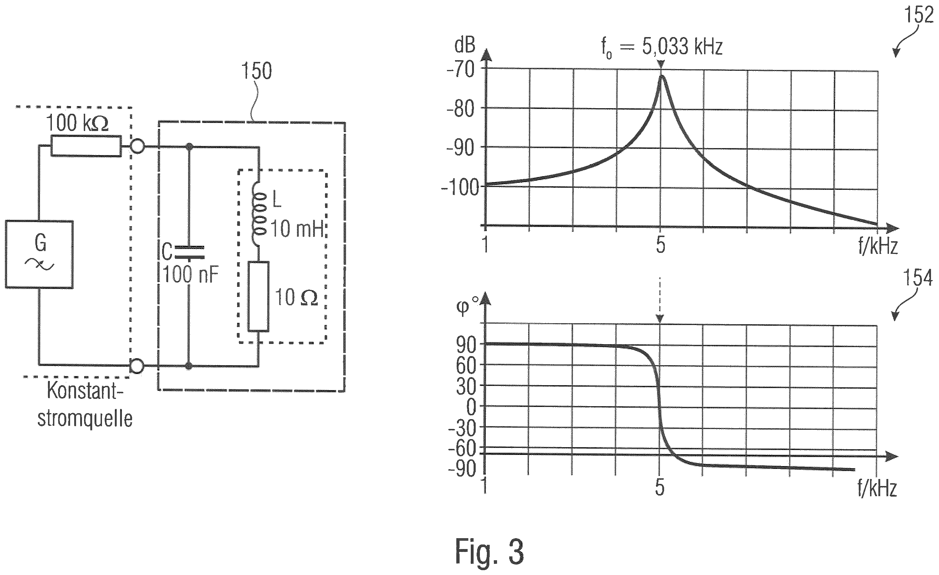

Fig. 3 zeigt ein schematisches Blockschaltbild eines beispielhaften elektromagnetischen Schwingkreises 150 mit exemplarisch gewählten Werten mit der Resonanzfrequenz f₀ sowie in Diagrammen einen Frequenzgang 152 und einen Phasenverlauf 154 des beispielhaften elektromagnetischen Schwingkreises 150. Dabei Beschreiben die Ordinaten die Dämpfung in dB bzw. die Phase in Grad, und die Abszissen jeweils die Frequenz in kHz.

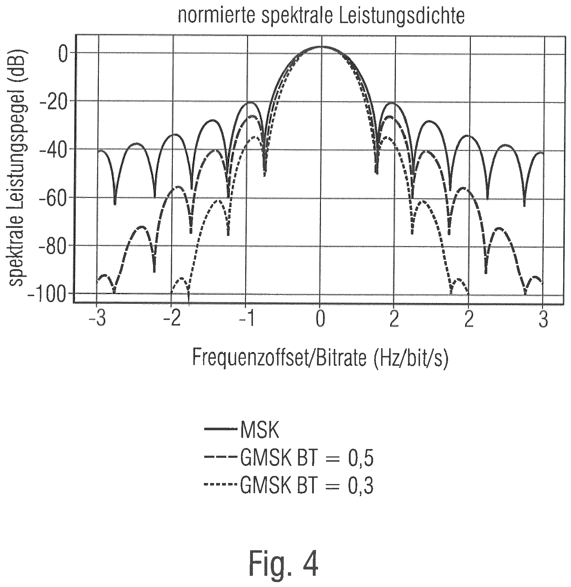

Fig. 4 zeigt in einem Diagramm einen Frequenzgang eines MSK modulierten Signals und zweier GMSK modulierter Signale mit unterschiedlichen Zeit-Bandbreiten B_{T} (B_{T} = 0,5 und B_{T} = 0,3). Dabei beschreibt die Ordinate die spektrale Leistungsdichte in dB und die Abszisse den Frequenzoffset dividiert durch die Bitrate in Hz/bit/s.

Eine Betrachtung des Frequenzgangs des beispielhaften Schwingkreises mit dem Frequenzgang des GMSK modulierten Signals mit einem BT = 0.3 zeigt, dass beide Frequenzgänge eine gewisse Ähnlichkeit aufweisen, wenn der Frequenzgang des GMSK modulierten Signals (entspricht dem Matched-Filter) auf die Resonanzfrequenz des Schwingkreises verschoben wird. Dies bewirkt eine Verschiebung der Trägerfrequenz der Modulation (z. B. FSK-, MSK- oder GMSK-Modulation) auf die Resonanzfrequenz des Schwingkreises.

Die absolute Breite der Hauptkeule der G(MSK) (in Fig. 4 normiert auf Hz/bit/s) lässt sich durch geeignete Wahl der Symbolrate an die Breite des Schwingkreises annähern.

Wird die Trägerfrequenz der G(MSK)-Modulation ähnlich (z. B. gleich) zur Resonanzfrequenz des Schwingkreises und die Symbolrate ähnlich zur Breite des Schwingkreises (z.B. bei der 3 dB oder 20 dB Grenze) gewählt, fungiert der Schwingkreis näherungsweise (unter kleinen Verlusten in der Leistungsfähigkeit) als Optimalfilter (matched filter).

Bei Ausführungsbeispielen kann durch eine geeignete Wahl der Resonanzfrequenz des Schwingkreises 142 oder 127 (z.B. des anderen Geräts 140 oder des Geräts 120) und der Trägerfrequenz der Modulation (z.B. des magnetischen Signals 130 oder 132) sowie der Datenrate der Modulation, der Schwingkreis 142 oder 127 (z.B. des anderen Geräts 140 oder des Geräts 120) als Optimalfilter verwendet werden.

Bei Ausführungsbeispielen kann somit weitere Hardware für die Filterung des Signals mit einem analogen Optimalfilter oder eine anschließende digitale Filterung entfallen, wodurch die Kosten für das andere Gerät 140 optimiert werden können.

Bevor aus dem gefilterten Signal die Daten extrahiert werden können, wird das Signal noch von der gewählten Trägerfrequenz ins Basisband gemischt. Dies kann entweder analog mittels eines Mischers oder digital mittels einer Multiplikation mit einem komplexen Drehzeiger erfolgen.

Eine alternative kostengünstigere Möglichkeit zur Rückgewinnung der Symbole ist in Abschnitt 1.3 beschrieben.

### 1.2 Verwendung eines IO-Pins oder eines PWM-Pins des Microcontrollers zur Generierung des Sendesignals

Falls neben der unidirektionalen Kommunikation von dem Benutzerendgerät 120 (oder Steuerungscomputer) zu dem anderen Gerät 140 auch eine bidirektionale Kommunikation stattfinden soll, muss von dem anderen Gerät 140 ebenfalls ein Signal ausgesendet werden.

Herkömmlicherweise wird hierzu ein DAC (DAC = digital-to-analog converter, dt. Digital-Analog-Wandler) des Microcontrollers verwendet, so dass das gewünschte Signal digital erzeugt und dann mittels des DAC auf eine Antenne gegeben werden kann. In preisgünstigen Microcontrollern ist jedoch häufig kein DAC verbaut oder die Anforderungen des verbauten DAC genügen der notwendigen Spezifikation (z.B. hinsichtlich Stromverbrauchs oder der Abtastrate (sample rate)) nicht.

Alternativ kann auch ein Funkchip zur Erzeugung des Sendesignals verwendet werden, jedoch führt dies zu zusätzlichen Hardwarekosten. Weiterhin können standardmäßige Funkchips normalerweise nicht auf Frequenzen im Audiobereich, wie in Bezug auf die Fig. 2a bis 2c beschrieben wurde, eingesetzt werden.

Microcontroller besitzen in der Regel jedoch IO-Pins (Eingangs-/Ausgangs-Pins) die wahlweise auf einen ersten Spannungspegel (z.B. High, hoher Spannungspegel) oder einen zweiten Spannungspegel (z.B. Low, niedriger Spannungspegel) geschaltet werden können. Damit kann bei Ausführungsbeispielen ein analoges Rechtecksignal 145 als Sendesignal erzeugt bzw. generiert werden. Durch die Wahl der Änderungsrate (Wechsel zwischen High und Low) kann die Frequenz dieses Rechtecksignals 145 angepasst werden.

Alternativ kann das Rechtecksignal 145 bei Ausführungsbeispielen auch mittels eines PWM-Pins (Pulsdauermodulation [7]) zur Verfügung gestellt werden. Für eine effiziente Ansteuerung kann der Tastgrad beispielsweise auf etwa 50% eingestellt werden. Durch eine entsprechende Wahl der PWM Periodendauer kann auch hier die Frequenz des Rechtecksignals 145 eingestellt werden.

Mit dem Ansatz aus Abschnitt 1.1, wonach der Schwingkreis 142 als Optimalfilter für die Modulation eingesetzt werden kann, und dem erzeugten Rechtecksignal 145 des Microcontrollers 144 kann das modulierte Sendesignal (moduliertes magnetische Signal 132) kostengünstig erzeugt werden, wie dies am folgenden Beispiel genauer erläutert wird.

Hierbei wird beispielhaft von folgenden Parametern ausgegangen:
- Trägerfrequenz des modulierten Signals: f_{c} = 18,5 kHz
- Modulationsart: differentielle MSK-Modulation mit f_{sym} = 1200 Sym/s
- Hardware: Schwingkreis mit Resonanzfrequenz bei fᵣ = 18,5 kHz

Die (G)MSK stellt ein Frequenzmodulationsverfahren dar, bei dem die Information in die Trägerfrequenz des Signals eingebracht wird. Durch die Wahl der differentiellen (G)MSK gilt der Zusammenhang:
- Bit mit dem logischen Wert "0": Sinussignal der Dauer 1/f_{sym} = 0,8333 ms auf der Frequenz f₀ = f_{c} - f_{sym}/4 = 18,2 kHz
- Bit mit dem logischen Wert "1": Sinussignal der Dauer 1/f_{sym} = 0,8333 ms auf der Frequenz f₁ = f_{c} + f_{sym}/4 = 18,8 kHz

Soll nun ein Bit mit dem Wert "0" gesendet werden, wird vom IO-Pin des Microcontrollers 144 ein Rechtecksignal 145 der Dauer von 0,8333 ms mit der Frequenz 18,2 kHz erzeugt. Soll ein Bit mit dem Wert "1" gesendet werden, entsprechend ein Rechtecksignal 145 mit der Dauer 0,8333 ms und der Frequenz 18,8 kHz. Sollen mehrere Bits nacheinander übertragen werden erfolgt ein nahtloser Übergang ohne zeitliche Pause zwischen den Bits.

Die Berechnung 18,2 kHz * 0,83333 ms ≈ 15.1667 bzw. 18,8 kHz * 0,83333 ms ≈ 15,667 zeigt, dass die Symboldauer kein vielfaches der Periodendauer der Schwingung des Sendesignals (Rechtecksignals 145) ist. Daher kann bei Ausführungsbeispielen der Mikrokontroller 144 so konfiguriert sein, dass nach jeder Schwingungsperiode ein Interrupt ausgelöst wird. Dabei wird in einen Akkumulator die Zeitdauer der letzten Schwingung (gemessen in Taktzyklen eines Zählers) aufaddiert. Ist die aufaddierte Zeit gleich oder überschreitet die Zeit die Symboldauer von 0,83333 ms, so schaltet der Microcontroller die Periode des PWM Signals auf die Schwingungsperiode des nächsten Symbols um und zieht vom Akkumulator eine Zahl, die möglichst genau der Symboldauer entspricht, ab. Zum Start jeder Aussendung kann der Akkumulator auf 0 gesetzt werden.

Hierdurch wird ein korrektes Symboltiming erreicht, Höchstens die erste der ca. 15 Schwingungsperioden pro Symbol hat damit eine falsche Periodendauer. Da die Abtastung (siehe unten) etwa in der Mitte der 15 Schwingungen erfolgt, ist diese allerdings vernachlässigbar.

Das erzeugte Rechtecksignal 145 kann anschließend auf den Schwingkreis 142 mit der Resonanzfrequenz bei etwa 18,5 kHz gegeben werden. Dadurch wird eine Filterung erzeugt, die das (G)MSK-Signal annähert. Alle Frequenzen werden entsprechend des Frequenzgangs des Filters gedämpft, wobei die gewünschten Frequenzen bei 18,2 kHz und 18,8 kHz weniger gedämpft werden als die unerwünschten Frequenzen des Rechtecksignals.

Bei Ausführungsbeispielen kann durch eine geeignete Wahl der Resonanzfrequenz des Schwingkreises 142 und der Trägerfrequenz der Modulation, sowie der Datenrate der Modulation ein von einem Microcontroller 144 einfach zu erzeugendes Rechtecksignal 145 in ein MSK oder GMSK moduliertes Sendesignal 132 (MSK oder GMSK moduliertes magnetisches Signal) umgewandelt werden.

Bei Ausführungsbeispielen kann ein gegebenes Symboltiming durch Akkumulieren jeder Periodendauer und Schalten auf die für jedes Symbol gegebene Schwingungsperiode sowie Abziehen einer Symboldauer vom Akkumulator, falls die Zeit im Akkumulator >= Symboldauer entspricht, eingehalten werden.

### 1.3 Verwendung eines Komparators / Timers mit Aufnehm-Funktion (engl. capture function) zur Demodulation

In Abschnitt 1.1 wurde gezeigt, wie sich mit Hilfe eines Schwingkreises die Optimalfilterung (matched filter) des Empfangssignals (MSK oder GMSK modulierten Signals) kostengünstig realisieren lässt.

Nach dieser Filterung muss das Empfangssignal 143 normalerweise digitalisiert werden, um mittels Demodulation die gesendeten Bits zu extrahieren.

Wie bereits vorab erwähnt wurde, besitzen kostengünstige Microcontroller 144 in der Regel jedoch keinen ADC oder dessen Eigenschaften sind nicht ausreichend, so dass eine herkömmliche direkte digitale Verarbeitung nicht möglich ist.

Um mit der vorhandenen Hardware die Demodulation trotzdem durchführen zu können, kann die verwendete Modulation näher betrachtet werden. Wird ein Frequenzmodulationsverfahren (FSK, GFSK, MSK, GMSK) verwendet, wird die Information, wie im vorherigen Abschnitt erwähnt, in der Frequenz übertragen.

Bei einer 2-(G)FSK oder einer G(MSK) stehen zwei Frequenzen zur Verfügung. Somit wird genau ein Bit codiert, wobei die Information in der Wahl der Frequenz liegt.

Entsprechend der Symboldauer wird für die Übertragung eines Bits die jeweils die eine oder die andere Frequenz zur Übertragung gewählt. In anderen Worten, während der Übertragung eines Bits wird entweder ein Sinuston der Frequenz f0 oder der Frequenz f1 ausgesendet. Durch die begrenzte Symboldauer ergibt sich im Zeitbereich eine Faltung des Sinustons mit einem Rechtecksignal.

Wird das empfangene Signal 143, welches durch den Schwingkreis 142 bereits den Optimalfilter durchlaufen hat, auf einen Komparator gegeben (bei dem der zweite Eingang z.B. auf ein Bezugspotential, wie z.B. Masse, gelegt ist) ändert sich der Ausgang des Komparators bei jedem Vorzeichenwechsel des Empfangssignals 143.

Die Dauer zwischen den steigenden (bzw. fallenden) Flanken oder die Anzahl an steigenden (bzw. fallenden Flanken) des Komparatorausgangs während einer Symboldauer lassen sich im Microcontroller 144 zählen.

Alternativ zu dem eingebauten Komparator kann ein externer verwendet werden oder durch eine Transistorschaltung (siehe Abschnitt 2.4) ersetzt werden.

Unter Berücksichtigung des obigen Beispiels aus Abschnitt 1.2 würde es bei einem gesendeten Bit mit dem Wert "0" während einer Symboldauer von 0,8333 ms 15,16667 Perioden und somit auch 15,16667 fallende bzw. steigende Flanken geben. Bei einem gesendeten Bit mit dem Wert "1" entsprechend 15,6667 fallende bzw. steigende Flanken. Diese Flanken können von Microcontroller 144 gezählt werden, z.B. mittels eines Zählers (engl. counter). Beispielsweise kann die Symboldauer über einen Timer realisiert werden und die Flanken mittels Interrupts verarbeitet werden, z.B. durch Erhöhung eines Zählerstandes des Zählers.

Alternativ lässt sich auch die Dauer in Taktzyklen zwischen den steigenden oder fallenden Flanken zählen. Bei einer Taktrate von beispielsweise 8 MHz ergeben sich 440 Zyklen für ein Bit mit dem Wert "0" und 425 Zyklen für ein Bit mit dem Wert "1" zwischen den jeweils fallenden oder jeweils steigenden Flanken.

Hierzu kann die Hardware Aufnehm-Funktion (engl. capture-function) des Timers des Mikrokontrollers verwendet.

Mit einem gewissen Toleranzbereich von beispielsweise sechs Taktzyklen, lässt sich somit eine Demodulation der Bits nachbauen. Somit gilt für das Beispiel aus Abschnitt 1.2:
- 434 ≤ Taktzyklen Counter ≤ 446 → Bit "0"
- 419 ≤ Taktzyklen Counter ≤ 431 → Bit "1"

Liegt die Anzahl der Taktzyklen außerhalb dieses Bereichs, kann davon ausgegangen werden, dass keine Übertragung stattgefunden hat oder dass das Rauschen zu stark ist, so dass eine sinnvolle Decodierung nicht möglich wäre.

Alternativ kann eine Schwelle etwa in die Mitte der Taktzyklen gelegt werden. Bei mehr Taktzyklen kann ein Bit mit dem Wert "0", bei weniger Taktzyklen ein Bit mit dem Wert "1" angenommen werden. Durch eine Fehlerkorrektur und/oder Fehlererkennung (z. B. durch eine Kodierung und/oder eine CRC) können falsch empfangene Telegramme festgestellt werden.

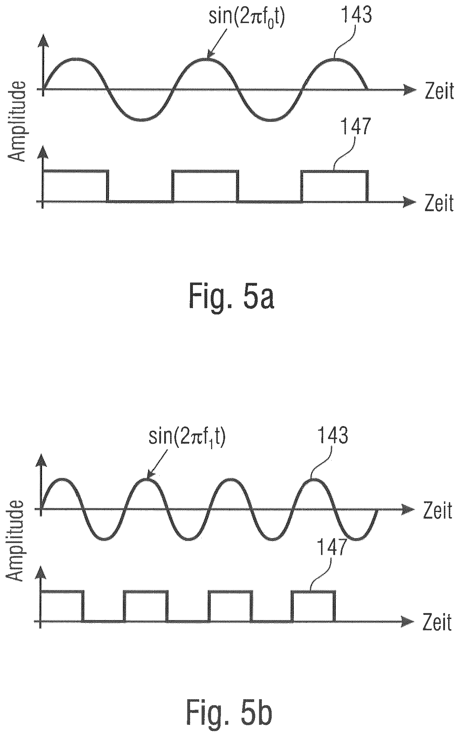

Fig. 5a zeigt in Diagrammen einen Vergleich zwischen Ausschnitten des am Komparatoreingang anliegenden Eingangssignals (=vom Schwingkreis bereitgestelltes Empfangssignal 143) der Frequenz f₀ (d.h. bei der Übertragung eines Bits mit dem Wert "0") sowie eines entsprechenden am Komparatorausgang anliegenden Ausgangssignals 147. Dabei beschreiben die Ordinaten die Amplituden und die Abszissen die Zeit.

Fig. 5b zeigt in Diagrammen einen Vergleich zwischen Ausschnitten des am Komparatoreingang anliegenden Eingangssignals (=vom Schwingkreis bereitgestelltes Empfangssignal 143) mit der Frequenz f₁ (d.h. bei der Übertragung eines Bits mit dem Wert "1") sowie eines entsprechenden am Komparatorausgang anliegenden Ausgangssignals 147. Dabei beschreiben die Ordinaten die Amplituden und die Abszissen die Zeit.

In Fig. 5a ist somit im oberen Bereich ein Ausschnitt des Eingangssignals eines gesendeten Bits mit dem Wert "0" zu erkennen. Dabei handelt es sich um einen Sinuston der Länge einer Symboldauer auf der Frequenz f₀. Dieses Eingangssignal wird mittels des Komparators gegen ein Bezugspotential (z.B. Masse) verglichen, wobei jede positive Halbwelle des Signals den Ausgang des Komparators auf einen ersten Spannungspegel (z.B. High, hoher Spannungspegel) setzt und jede negative Halbwelle des Signals auf einen zweiten Spannungspegel (z.B. Low, niedriger Spannungspegel). Mit anderen Worten, der Aussang des Komparators ist ein Rechtecksignal, dessen Frequenz abhängig von der Frequenz des Eingangssignals (=vom Schwingkreis bereitgestelltes Empfangssignal 143) ist.

Fig. 5b zeigt wie Fig. 5a das Eingangs- und Ausgangssignal des Komparators, wobei in Fig. 5b das Signal für ein Bit mit dem Wert "1" ausschnittsweise dargestellt ist. Die Funktionsweise des Komparators ist die gleiche, der Ausgang des Komparators hat jedoch eine andere Frequenz.

Das Ausgangssignal wird auf den Microcontroller 144 gegeben und dieser kann wie oben beschrieben die steigenden bzw. fallenden Flanken während einer Symboldauer zählen und daraus die modulierten Bits ableiten.

Auch im Empfangsfall ergibt sich die Schwierigkeit, dass dieser das Symboltiming einhalten muss, um die richtigen Zeitpunkte für eine Entscheidung zwischen Bits mit den Werten "1" und "0" zu erhalten.

Hierzu kann, ähnlich wie im Sendefall, ein Akkumulator verwendet werden.

Sobald ein Signal detektiert wird und der optimale Abtastzeitpunkt für die Symbole bestimmt ist, wird zu diesem Zeitpunkt der Akkumulator auf den Wert 0 gesetzt.

Der Mikrokontroller 144 kann so konfiguriert sein, dass bei jeder steigenden Flanke des Komparators (äquivalent bei jeder fallenden Flanke) ein Interrupt ausgelöst wird. Dabei kann in einen Akkumulator die Zeitdauer der letzten Schwingung (gemessen in Taktzyklen des Hardware Aufnehm-Register (engl. capture register) aufaddiert werden. Ist die aufaddierte Zeit gleich oder überschreitet die Zeit die Symboldauer von 0,83333 ms, so bedeutet dies, dass der optimale Zeitpunkt zum Abtasten des neuen Symbols erreicht ist. Der Mikrokontroller 144 bestimmt, ob es ein Bit mit dem Wert "1" oder "0" ist und speichert dieses. Der Mikrokontroller 144 zieht dann vom Akkumulator eine Zahl, die möglichst genau der Symboldauer entspricht, ab.

Hierdurch wird ein korrektes Symboltiming erreicht.

Die Entscheidung, ob ein Bit mit dem Wert "1" oder "0" gesendet wurde, kann direkt anhand der Messung einer Schwingungsperiode durchgeführt werden. Es kann auch der Mittelwert oder Median über mehrere Schwingungsperioden gebildet werden. Kurzfristige Störungen, die zu einer Flanke führen, können so korrigiert werden.

Hat der Mikrokontroller 144 nur eine unzureichende Zeitauflösung bei der Bestimmung der Periodendauer der Schwingung, kann die Zeitdauer über mehrere Perioden gemittelt werden. Erfolgt die Mittelung vor der im nächsten Abschnitt beschriebenen Symbolzeitbestimmung, so wird deren Verzögerung durch die Symbolzeitbestimmung automatisch kompensiert.

Bei Ausführungsbeispielen kann das durch den Schwingkreis gefilterte Signal (Empfangssignal 143) über einen eingebauten Komparator oder über eine externe Schaltung auf einen Timer mit Aufnehm-Funktion (engl. capture function) gegeben. Am Ausgang des Komparators wird ein Rechtecksignal mit einer von dem übertragenen Bit abhängigen Schwingungsperiode bereitgestellt. Damit können die Taktzyklen zwischen steigenden bzw. fallenden Flanken gezählt werden.

Bei Ausführungsbeispielen erfolgt optional eine Mittelung (Mittelwert oder Median) über mehrere Interrupts (also über mehrere Schwingungsperioden, deren Dauer anhand der Flanken bestimmt wird).

Bei Ausführungsbeispielen können durch Schwellwertentscheidungen die gesendeten Bits abgeleitet werden.

Bei Ausführungsbeispielen erfolgt eine Einhaltung des gegebenen Symboltimings durch Akkumulieren jeder gemessenen Periodendauer und die Abtastung des Symbols sowie das Abziehen einer Symboldauer vom Akkumulator, falls die Zeit im Akkumulator ≥ Symboldauer entspricht.

### 1.4 Symbol- und Bytesynchronisation durch Start- und Stopp-Symbol

Die vorherigen Abschnitte 1.1 bis 1.3 haben sich auf die Optimierung der Modulation und deren Demodulation beschäftigt. Neben der Demodulation auf dem Microcontroller 144 ist es davor notwendig, eine Symbol-Synchronisation auf das Empfangssignal durchzuführen.

In diesem Abschnitt wird auf die Gestaltung der zu übertragenen Bits und der Synchronisation innerhalb der Übertragung eingegangen.

Durch die in Abschnitt 1.3 beschriebene Demodulation der Bits, dem Zählen von Taktzyklen zwischen zwei steigenden bzw. fallenden Flanken des Komparatorausgangs im Microcontroller 144, welcher eine nicht beliebig genaue Auflösung besitzt, ist es nicht wie in typischen Funksystemen möglich, eine Präambel auszusenden und anschließend beliebig lange Datensymbole anzufügen. Weiterhin spielen die Quarztoleranzen eine Rolle, so dass die Dauer einer Übertragung ohne Nachsynchronisation nur wenige Symbole umfasst.

Dieses Problem tritt in ähnlicher Weise auch beim asynchronen UART auf. Dort wird zur Synchronisierung am Beginn eines "Frames" (bestehend aus Startbit, 8 Datenbits und 1 oder 2 Stoppbits) ein Startbit eingebracht, welches vom Empfänger zur Synchronisation verwendet wird. Zur Terminierung des Frames werden entweder ein oder zwei Stoppbits gesendet. Zwischen Start und Stoppbit(s) werden die Datenbits eingebracht. Nähere Informationen zum UART-Protokoll findet man z.B. in [8].

In ähnlicher Weise werden hierin bei der Zusammenfassung mehrerer Symbole ebenfalls ein Start- und ein Stoppbit verwendet. Das Startbit wird als Bit mit dem Wert "0" moduliert und das Stoppbit als Bit mit dem Wert "1".

Beim UART werden Start- und Stoppbit sowie die Symbole durch Spannungspegel signalisiert. Eine direkte Umsetzung in Trägersignal auf 18.5 kHz an bzw. aus für ein Bit mit dem Wert "0" bzw. "1" weist mehrere Nachteile auf:
- Es ist nötig, einen Schwellwert festzulegen. Dieser hängt von dem empfangenen Rauschen / Störsignalen in der Umgebung ab.
- Es ist nötig, die Signalleistung zu detektieren, um diese gegen einen Schwellwert zu vergleichen.

Im Folgenden wird ein vereinfachtes Verfahren beschrieben, welches die beschriebenen Nachteile nicht aufweist. Im Unterschied zum UART-Protokoll werden Bits mit dem Wert "0" und "1" nicht durch Spannungspegel, sondern wie in den vorherigen Abschnitten beschrieben, durch unterschiedliche Frequenzen abgebildet. Dadurch resultiert, im Gegensatz zum UART, ein Signal mit konstanter Hüllkurve.

Vor dem ersten Startbit wird eine gewisse Anzahl an (z.B. mindestens 3) Stoppbits übertragen.
1. Sucht nun der Empfänger die Symbolsynchronisation, wartet er, bis er einen Übergang von Symbolen mit 1-Periodendauer (425 Takte) zu einem Symbol mit 0-Periodendauer (440 Takte) feststellt. Dabei wird ein Wert von etwa 433 als Schwelle festgelegt.
2. Wird der Übergang festgestellt, so wartet der Mikrokontroller 144 noch zwischen einer viertel- bis einer halben Symboldauer, also etwa drei bis sieben Schwingungsperioden, und startet dann das oben beschriebenen Verfahren, um mit Hilfe eines Akkumulators nach einer Symboldauer im Symboltakt acht Symbole abzutasten.
3. Nachdem acht Symbole und damit acht Bits dekodiert sind, wechselt der Microcontroller wieder in die Suche nach einem 1-0 Übergang, also von einem Stoppbit zu einem Startbit, der Vorgang beginnt also wieder bei 1.

Bei Ausführungsbeispielen wird jedes Byte mit einem Start- und Stoppsymbol übertragen, diese werden, wie die Daten selbst, durch zwei verschiedene Frequenzen übertragen.

Bei Ausführungsbeispielen kann der Microcontroller 144 ein Startbit durch die Änderung der gemessenen Periodendauer detektieren.

Bei Ausführungsbeispielen kann der Mikrokontroller 8 Bit decodieren und dann wieder ein Startbit suchen.

Bei Ausführungsbeispielen können Blöcke aus einem Startbit, acht Datenbits und einem Stoppbit direkt aneinander folgen oder durch beliebig viele Stoppbits getrennt sein

### 1.5 Effizienter Aufwachmodus (engl. peeking mode) zur Minimierung des Stromverbrauchs

Falls keine Daten zu dem anderen Gerät 140 übertragen werden, sollte dies möglichst wenig Leistung verbrauchen, damit z.B. eine Batterie des anderen Geräts 140 möglichst lange hält.

Bei Ausführungsbeispielen gibt es dazu ein mehrstufiges sog. Peeking-Verfahren (dt. Aufwachverfahren (oder Lauschverfahren)), mit dem festgestellt wird, ob ein Signal anliegt. Falls nicht, dann sollte der Mikrokontroller 144 möglichst schnell in einen sog. Energiesparmodus (engl. power down mode) gehen, in dem sehr wenig Leistung benötigt wird. Periodisch wacht der Mikrokontroller 144 auf (Aufwachmodus (oder Lauschmodus)), und führt ein Peeking (dt. lauschen oder spähen) durch. Liegt kein Signal an, geht der Mikrokontroller erneut in den Energiesparmodus, ansonsten beginnt er den in den vorausgehenden Abschnitten beschriebenen Decodiervorgang.

Damit das Aufwachverfahren möglichst energiesparend und damit auf einem preisgünstigen Microcontroller 144 verarbeitet werden kann, wird in mehreren Stufen festgestellt, ob ein gültiges Signal anliegt. Vom Gerät 120 (z.B. Benutzerendgerät, Steuerungscomputer oder Controller) wird hierbei, falls davon auszugehen ist, dass sich das andere Gerät 140 im Energiesparmodus befindet, vor einer Aussendung von Daten eine sog. Aufwachsequenz (engl. wakeup sequence) ausgestrahlt.

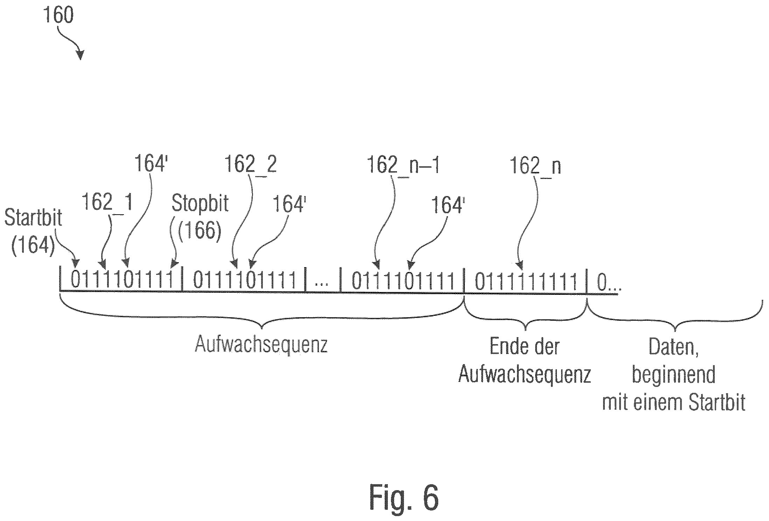

Fig. 6 zeigt eine schematische Ansicht einer Aufwachsequenz 160, die einer Datenübertragung vorangeht, gemäß einem Ausführungsbeispiel der vorliegenden Erfindung.

Wie in Fig. 6 zu erkennen ist, umfasst die Aufwachsequenz 160 mehrere Gruppen 162_1-162_n von mehreren vorgegebenen Datenbits (z.B. 8 Datenbits), denen jeweils ein Startbit 164 vorangestellt und zumindest ein Stoppbit 166 angehängt ist.

Die Gruppen 162_1-162_n-1 von mehreren vorgegebenen Datenbits können dabei jeweils zumindest ein pseudo-Startbit 164' (z.B. ein Bit, dessen Wert einem Wert eines Startbits entspricht) aufweisen, während die letzte Gruppe 162_n von mehreren vorgegebenen Datenbits kein pseudo-Startbit 164' aufweist.

Die Aufwachsequenz kann beispielsweise eine Länge von 180 ms aufweisen.

Das Peeking-Verfahren kann die im Folgenden beschriebenen Schritte aufweisen.

In einem ersten Schritt kann der Microcontroller 144 periodisch (z.B. alle 150 ms) aufwachen und für eine vorgegebene Zeit (etwa 200 - 300 µs) Zyklen zählen. Im Detail kann der Microcontroller 144 nach dem Aufwachen die Anzahl der Takte zwischen den Flanken des Komparatorausgangs nach Abschnitt 1.3 innerhalb einer vorgegebenen Zeit (z.B. etwa 200 - 300 µs (entspricht ca. 1/4 - 1/3 einer Symboldauer)) zählen. Liegt die gezählte mittlere Frequenz des Komparatorsignals (Berechnung durch Periodendauer aus den gezählten Takten zwischen den Flanken) innerhalb des Bereichs von 18000 ≤ Frequenz ≤ 19000 wird mit dem zweiten Schritt fortgefahren. Andernfalls ist keine Übertragung detektiert worden und der Microcontroller 144 geht wieder in den Energiesparmodus, bis er erneut zum Peeking geweckt wird.

In einem zweiten Schritt kann ein Startbit 164 oder pseudo-Startbit 164' ermittelt werden. Da im ersten Schritt ein Signal detektiert wurde, das allerdings auch von einer Störquelle stammen kann, welche zufällig im Bereich von 18000-19000 kHz ein magnetisches Wechselfeld erzeugt, kann als zweites Kriterium, der Mikrokontroller in den Empfangsmodus versetzt werden, um in dem zweiten Schritt einen Frequenzwechsel von 1-Symbol(en) zu einem 0-Symbol, also einem Startbit zu suchen. Hierfür kann die Eigenschaft der MSK und deren zwei unterschiedlichen Frequenzen, welche mittels Komparators in ein Rechtecksignal umgewandelt worden ist, ausgenutzt werden.

Wie bereits beispielhaft in den vorherigen Abschnitten beschrieben wurde, entspricht die MSK einer Frequenzmodulation, wobei die Symbole in die Frequenzinformation eingebracht worden sind. Dabei gelten beispielhaft nach Abschnitt 1.2:
- Bit "0": Sinussignal der Dauer 1/f_{sym} = 0,8333 ms auf der Frequenz f₀ = f_{c}-f_{sym}/4 = 18,2 kHz
- Bit "1": Sinussignal der Dauer 1/f_{sym} = 0,8333 ms auf der Frequenz f₁ = f_{c} + f_{sym}/4 = 18,8 kHz

Dies bedeutet, dass es bei Aussendung eines Bits mit dem Wert "0" 18200 Schwingungen pro Sekunde gibt. In ähnlicher Weise gibt es bei Aussendung eines Bits mit dem Wert "1" 18800

Schwingungen pro Sekunde. Diese Schwingungen werden mittels des Komparators nach Abschnitt 1.3 in ein Rechtecksignal der gleichen Frequenz umgewandelt.

Wie in Abschnitt 1.4 beschrieben, wird am Beginn eines Bytes ein Startbit 164 und am Ende eines Bytes ein Stoppbit 166 eingefügt. Das Startbit 164 wird laut Abschnitt 1.4 als Bit mit dem Wert "0" und das Stoppbit 166 als Bit mit dem Wert "1" moduliert. Somit findet ein Wechsel der Frequenz vom Ende des letzten Byte zum Beginn des nächsten Byte statt.

Dieser Frequenzwechsel wird nun zur Feststellung eines Startbits 164 genutzt.

Wacht der Mikrokontroller 144 nun direkt nach einem Startbit 164 auf, müsste der Microcontroller neun Symbole bis zum nächsten Startbit 164 warten. Daher werden als Aufwachsequenz das Byte 0xF7 übertragen. Damit ergibt sich, wenn der Microcontroller 144 direkt nach einem Startbit 164 einschaltet, für den Microcontroller 144 ein Peudo-Startbit 164'.

Wird nach fünf Symbolen kein Startbit 164 detektiert, geht der Mikrokontroller 144 wieder in den Energiesparmodus. Ansonsten erfolgt der Empfang von Bytes.

In einem dritten Schritt werden Bytes empfangen. Egal, ob der Microcontroller 144 ein Startbit 164 oder ein Pseudo-Startbit 164' detektiert hat, wird er, falls er eine Aufwachsequenz 160 empfängt, Bytes mit dem Wert 0xF7 empfangen. Wird das erste 0xF7 Byte empfangen, wechselt der Microcontroller aus dem Aufwachmodus (Peeking-Modus) in den normalen Empfangsmodus.

In einem vierten Schritt erfolgt eine Datensuche bzw. ein Datenempfang im normalen Empfangsmodus. Der Microcontroller 144 empfängt nun kontinuierlich Bytes, die aus einem Startbit 164, acht Datenbits mit dem Wert 0xF7, und einem Stoppbit 166 aufgebaut sind. Empfängt der Microcontroller 144 das Byte mit dem Wert 0xF7, so verwirft er dieses Bytes und empfängt weiter.

Hat der Microcontroller 144 im zweiten Schritt des Peeking-Verfahrens ein echtes Startbit 164 detektiert, so wird der Microcontroller 144 vor dem Empfang der Daten ein 0xFF Byte empfangen - und es verwerfen.

Hat der Microcontroller 144 im zweiten Schritt des Peeking-Verfahrens ein Pseudo-Startbit 164' detektiert, so endet der kontinuierliche Byte-Empfang vier Symbole vor dem Startbit 164 der Daten. Da diese vier Symbole 1-Symbole sind, wird sich der Microcontroller, wie in Abschnitt 1.4 beschrieben, korrekt auf das Startbit 164 der Daten synchronisieren.

Als erstes Datenbyte kann ein 0xB7 Byte übertragen werden. Dadurch kann der Microcontroller 144 den Beginn der Daten sicher von den 0xF7 bzw. 0xFF Bytes der Aufwachsequenz 160 unterscheiden.

Die Unterscheidbarkeit der Aufwachsequenz 160 vom Datenblock erlaubt es, dass vor jeder Übertagung eine Aufwachsequenz übertragen wird.

Bei Ausführungsbeispielen erfolgt eine Aussendung einer Aufwachsequenz 160 nach Fig. 6.

Bei Ausführungsbeispielen umfasst die Aufwachsequenz 106 ein oder mehrere Bytes mit dem Wert 0xF7, die ein Pseudo-Startbit 164' enthalten und die bei versetztem Empfang (d.h. Start beim Pseudo-Startbit 164') das gleiche Empfangsbyte ergeben.

Bei Ausführungsbeispielen weist das letzte Byte der Aufwachsequenz 160 den Wert 0xFF auf, um bei versetztem Empfang eine korrekte Erkennung des Startbits 164 der ersten Daten zu ermöglichen.

Bei Ausführungsbeispiele ist das Peeking-Verfahren ein mehrstufiges Peeking-Verfahren (z.B. nach den oben beschriebenen Schritten), um den Microcontroller 144, falls kein echtes Signal 130 gesendet wird, möglichst schnell wieder in den Energiesparmodus zu versetzen.

### 1.6 Teilweises Unterdrücken des Sendes der Aufwachsequenz

Prinzipiell ist die Übertragung einer Aufwachsequenz 160 vor einer Datenübertragung, besonders bei kleinen Datenmengen von nur wenigen Byte, ineffizient. Die Übertragung der Aufwachsequenz 160 sorgt allerdings dafür, dass mit dem in Abschnitt 1.5 beschriebenen Verfahren der Leistungsverbrauch stark reduziert werden kann.

Es gibt nun mehrere Ansätze, die das Senden einer Aufwachsequenz bei einigen Aussendungen zu vermeiden.

Erster Ansatz. Wird ein Gerät 120, wie z.B. ein Controller, nicht über eine Batterie versorgt, sondern z.B. über USB, so besteht keine Notwendigkeit, dessen Leistungsverbrauch stark zu optimieren. Da die Aussendung einer Aufwachsequenz 106, um Daten vom anderen Gerät 140 zum Controller 120 zu übertragen, allerdings Leistung bei den von der Batterie versorgten anderen Gerät 120 kosten würde, betreibt man das System 110 hier unsymmetrisch: Der Controller 120 wird kontinuierlich im Modus "Empfang eines Bytes" (siehe Abschnitt 1.5, dritter Schritt des Peeking-Verfahrens) bleiben. Das andere Gerät 140 sendet keine Aufwachsequenz 160.

Zweiter Ansatz. Das andere Gerät bleibt nach dem Empfang des letzten Bytes einer Übertragung noch für eine definierte Zeitspanne X (eine bis mehrere Sekunden) im Modus "Empfang eines Bytes" (siehe Abschnitt 1.5, dritter Schritt des Peeking-Verfahrens). Erhält der Controller 120 vom anderen Gerät eine Antwort auf eine Übertragung (z. B. eine Schreib-Bestätigung oder Parameterwerte, die angefragt wurden), so ist dem Controller 120 bekannt, dass der Knoten nun noch die definierte Zeitspanne im Modus "Empfang eines Bytes" ist. Gibt es eine erneute Kommunikation vom Controller 120 zum anderen Gerät 140 innerhalb der Zeitspanne Y, so überträgt der Controller 120 keine Aufwachsequenz 160. Da die Uhren von dem Controller 120 und dem anderen Gerät 140 bedingt durch Quarztoleranzen leicht unterschiedlich laufen können, wird die Zeitspanne Y leicht kleiner als X gewählt. Damit kann es nicht vorkommen, dass der Controller 120 Daten sendet, obwohl das andere Gerät im Energiesparmodus ist. Das bedeutet allerdings auch, dass der Controller 120 in einem kleinen Zeitbereich ggf. eine Aufwachsequenz sendet, obwohl das andere Gerät noch im Modus "Empfang eines Bytes" ist. Dies ist allerdings, wie in Abschnitt 1.5 beschrieben, unkritisch, da das andere Gerät 140 eine Aufwachsequenz 160 vom Start einer Datenübertragung unterscheiden kann, und diese in jedem Fall verwirft.

Dritter Ansatz. Ist für einige Zeit eine niedrige Latenz für die Kommunikation zwischen dem Controller 120 und dem anderen Gerät 140 erwünscht, sendet in dem Fall, dass für eine Zeitspanne Y keine Kommunikation von dem anderen Gerät 140 zu dem Controller 120 stattfindet, der Controller 120 ein spezielles Ping-Datenpaket, auf welches das andere Gerät 140 mit einem speziellen Pong-Paket antwortet. Dadurch werden Daten vom anderen Gerät 140 zum Controller 120 übertragen und damit eine erneute Zeitspanne Y eröffnet.

Bei Ausführungsbeispielen darf die Aufwachsequenz 160 vor jeden Daten übertragen werden.

Bei Ausführungsbeispielen wird die Aufwachsequenz 160 nicht immer übertragen, nur wenn damit zu rechnen ist, dass das andere Gerät im Energiesparmodus sein könnte.

Bei Ausführungsbeispielen kann das andere Gerät 140 bei Bedarf daran gehindert werden, in den Energiesparmodus zu gehen.

### 1.7 0xFF Präambelbyte bei Übertragung ohne Aufwachsequenz

Wird ein anderes Gerät nach Abschnitt 1.4 in einem Umfeld ohne große Störsignale oder Rauschen betrieben bzw. hat der in Abschnitt 1.3 beschriebene Komparator eine hohe Hysterese, gibt es in dem Fall, dass von einem Benutzerendgerät 120 (Controller) zu einem anderen Gerät 140 (Knoten) keine Übertragung stattfindet, keine Flanken am Timer-Capture-Eingang (z.B. Eingang eines Capture/Compare-Moduls im Aufnehm-Modus) des Microcontrollers 144 des anderen Geräts 140. Sobald in diesem Szenario das Benutzerendgerät 120 Daten überträgt, kann das andere Gerät 140 mit Hilfe von den in Abschnitt 1.4 beschriebenen Ausführungsbeispielen die gesendeten Bytes korrekt decodieren.

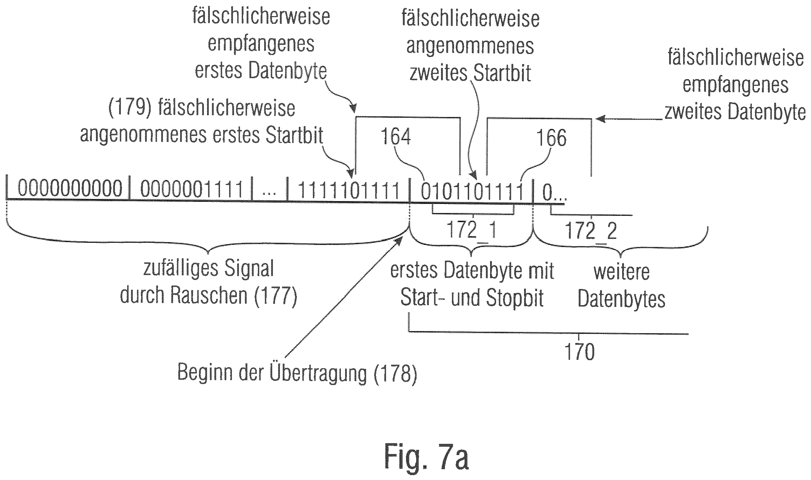

Wird vor dem Komparator, wie z.B. in Abschnitt 2.4 beschrieben, einen Verstärker geschaltet, oder gibt es weitere Signale, die auch ohne Übertragungen zu Flanken am Timer-Capture-Eingang des Microcontrollers 144 des anderen Geräts 140 führen, dann kann das andere Gerät 140 in dem zufälligen Signal fälschlicherweise den Start einer Byteübertragung detektieren. Dieses führt immer wieder dazu, dass das andere Gerät 140 den tatsächlichen Beginn einer Übertragung verpasst und zumindest das erste oder die ersten Bytes falsch dekodiert werden. Dies ist in Fig. 7a dargestellt.

Im Detail zeigt Fig. 7a eine schematische Ansicht einer Bitfolge 170 der zu dem anderen Gerät 140 zu übertragenen Daten, wobei die Bitfolge die Gruppen 172_1-172_2 von mehreren Datenbits aufweist, denen jeweils ein Startbit 164 vorangestellt und ein Stoppbit 166 angehängt ist, wobei der Bitfolge mehrere durch ein zufälliges Signal oder Rauschen verursachte Bits 177 vorangehen. Mit anderen Worten, Fig. 7a zeigt eine mögliche fehlerhafte Bytesynchronisation ohne 0xFF Präambelbyte.

Die Übertragung vom Benutzerendgerät 120 beginnt beim Punkt 178 ("Beginn der Übertragung"). Da das andere Gerät 140 schon vorher ein falsches Startbit 179 ("Fälschlicherweise angenommenes erstes Startbit") gefunden hat, wird das Startbit des ersten Byte 172_1 (und ggf. auch die von weiteren Bytes 172_2) verpasst. Der Microcontroller 144 ist nicht Byte-Synchron und empfängt falsche Daten.

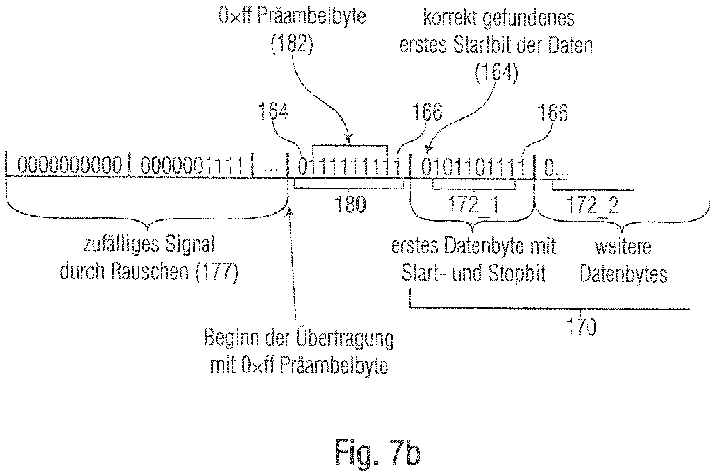

Das Verfahren nach Fig. 7b löst dieses Problem, indem vor der Übertragung des Startbits 164 des ersten zu übertragenden Bytes 172_1 eine 0xFF Präambelbyte (oder alternativ neun 1-Symbole) übertragen werden.

Im Detail zeigt Fig. 7b eine schematische Ansicht einer Bitfolge 170 der zu dem anderen Gerät 140 zu übertragenen Daten, wobei die Bitfolge die Gruppen 172_1-172_2 von mehreren Datenbits aufweist, denen jeweils ein Startbit 164 vorangestellt und ein Stoppbit 166 angehängt ist, wobei der Bitfolge 170 eine Präambel-Bitfolge 180 vorangestellt ist, und wobei der Präambel-Bitfolge 180 mehrere durch ein zufälliges Signal oder Rauschen verursachte Bits 177 vorangehen.

Wie in Fig. 7b zu erkennen ist, kann die Präambel-Bitfolge 180 eine Gruppe 182 von mehreren Präambel-Bits (z.B. 8 Präambel-Bits) aufweisen, denen ein Startbit 164 vorangestellt und zumindest ein Stoppbit 166 angehängt ist. Die Gruppe 182 von mehreren Präambel-Bits kann einem Byte mit dem Wert 0xFF entsprechen. Die Präambel-Bitfolge umfasst somit ein Startbit 164 und neun Stoppbits 166, die auf das Startbit 164 folgen.

Selbst wenn das andere Gerät 140 nun fälschlicherweise ein Startbit in einem Bereich ohne Übertragung detektieren sollte, endet der zugehörige fälschlicherweise gestartete Byte-Empfang des anderen Gerätes 140 innerhalb des Präambelbytes 182. Da dieses keine weiteren 0-Symbole enthält, ist das erste folgende 0-Symbol das Startbit 164 des ersten Datenbytes 172_1, welches dadurch korrekt gefunden und damit das erste Datenbyte 172_1 korrekt empfangen werden kann. Das Verfahren funktioniert damit nur für Präambelsymbole, die zumindest neun 1-Symbole vor dem Start-Bit des ersten Datenbytes aufweisen.

Bei Ausführungsbeispielen kann ein 0xFF Präambelbyte verwendet werden.

Bei Ausführungsbeispielen können mindestens neun 1-Präambelsymbole vor der Übertragung des ersten Startbits 164 des ersten Datenbytes 172_1 verwendet werden.

### 1.8 Abstimmung überflüssig durch Senden auf verschiedenen Frequenzen

Wird als Gerät 120 ein Benutzerendgerät, wie z.B. ein Mobiltelefon, verwendet, so besitzt dieses ausreichend Rechenleistung und das Audiosignal 124, das über den eingebauten Lautsprecher 126 ausgegeben wird, über einen größeren Frequenzbereich zu verteilen, um auch ein anderes Gerät 140 mit einem schlecht abgestimmten bzw. verstimmten elektromagnetischen Schwingkreis 142 besser (z.B. optimal) ansprechen zu können. Dazu kann das Sendesignal (FSK moduliertes magnetisches Signal 130) wiederholt bzw. bevorzugt gleichzeitig auf mehreren unterschiedlichen Trägerfrequenzen abgestrahlt werden. Aus dem eigentlich benötigten Signal (z. B. FSK, MSK oder GMSK) wird sozusagen ein Multi- Signal (Mehrträger) mit versetzten Unterträgern. Das versetzt das andere Gerät 140 in die Lage, das Sendesignal (z. B. FSK, MSK oder GMSK moduliertes magnetisches Signal 130) auch dann zu empfangen, wenn dessen elektromagnetischer Schwingkreis 142 schlecht oder nicht nachgestimmt ist. Im besten Fall können der gesamte Abstimm-Algorithmus und die zusätzlich benötigten Bauteile eingespart werden.

Werden für die Sendesignale auf den unterschiedlichen Unterträgern eindeutige Kennungen innerhalb der Datensymbole (Header-Bits) verwendet, so können diese von dem anderen Gerät 140 genutzt werden, um die interne Abstimmung bzw. Nachführung der Abstimmung des elektromagnetischen Schwingkreises 142 zu verbessern, da das andere Gerät 140 dann die tatsächlich stärkste (und damit ausgewählte) Sendefrequenz zu der aktuellen Resonanzfrequenz des elektromagnetischen Schwingkreises 142 zuordnen kann. Dann kann das andere Gerät 140 den elektromagnetischen Schwingkreis 142 nach oben oder unten nachstimmen, um das nächste Mal optimaler empfangen zu können. Das würde zum Beispiel benötigt werden, wenn es auch andere Sendestellen gibt, die nicht über einen breitbandigen Lautsprecher zur Signalerzeugung verfügen, sondern ebenfalls nur über einen Schwingkreis angekoppelt sind.

Ferner kann das andere Gerät das empfangene und über Symbole/Bits codierte Sendesignal speichern und später über eine der beschriebenen Methoden zur Rückkommunikation an eine zentrale Datenbank übermitteln. Dort wird dann pro anderem Gerät 140 (z.B. Sensorknoten) die zugehörige Schwingkreisfrequenz hinterlegt, um bei einem erneuten Ansprechen dieses anderen Geräts 140 das Sendesignal direkt auf dessen Resonanzfrequenz einzustellen.

Ausführungsbeispiele haben den Vorteil, dass ein Ansprechen des anderen Geräts 140 möglich ist, obwohl der elektromagnetische Schwingkreis 142 des anderen Geräts 140 nicht korrekt abgestimmt ist.

Ausführungsbeispiele haben den Vorteil, dass ein Ansprechen des anderen Geräts 140 möglich ist, obwohl der elektromagnetische Schwingkreis 142 des anderen Geräts 140 nicht abstimmbar ist.

Bei Ausführungsbeispielen erfolgt ein Senden eines in der Frequenz versetzten Sendesignals über ein breitbandiges Sendegerät 120, wie z.B. einem Mobiltelefon mit einem Lautsprecher.

Bei Ausführungsbeispielen erfolgt eine Rückmeldung der empfangenen Sendefrequenz (bzw. dessen Kennung) durch das andere Gerät 140 an das Gerät 120 (z.B. Controller).

Bei Ausführungsbeispielen kann ein schmalbandiger Controller, der z.B. keinen Lautsprecher sondern einen elektromagnetischen Schwingkreis aufweist, an das andere Gerät 140 angepasst (z.B. über wenige Abstimmung-Stufen einstellbar) zurücksenden.

### 2. Abstimmung des elektromagnetischen Schwingkreises

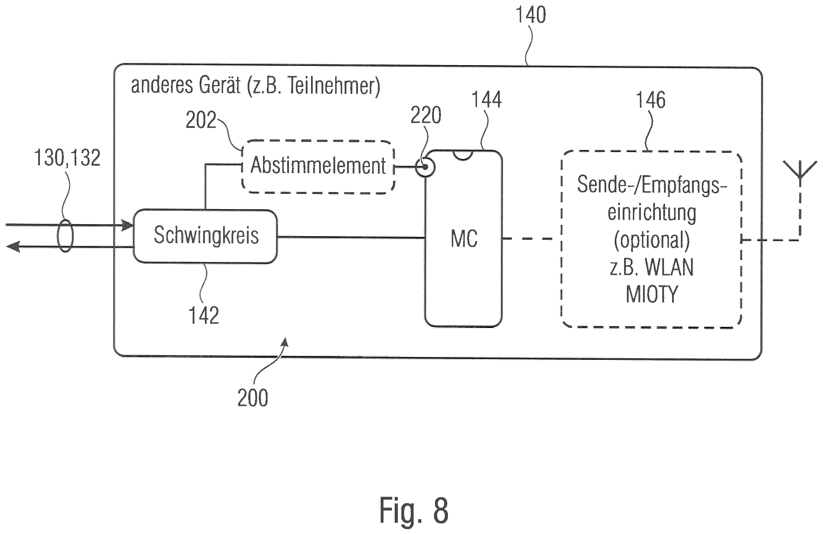

Fig. 8 zeigt ein schematisches Blockschaltbild des anderen Geräts 140, gemäß einem Ausführungsbeispiel der vorliegenden Erfindung.

Das andere Gerät 140 kann einen Microcontroller 144 und eine Konfigurationsschnittstelle 200 aufweisen, wobei die Konfigurationsschnittstelle 200 einen mit dem Microcontroller 144 verbundenen elektromagnetischen Schwingkreis 142 umfasst, der konfiguriert ist, um ein magnetisches Signal 130, 132 zu detektieren und/oder zu erzeugen, das zu und/oder von dem anderen Gerät 140 zu übertragene Daten aufweist.

Bei Ausführungsbeispielen kann der Microcontroller 144 mit zumindest einem Abstimmelement 202 zur Abstimmung des elektromagnetischen Schwingkreises 142 verbunden sein, wobei der Microcontroller 144 konfiguriert sein kann, um zumindest einen Pin 220 (z.B. einen Eingangs-/Ausgangspin) des Microcontrollers 144, mit dem das zumindest eine Abstimmelement 202 verbunden ist, auf einen aus mehreren unterschiedlichen Betriebsmodi zu schalten, um den elektromagnetischen Schwingkreis 142 abzustimmen.

Bei Ausführungsbeispielen können die mehreren unterschiedlichen Betriebsmodi zumindest zwei aus einem hochohmigen Eingangsmodus, einem Pull-up Eingangsmodus, und einem Ausgangsmodus sein, in dem an dem jeweiligen Pin ein Bezugspotential (z.B. Masse) oder ein Versorgungspotential (z.B. Vcc) bereitgestellt wird.

Beispielsweise kann der Microcontroller 144 konfiguriert sein, um den zumindest einen Pin 220 zwischen zumindest zwei der mehreren unterschiedlichen Betriebsmodi umzuschalten, um den elektromagnetischen Schwingkreis abzustimmen.

Bei Ausführungsbeispielen das zumindest eine Abstimmelement 202 mit dem elektromagnetischen Schwingkreis 142 verbunden sein, wie dies in Fig. 8 beispielhaft gezeigt ist. Alternativ (oder zusätzlich) kann das zumindest eine Abstimmelement auch Teil des elektromagnetischen Schwingkreises 142 sein. Beispielsweise kann der elektromagnetische Schwingkreis 142 eine Spule und einen oder mehrere Kondensatoren aufweisen, wobei der eine Kondensator oder zumindest einer der mehreren Kondensatoren als das zumindest eine Abstimmelement verwendet werden kann.

Bei Ausführungsbeispielen kann der Microcontroller 144 konfiguriert sein, um den elektromagnetischen Schwingkreis 142 in Abhängigkeit von einer Trägerfrequenz des zu detektierenden und/oder zu erzeugenden magnetischen Signals 130, 132 abzustimmen. Beispielsweise kann der Microcontroller konfiguriert sein, um eine Resonanzfrequenz des elektromagnetischen Schwingkreises und die Trägerfrequenz des zu detektierenden und/oder zu erzeugenden magnetischen Signals aufeinander abzustimmen, wie dies oben in Abschnitt 1 ausführlich beschrieben wurde.

Wie in Fig. 8 zu erkennen ist, kann das andere Gerät 140 bei Ausführungsbeispielen ein Teilnehmer eines Kommunikationssystems sein. In diesem Fall kann das andere Gerät eine Funkschnittstelle 146 aufweisen, wie dies oben in Bezug auf die Fig. 2a bis 2c erläutert ist.

Im Folgenden werden detaillierte Ausführungsbeispiele des andere Geräts 140 beschrieben.

Die im Folgenden beschriebenen Ausführungsbeispiele befassen sich dabei mit den notwendigen Komponenten, um die Daten zu und/oder von dem anderen Gerät 140 über eine einfache magnetische Kopplung bei niedrigen Frequenzen zu übertragen. Diese kann, wie oben bereits beschrieben wurde, dazu genutzt werden, um das andere Gerät 140 (z.B. loT-Knoten oder WLAN Kamera) zu konfigurieren.

Da das andere Gerät 140, z.B. insbesondere bei Verwendung im IoT-Umfeld, sehr preissensitiv ist, sind einfache Schaltungen zu bevorzugen. Haptische Schnittstellen wie Schalter und Taster sind oft zu groß und zu teuer für diese Geräte 140. Auch komplexe Funkschnittstellen zur Konfiguration, wie z.B. Infrarot und Bluetooth, sind zu aufwendig. Daher wird die in Bezug auf die Fig. 2a bis 2c beschriebene Datenübertragung über eine magnetische Kopplung bei niedrigen Frequenzen verwendet, wobei das magnetische Signal 130 hierbei entweder über einen Lautsprecher 126 des Benutzerendgeräts 120 (siehe Fig. 2a) oder einen mit dem Benutzerendgerät 120 verbundenen elektromagnetischen Schwingkreis 127 (siehe Fig. 2b und 2c) erzeugt wird.

Der Empfang des Magnetfeldes erfolgt, wie bereits erwähnt, mit einem einfachen elektromagnetischen Schwingkreis 142 des anderen Geräts, womit dieses preisgünstig und energieeffizient konfiguriert werden kann. Die Übertragung erfolgt beispielsweise bei Frequenzen im Ultraschallbereich (16-20 kHz). Dadurch kann der Empfang auch bei günstigen Microkontrollern durch direkte Messungen von Schwingungsperioden erfolgen, wie dies in Abschnitt 1 ausführlich beschrieben wurde.

### 2.1 Abstimmung des Schwingkreises durch Input/Output setzen von Ports des Microcontrollers

Bei einer magnetischen Kopplung dient der elektromagnetische Schwingkreis 142 als Antenne. Wie auch bei jeder Antenne ist es vorteilhaft, wenn die Schwingkreisfrequenz (Resonanzfrequenz des elektromagnetischen Schwingkreises 142) mit der Trägerfrequenz des magnetischen Signals 130, 132 übereinstimmt. Außerdem ist es vorteilhaft, wenn der elektromagnetische Schwingkreis 142 frequenzselektiv ist, weil so weniger Störfrequenzen empfangen werden. Mit günstigen Standardbauteilen ist dies schwer zu realisieren, da diese eine hohe Bauteilstreuung haben. Es ist deshalb notwendig den Schwingkreis individuell abzustimmen.

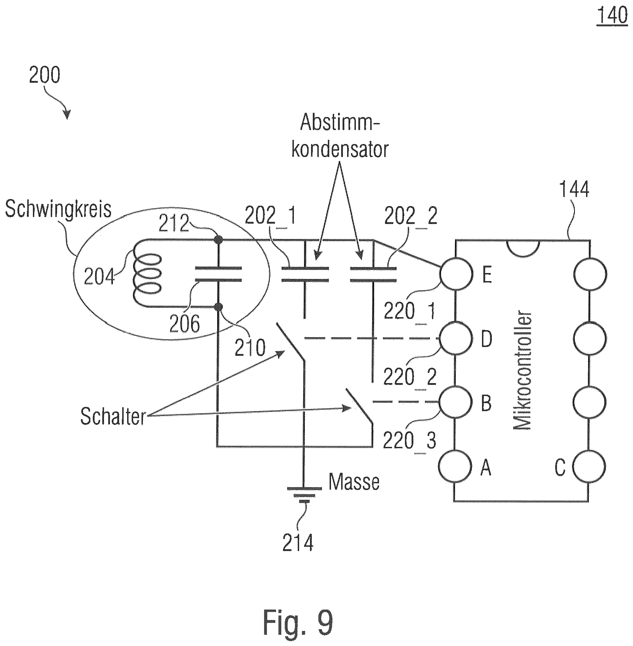

Fig. 9 zeigt ein schematisches Blockschaltbild des anderen Geräts 140, gemäß einem Ausführungsbeispiel der vorliegenden Erfindung. Das andere Gerät 140 umfasst den Microcontroller 144 und die Konfigurationsschnittstelle 200 mit dem elektromagnetischen Schwingkreis 142.

Wie in Fig. 9 zu erkennen ist, kann der elektromagnetische Schwingkreis 142 eine erste Spule 204 und einen ersten Kondensator 206 umfassen. Die erste Spule 204 und der erste Kondensator 206 können parallel geschaltet sein zwischen einem ersten Anschluss 210 und einem zweiten Anschluss 212 des elektromagnetischen Schwingkreises 142.

Der erste Anschluss 210 des elektromagnetischen Schwingkreises 142 kann auf ein Bezugspotential 214 (z.B. Masse) geschaltet sein, wobei der zweite Anschluss 212 des elektromagnetischen Schwingkreises 142 mit einem ersten Pin 220_1 (z.B. Pin E) des Microcontrollers 144 verbunden sein kann.

Abstimmkondensatoren 202_1 und 202_2 können über steuerbare Schalter in Reihe zwischen dem ersten Anschluss 212 des elektromagnetischen Schwingkreises 142 und dem Bezugspotential 214 geschaltet werden, um den elektromagnetischen Schwingkreis 142 abzustimmen. Die steuerbaren Schalter können beispielsweise über Pins 220_2 und 220_3 (z.B. Pins B und D) des Microcontrollers 144 gesteuert werden.

Mit anderen Worten, in Fig. 9 ist ein beispielhafter Aufbau eines Schwingkreises 142 mit der Möglichkeit zur Abstimmung dargestellt. Der Schwingkreis 142 weist eine oder mehrere Spulen 204 und einen oder mehrere Kondensatoren 206 auf. Zur Abstimmung werden üblicherweise weitere Kondensatoren 202_1 und 202_2 oder Spulen in den Schwingkreis 142 geschaltet. Dies geschieht in der Regel über elektronische Schalter, zum Beispiel Transistoren. Diese werden zum Beispiel über die Ausgänge des Microcontrollers 144 geschaltet.

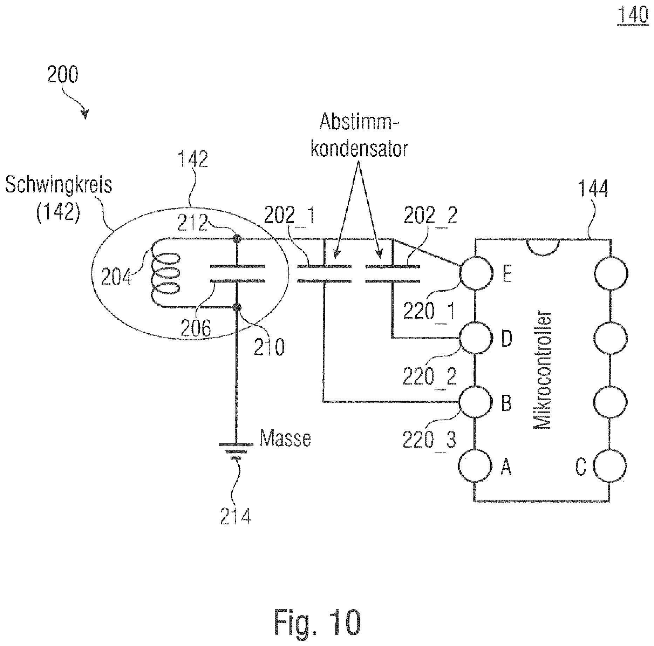

Fig. 10 zeigt ein schematisches Blockschaltbild des anderen Geräts 140, gemäß einem Ausführungsbeispiel der vorliegenden Erfindung. Das andere Gerät 140 umfasst den Microcontroller 144 und die Konfigurationsschnittstelle 200 mit dem elektromagnetischen Schwingkreis 142.

Der elektromagnetische Schwingkreis 142 kann eine erste Spule 204 und einen ersten Kondensator 206 aufweisen, die parallel geschaltet sein können zwischen einem ersten Anschluss 210 und einem zweiten Anschluss 212 des elektromagnetischen Schwingkreises 142.

Der erste Anschluss 210 des elektromagnetischen Schwingkreises 142 kann auf ein Bezugspotential 214 (z.B. Masse) geschaltet sein, wobei ein zweiter Anschluss 212 des elektromagnetischen Schwingkreises 142 mit einem ersten Pin 220_1 (z.B. Pin E) des Microcontrollers 144 verbunden sein kann, so dass der elektromagnetische Schwingkreis 142 in Reihe zwischen dem ersten Pin (z.B. Pin E) des Microcontrollers 142 und einem Bezugspotentialanschluss 214 (z.B. Masseanschluss) geschaltet ist.

Ein erster Abstimmkondensator 202_1 kann zwischen dem zweiten Anschluss 212 des elektromagnetischen Schwingkreises 142 und einem zweiten Pin 220_2 (z.B. Pin D) des Microcontrollers 144 geschaltet sein, wobei ein zweiter Abstimmkondensator 202_2 zwischen dem zweiten Anschluss 212 des elektromagnetischen Schwingkreises 142 und einem dritten Pin 220_3 (z.B. Pin B) des Microcontrollers 144 geschaltet sein kann.

Der Microcontroller 144 kann dabei konfiguriert sein, um den ersten Pin 220_1 (z.B. Pin D) und den zweiten Pin 220_2 (z.B. Pin B) jeweils auf einen aus mehreren unterschiedlichen Betriebsmodi zu schalten, um den elektromagnetischen Schwingkreis 142 abzustimmen.

Beispielsweise kann der Microcontroller 144 konfiguriert sein, um den elektromagnetischen Schwingkreis 142 durch Schalten des ersten Pins 220_1 (z.B. Pin D) und des zweiten Pins 220_2 (z.B. Pin B) jeweils auf einen aus folgenden unterschiedlichen Betriebsmodi abzustimmen:
- einem hochohmigen Eingangsmodus, und
- einem Ausgangsmodus, in dem an dem jeweiligen Pin ein Bezugspotential (z.B. Masse) bereitgestellt wird.

Mit anderen Worten, in Fig. 10 ist ein Schwingkreis 142 dargestellt, der die gleichen Komponenten wie der in Fig. 9 gezeigte Schwingkreis 142 aufgebaut ist. Es werden allerdings keine externen Schalter benötigt.

Das funktioniert, indem elektronische Schalter die Kondensatoren 202_1 und 202_2 zwischen Hochohmig und Verbindung zur Masse umschalten. Dies ist auch mit jedem Microcontroller-Pin möglich. Ist dieser als Eingang (Input) konfiguriert, so ist er hochohmig. Wenn er als Ausgang (Output) konfiguriert ist, verbindet er den Kondensator mit Vcc oder Masse.

Ausführungsbeispiele haben den Vorteil, dass keine externen elektronischen Schalter benötigt werden.

Ausführungsbeispiele haben den Vorteil, dass mehr Abstimmzustände als Kondensatoren und Schalter erreicht werden können.

Bei Ausführungsbeispielen können Abstimmkondensatoren 202_1 und 202_2 direkt mit dem Microcontroller 144 verbunden sein.

Bei Ausführungsbeispielen können die Abstimmkondensatoren 202_1 und 202_2 (auf Masse) geschaltet werden durch Setzen der Microkontroller-Pins auf Eingang bzw. Ausgang.

### 2.2 Abstimmung durch Spannungsabhängigkeit von Kondensatoren

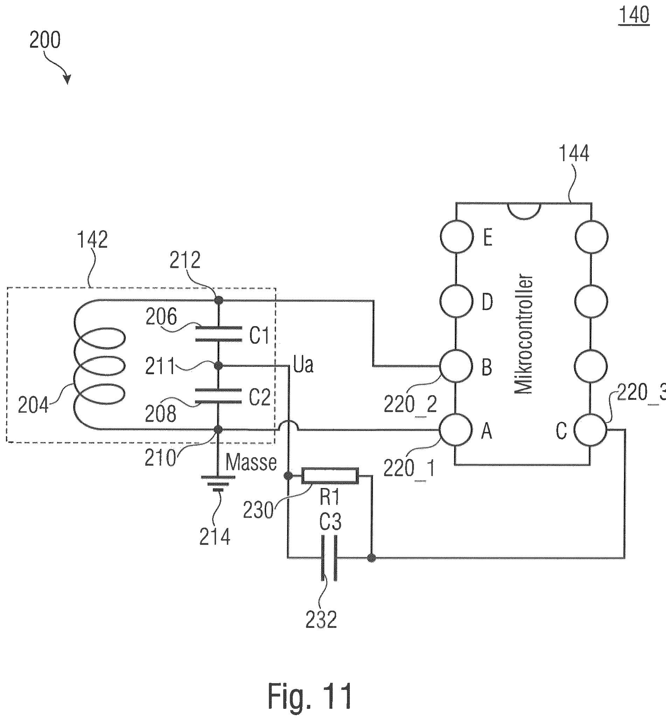

Um Schwingkreise 142 aktiv abzustimmen, sind aus der Literatur [12] Kapazitätsdioden bekannt. Diese kosten allerdings relativ viel. Durch die Ausnutzung des parasitären Effektes der Spannungsabhängigkeit günstiger Kondensatoren [13], [14] kann mit einfachen Mitteln eine Abstimmung über die Spannung Ua, wie in Fig. 11 dargestellt, erfolgen.

Fig. 11 zeigt ein schematisches Blockschaltbild des anderen Geräts 140, gemäß einem weiteren Ausführungsbeispiel der vorliegenden Erfindung. Das andere Gerät 140 umfasst den Microcontroller 144 und die Konfigurationsschnittstelle 200 mit dem elektromagnetischen Schwingkreis 142.

Der elektromagnetische Schwingkreis 142 kann eine erste Spule 204 und zwei in Reihe geschaltete Kondensatoren 206 und 208 (z.B. einen ersten Kondensator 206 (z.B. C1) und einen zweiten Kondensator 208 (z.B. C2)) aufweisen. Die erste Spule 204 und die zwei in Reihe geschaltete Kondensatoren 206 und 208 können parallel geschaltet sein zwischen einem ersten Anschluss 210 und einem zweiten Anschluss 212 des elektromagnetischen Schwingkreises 142.

Der erste Anschluss 210 des elektromagnetischen Schwingkreises 142 kann mit einem ersten Pin 220_1 (z.B. Pin A) des Microcontrollers 144 verbunden sein kann, wobei ein zweiter Anschluss 212 des elektromagnetischen Schwingkreises 142 mit einem zweiten Pin 220_2 (z.B. Pin B) des Microcontrollers 144 verbunden sein kann, so dass der elektromagnetische Schwingkreis 142 in Reihe zwischen dem ersten Pin 220_1 (z.B. Pin A) des Microcontrollers 142 und dem zweiten Pin 220_2 (z.B. Pin B) des Microcontrollers 144 geschaltet sein kann. Der erste Anschluss 210 des elektromagnetischen Schwingkreises 142 kann ferner mit einem Bezugspotentialanschluss 214 (z.B. Masseanschluss) verbunden sein.

Ein Anschluss 211 zwischen den zwei in Reihe geschalteten Kondensatoren 206 und 208 (z.B. C1 und C2) kann mit einem dritten Pin 220__3 (z.B. Pin C) des Microcontrollers 144 verbunden sein. Beispielsweise kann der Anschluss 211 zwischen den zwei in Reihe geschalteten Kondensatoren 206 und 208 (z.B. C1 und C2), wie in Fig. 11 zu erkennen ist, über einen ersten Widerstand 230 (z.B. R1) und einem zu dem ersten Widerstand 230 (z.B. R1) parallel geschalteten dritten Kondensator 232 (z.B. C3) mit dem dritten Pin 220_3 (z.B. Pin C) des Microcontrollers verbunden sein. Alternativ kann der der Anschluss 211 zwischen den zwei in Reihe geschalteten Kondensatoren 206 und 208 (z.B. C1 und C2) auch nur über den ersten Widerstand 230 (z.B. R1) mit dem dritten Pin 220_3 (z.B. Pin C) des Microcontrollers verbunden sein.

Bei dem in Fig. 11 gezeigtem Ausführungsbeispiel kann eine Spannungsabhängigkeit der Kapazitäten der zwei in Reihe geschalteten Kondensatoren 206 und 208 (z.B. C1 und C2) als das zumindest eine Abstimmelement verwendet werden.

Dementsprechend kann der Microcontroller 144 konfiguriert sein, um den dritten Pin 220_3 (z.B. Pin C) auf einen aus mehreren unterschiedlichen Betriebsmodi zu schalten, um den elektromagnetischen Schwingkreis 142 abzustimmen.

Beispielsweise kann der Microcontroller 144 konfiguriert sein, um den elektromagnetischen Schwingkreis 142 abzustimmen durch
- Schalten des dritten Pins 220_3 (z.B. Pin C) von einem Ausgangsmodus, in dem an dem jeweiligen Pin ein Bezugspotential (z.B. Masse) bereitgestellt wird, auf einen Pull-up Eingangsmodus oder einen Ausgangsmodus, in dem an dem jeweiligen Pin ein Versorgungspotential bereitgestellt wird, für eine definierte Zeit T, und
- Schalten des dritten Pins, nach der definierten Zeit T, in einen hochohmigen Eingangsmodus.

Der Microcontroller 144 kann dabei konfiguriert sein, um die definierte Zeit T adaptiv anzupassen (z.B. in Abhängigkeit von einer Soll-Resonanzfrequenz des elektromagnetischen Schwingkreises 142 oder einer Trägerfrequenz des magnetischen Signals 130), um den elektromagnetischen Schwingkreis 142 abzustimmen.

Bei Ausführungsbeispielen kann das andere Gerät 140 umschaltbar sein zwischen unterschiedlichen Betriebsmodi, wie z.B. einem (normalen) Empfangsmodus und einem Sendemodus.

Der Microcontroller 144 kann dabei konfiguriert sein, um in dem Empfangsmodus den elektromagnetischen Schwingkreis 142 vor dem Detektieren des magnetischen Signals 130 abzustimmen, und um nach dem Abstimmen des elektromagnetischen Schwingkreises 142 das magnetische Signal 130 mit dem elektromagnetischen Schwingkreis 142 zu detektieren.

Ferner kann der Microcontroller 144 konfiguriert sein, um in dem Empfangsmodus den ersten Pin 220_1 (z.B. Pin A) und den zweiten Pin 220_2 (z.B. Pin B) auf einen Komparator-Eingangsmodus zu schalten, um das von dem elektromagnetischen Schwingkreis bereitgestellte Signal (Empfangssignal) auszuwerten.

In dem Sendemodus kann der Microcontroller 144 den dritten Pin 220_2 (z.B. Pin C) auf einen PWM Ausgangsmodus schalten, in dem an dem jeweiligen Pin ein PWM Signal bereitgestellt wird, um ein magnetisches Signal 132 mit dem elektromagnetischen Schwingkreis 142 zu erzeugen.

Der Microcontroller kann dabei konfiguriert sein, um in dem Sendemodus den elektromagnetischen Schwingkreis 142 durch Einstellen eines Pulsweitenverhältnis des PWM

Signals abzustimmen, und um die von dem anderen Gerät 140 zu übertragenen Daten durch eine Änderung einer Pulsdauer des PWM Signals zu modulieren.

Mit anderen Worten, Fig. 11 zeigt einen Schaltplan eines Schwingkreis 142 mit der Möglichkeit zur Abstimmung über parasitäre Effekte der Kondensatoren 206 und 208 (z.B. C1 und C2). Die Kondensatoren 206 und 208 (z.B. C1 und C2) können sinnvollerweise gleich groß gewählt werden. Wird nun zwischen den Kondensatoren 206 und 208 eine Spannung Ua ungleich 0 V angelegt, so sinkt, bedingt durch die negativen Kapazitätskoeffizienten bei steigender Spannung Ua, die Kapazität beider Kondensatoren 206 und 208 und die Resonanzfrequenz des elektromagnetischen Schwingkreises steigt.

Die Spannung Ua kann wie im Folgenden beschrieben wird eingestellt werden. Vor einem Wechsel in einen Energiesparmodus (siehe Abschnitt 1) wird der dritte Pin 220_3 (z.B. Pin C) auf Masse gesetzt. Nach einem Wechsel in den Empfangsmodus wird für eine definierte Zeit T am dritten Pin 220_3 (z.B. Pin C) eine positive Spannung Ua ausgegeben. Die Kondensatoren 206 und 208 (z.B. C1 und C2) laden sich entsprechend der e-Funktion der Kondensatorladekurve auf. Nach der Zeit T wird der dritte Pin 220_3 (z.B. Pin Pin C) auf Eingang (also hochohmig) geschaltet. Damit halten die Kondensatoren 206 und 208 (z.B. C1 und C2) für eine gewisse Zeit die eingestellte Spannung Ua. Es ist weiterhin möglich, einen dritten Kondensator 232 (z.B. C3) mit einzubringen. Dieser kann zusätzlich zum Laden über den ersten Widerstand 230 (z.B. R1) noch für eine Pulsweitenmodulation (PWM) verwendet werden. Der zusätzliche Ladeeffekt von den Kondensatoren 206 und 208 (z.B. C1 und C2) kann von dem dritten Kondensator 232 (z.B. C3) kompensiert werden, wenn, bevor der dritte Pin 220_3 (z.B. Pin C) auf Eingang (also hochohmig) geschaltet wird, nochmals kurz auf Spannung 0 V geschaltet wird.

Die optimale Spannung Ua kann durch eine Messung der Resonanzfrequenz (Methode siehe Abschnitt 2.5) bestimmt werden. Durch Vermessen der Resonanzfrequenz bei der Einstellung Ua = 0 und Ua = Vcc (Versorgungsspannung des Microcontrollers) kann der Abstimmbereich und damit durch Interpolation die korrekte benötigte Abstimmspannung ermittelt werden.

Durch eine zusätzliche Messung der Resonanzfrequenz bei einer definierten Zeit T kann die Abstimmspannung Ua genauer ermittelt werden. Beispielsweise kann bei Verwendung des Pull-up-Eingangsmodus für den dritten Pin 220_3 bei Kenntnis der Größe von den zwei in Reihe geschaltete Kondensatoren 206 und 208 (z.B. C1 und C2) der Pull-up-Strom ermittelt werden und somit die Zeit T zum Erreichen einer gewissen Spannung Ua berechnet werden.

Ausführungsbeispiele haben den Vorteil eines geringen Preises.

Bei Ausführungsbeispielen kann die Spannungsabhängigkeit von herkömmlichen Kondensatoren (z.B. zur Abstimmung des elektromagnetischen Schwingkreises) ausgenutzt werden.

Bei Ausführungsbeispielen kann zweimal der gleiche Kondensator verwendet werden, wobei die Spannung Ua am Mittelpunkt angelegt wird und die anderen Seiten auf Masse geschaltet werden.

Bei Ausführungsbeispielen kann die Spannung Ua am Kondensator gesetzt werden durch Laden für gewisse Zeit, z.B. über einen mit dem dritten Pin 220_3 (z.B. Pin C) verbundenen ersten Widerstand 230 (z.B. R1).

Bei Ausführungsbeispielen kann ein Pin eingespart werden durch zusätzliche Nutzung des Lade-Pins als PWM-Pin,

Bei Ausführungsbeispielen kann der optimale Abstimmpunkte / Abstimmbereich durch Messung der Resonanzfrequenz bei verschiedenen Einstellungen der Spannung Ua ermittelt werden.

### 2.3 BIAS Einstellung für den Sendefall

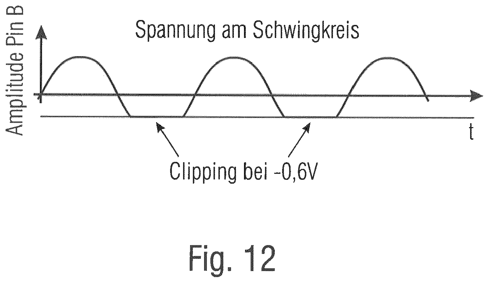

Bei der Schaltung nach Fig. 11 sind die Pins 220_1 und 220_2 (z.B. Pins A und B) Komparatoreingänge (siehe Abschnitt 1.3). Die Schaltung arbeitet gut für geringe Sendeleistungen mit Spannungen am Schwingkreis 142 und damit am zweiten Pin 220_2 (z.B. Pin B) von bis zu 0,6 V. Wird die Amplitude der Schwingung größer, kommt es zu einem in Fig. 12 dargestellten Clipping-Effekt.

Im Detail zeigt Fig. 12 in einem Diagramm einen Verlauf der Spannung am zweiten Pin 220_2 (z.B. Pin B) des Microcontrollers 144 bei einer Amplitude von mehr als 0,6 V, aufgetragen über die Zeit.

Die Ursache dieses Effektes ist die Eingangsschutzbeschaltung von sämtlichen digitalen Bausteinen, insbesondere von Microcontrollern (siehe [15]).

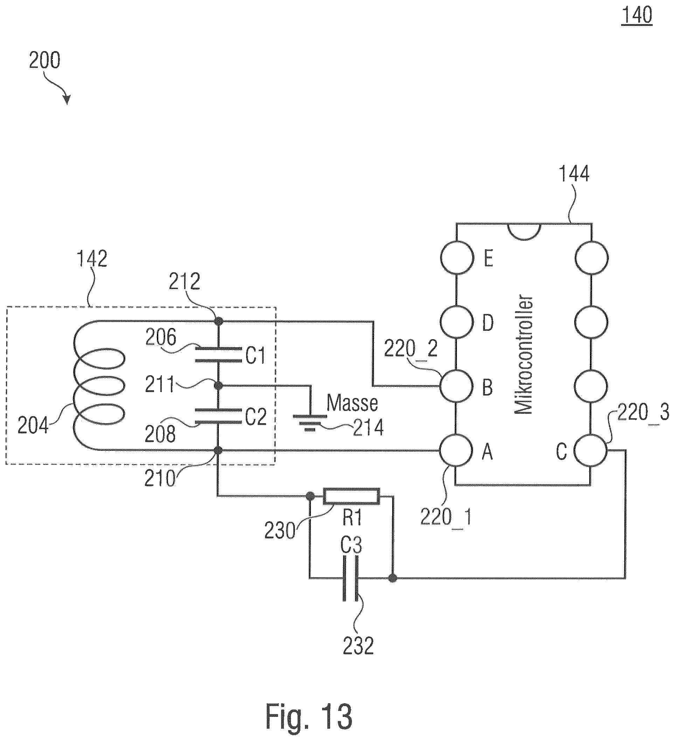

Spannungen unter ca. - 0,6 V führen zum Leiten der Diode. Die Schaltung in Fig. 13 vermeidet diesen Effekt.

Im Detail zeigt Fig. 13 ein schematisches Blockschaltbild des anderen Geräts 140, gemäß einem weiteren Ausführungsbeispiel der vorliegenden Erfindung. Das andere Gerät 140 umfasst den Microcontroller 144 und die Konfigurationsschnittstelle 200 mit dem elektromagnetischen Schwingkreis 142.

Der elektromagnetische Schwingkreis 142 kann eine erste Spule 204 und zwei in Reihe geschaltete Kondensatoren 206 und 208 (z.B. einen ersten Kondensator 206 (z.B. C1) und einen zweiten Kondensator 208 (z.B. C2)) aufweisen. Die erste Spule 204 und die zwei in Reihe geschaltete Kondensatoren 206 und 208 können parallel geschaltet sein zwischen einem ersten Anschluss 210 und einem zweiten Anschluss 212 des elektromagnetischen Schwingkreises 142.

Der erste Anschluss 210 des elektromagnetischen Schwingkreises 142 kann mit einem ersten Pin 220_1 (z.B. Pin A) des Microcontrollers 144 verbunden sein kann, wobei ein zweiter Anschluss 212 des elektromagnetischen Schwingkreises 142 mit einem zweiten Pin 220_2 (z.B. Pin B) des Microcontrollers 144 verbunden sein kann, so dass der elektromagnetische Schwingkreis 142 in Reihe zwischen dem ersten Pin 220_1 (z.B. Pin A) des Microcontrollers 142 und dem zweiten Pin 220_2 (z.B. Pin B) des Microcontrollers 144 geschaltet sein kann. Ein Anschluss 211 zwischen den zwei in Reihe geschalteten Kondensatoren 206 und 208 (z.B. C1 und C2) kann mit einem Bezugspotentialanschluss 214 (z.B. Masseanschluss) verbunden sein.

Ferner kann der erste Anschluss 21 0 des elektromagnetischen Schwingkreises 142 mit einem dritten Pin (z.B. Pin C) 220_3 des Microcontrollers 144 verbunden sein. Beispielsweise kann der erste Anschluss 210, wie dies in Fig. 13 gezeigt ist, über einen ersten Widerstand 230 (z.B. R1) und einem zu dem ersten Widerstand 230 (z.B. R1) parallel geschalteten dritten Kondensator 232 (z.B. C3) mit dem dritten Pin 220_3 (z.B. Pin C) des Microcontrollers 144 verbunden sein. Alternativ kann der der Anschluss 211 zwischen den zwei in Reihe geschalteten Kondensatoren 206 und 208 (z.B. C1 und C2) auch nur über den ersten Widerstand 230 (z.B. R1) mit dem dritten Pin 220_3 (z.B. Pin C) des Microcontrollers verbunden sein.

Bei dem in Fig. 13 gezeigtem Ausführungsbeispiel kann der Microcontroller 144 konfiguriert sein, um vor dem Erzeugen eines magnetischen Signals mit dem elektromagnetischen

Schwingkreis die zwei in Reihe geschalteten Kondensatoren 206 und 208 (z.B. C1 und C2) aufzuladen (z.B. auf jeweils das halbe Versorgungspotential; z.B. Vcc/2) durch
- Schalten des dritten Pins 220_3 auf einen Ausgangsmodus, in dem an dem jeweiligen Pin ein Versorgungspotential bereitgestellt wird, für eine definierte Ladezeit T_{L}, und
- Schalten des dritten Pins, nach der definierten Ladezeit T_{L}, auf einen hochohmigen Eingangsmodus.

Der Microcontroller kann ferner konfiguriert sein, um nach dem Aufladen der zwei in Reihe geschalteten Kondensatoren 206 und 208 (z.B. C1 und C2) das magnetische Signal 132 mit dem elektromagnetischen Schwingkreis 142 zu erzeugen. Hierzu kann der dritte Pin 220_3 (z.B. Pin C) des Microcontrollers 144 in einen PWM Ausgangsmodus geschaltet werden, um das magnetische Signal 132 mit dem elektromagnetischen Schwingkreis 142 zu erzeugen.

Mit anderen Worten, Fig. 13 zeigt eine Schaltung, die den Clipping-Effekt umgeht. Durch ein gezieltes Laden der zwei in Reihe geschalteten Kondensatoren 206 und 208 (z.B. C1 und C2) des elektromagnetischen Schwingkreises 142 vor dem Senden wird eine geeignete BIAS-Spannung von etwa der halben Versorgungsspannung am ersten Kondensator 206 (z.B. C1) bzw. am zweiten Pin 220_2 (z.B. Pin B) gleich der Spannung am zweiten Kondensator 208 (z.B. C2) bzw. am dritten Pin (z.B. Pin C) eingestellt.

Damit erhöht sich der mögliche clipping-freie Bereich der Schwingungsamplitude von 0,6 V auf 0,6 V + Vcc/2.

Die in Fig. 13 gezeigte Schaltung arbeitet auch ohne gezielte Voreinstellung des BIAS. Kommt es beim Senden zu einem Clipping-Effekt, da die Schutzdiode leitet, so wird dadurch Ladung auf die zwei in Reihe geschalteten Kondensatoren 206 und 208 (z.B. C1 und C2) aufgebracht und es wird sich ein geeigneter BIAS einstellen.

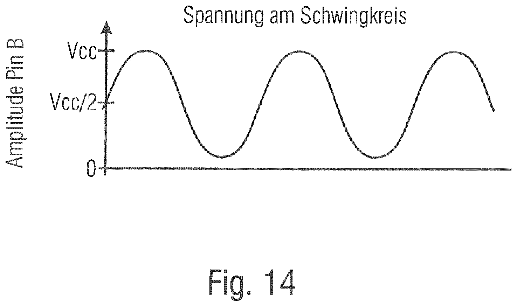

Fig. 14 zeigt in einem Diagramm einen Verlauf der Spannung am zweiten Pin 220_2 (z.B. Pin B) des Microcontrollers 144 bei einer Amplitude von mehr als 0,6 V, aufgetragen über die Zeit.

Wie in Fig. 14 zu erkennen ist, ist ein Senden ohne Clipping-Effekt bei Spannungen bis Vcc/2 + 0,6 V. Das in Fig. 13 gezeigte Ausführungsbeispiel ermöglich somit eine erhöhte Schwingungsamplitude und damit eine höhere Reichweite im Sendefall.

Natürlich kann die in Fig. 13 gezeigte Schaltung nicht nur zum Erzeugen eines magnetischen Signals 132 (Sendemodus) sondern auch zum detektieren eines magnetischen Signals 130 (Empfangsmodus) verwendet werden.

Im Empfangsmodus sollte der elektromagnetische Schwingkreis 142 bevorzugt abgestimmt sein.

Hierzu kann, wie bereits in Bezug auf Abschnitt 2.2 beschrieben wurde, die Spannungsabhängigkeit der Kapazitäten der zwei in Reihe geschalteten Kondensatoren 206 und 208 (z.B. C1 und C2) als das zumindest eine Abstimmelement verwendet werden. Beispielsweise kann der Microcontroller 144 also konfiguriert sein, um im Empfangsmodus vor dem Detektieren des magnetischen Signals 130 mit dem elektromagnetischen Schwingkreis 142 den elektromagnetischen Schwingreis 142 abzustimmen durch Schalten des dritten Pins 220_3 (z.B. Pin C) auf einen auf einen aus mehreren unterschiedlichen Betriebsmodi, wie zum Beispiel durch
- Schalten des dritten Pins von einem Ausgangsmodus, in dem an dem jeweiligen Pin ein Bezugspotential (z.B. Masse) bereitgestellt wird, auf einen Pull-up-Eingangsmodus oder einen Ausgangsmodus, in dem an dem jeweiligen Pin ein Versorgungspotential bereitgestellt wird, für eine definierte Zeit T, und
- Schalten des dritten Pins, nach der definierten Zeit T, in einen hochohmigen Eingangsmodus.

Alternativ oder zusätzlich können auch die Abstimmkondensatoren 202_1 und 202_2 aus Abschnitt 1.2 zur Abstimmung des elektromagnetischen Schwingkreises 142 verwendet werden, welche eine Abstimmung sowohl für den Sendemodus als auch für den Empfangsmodus ermöglichen.

### 2.4 Optimierte Empfängerschaltung ohne Komparatoreingang

Manche Microcontroller verfügen über keinen Komparatoreingang. Aus Kostengründen ist eine einfache Schaltung, die folgende Fähigkeiten bietet, wünschenswert:
- Abstimmung der Resonanzfrequenz,
- Empfang magnetischer Signale im Frequenzbereich Ultraschall,
- Senden magnetischer Signale im Frequenzbereich Ultraschall, und
- Energiesparmodus mit optimiertem Stromverbrauch, falls nicht empfangen oder gesendet wird.

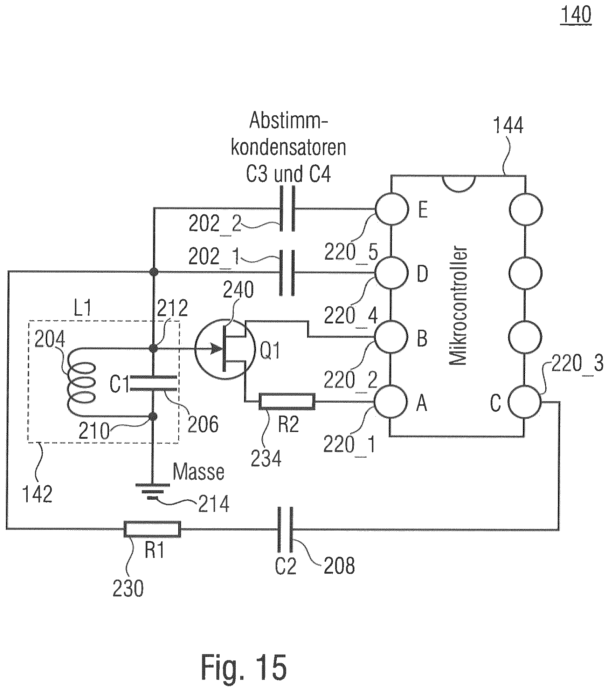

Im Folgenden wird anhand von Fig. 15 eine Schaltung beschrieben, die die obigen Fähigkeiten aufweist.

Im Detail zeigt Fig. 15 ein schematisches Blockschaltbild des anderen Geräts 140, gemäß einem weiteren Ausführungsbeispiel der vorliegenden Erfindung. Das andere Gerät 140 umfasst den Microcontroller 144 und die Konfigurationsschnittstelle 200 mit dem elektromagnetischen Schwingkreis 142.

Der elektromagnetische Schwingkreis 142 kann eine erste Spule 204 (z.B. L1) und einen ersten Kondensator 206 (z.B. C1) aufweisen. Die erste Spule 204 und der erste Kondensator 206 können parallel geschaltet sein zwischen einem ersten Anschluss 210 und einem zweiten Anschluss 212 des elektromagnetischen Schwingkreises 142.

Der erste Anschluss des elektromagnetischen Schwingkreises 142 kann mit einem Bezugspotentialanschluss 214 (z.B. Masseanschluss) verbunden sein, wobei der zweite Anschluss 212 des elektromagnetischen Schwingkreises 142 (z.B. direkt) mit einem Gate eines Transistors 240 (z.B. ECM Transistors (ECM = electret condenser microphone, dt. Elektret-Kondensatormikrofon)) verbunden sein kann, dessen Drain-Anschluss direkt mit einem zweiten Pin 220_2 (z.B. Pin B) des Microcontrollers 144 verbunden ist. Der Source-Anschluss des Transistors 240 kann mit einem ersten Pin 220_1 (z.B. Pin A) des Microcontrollers 144 verbunden sein.

Wie bereits in Abschnitt 1 erwähnt wurde kann das andere Gerät in unterschiedlichen Betriebsmodi betrieben werden. Im Detail einem Energiesparmodus, einem (periodischen) Aufwachmodus (z.B. Peeking-Modus), in dem überprüft wird, ob ein magnetisches Signal mit einer Aufwachsequenz empfangen wird, einem normalen Empfangsmodus.

Bei Ausführungsbeispielen kann der Microcontroller 144 konfiguriert sein, um nur in Wachphasen des (z.B. periodischen) Aufwachmodus den zweiten Pin 220_2 (z.B. Pin B) auf einen Pull-up-Eingangsmodus zu schalten (z.B. und sonst in den hochohmigen Eingangsmodus zu schalten), um den Energieverbrauch möglichst gering zu halten. Die Stromversorgung des Transistors 240 erfolgt somit über den Strom, der vom Microcontroller 144 durch die Pull-up-Stromquelle geliefert wird. Der erste Pin 220_1 (z.B. Pin C) kann hierbei auf ein Ausgangsmodus geschaltet werden, in dem an dem jeweiligen Pin ein Bezugspotential (z.B. Masse) bereitgestellt wird.

Ferner kann der Microcontroller konfiguriert ist, um in einem normalen Empfangsmodus den zweiten Pin 220_2 (z.B. Pin B) auf einen Pull-up-Eingangsmodus zu schalten. Der erste Pin 220_1 (z.B. Pin C) kann hierbei auf ein Ausgangsmodus geschaltet werden, in dem an dem jeweiligen Pin ein Bezugspotential (z.B. Masse) bereitgestellt wird.

In dem Energiesparmodus kann der Microcontroller 144 den zweiten Pin 220_2 (z.B. Pin B) auf einen hochohmigen Eingangsmodus schalten.

Der zweite Pin 220_2 (z.B. Pin B) wird also nur in Wachphasen des Aufwachmodus und im normalen Empfangsmodus auf den Pull-up-Eingangsmodus geschaltet und ansonsten auf einen hochohmigen Eingangsmodus, um Energie zu sparen.

Natürlich kann die in Fig. 15 gezeigte Schaltung auch zum Erzeugen eines magnetischen Signals genutzt werden.

Hierzu kann der zweite Anschluss 212 des elektromagnetischen Schwingkreises 142, wie in Fig. 15 gezeigt ist, über eine Reihenschaltung aus einem ersten Widerstand (z.B. R1) und einem zweiten Kondensator 208 (z.B. C2) mit einem dritten Pin 220_3 (z.B. Pin C) des Microcontrollers 144 verbunden sein. Alternativ kann der zweite Anschluss 212 des elektromagnetischen Schwingkreises 142 auch nur über den zweiten Kondensator 208 (z.B. C2) mit dem dritten Pin 220_3 (z.B. Pin C) des Microcontrollers 144 verbunden sein.

Der Microcontroller 144 kann dabei konfiguriert sein, um in den Sendemodus den dritten Pin 220_3 (z.B. Pin C) auf einen PWM Ausgangsmodus zu schalten. Beispielsweise kann der dritte Pin 220_3 (z.B. Pin C) ein PWM Pin sein oder ein Eingangs-/Ausgangs-Pin, der im PWM Ausgangsmodus zwischen einem Versorgungspotential (z.B. Vcc) und Bezugspotential (z.B. Masse) umgeschaltet wird.

Wie bereits erwähnt wurde, sollte der elektromagnetische Schwingkreis 142 im Empfangsmodus (und auch im (periodischen) Aufwachmodus) bevorzugt abgestimmt sein.

Als Abstimmelement kann im Empfangsmodus (und auch im (periodischen) Aufwachmodus) beispielsweise der zweite Kondensator 208 (z.B. C2) verwendet werden. Im Detail kann der Microcontroller 144 konfiguriert sein, um in dem normalen Empfangsmodus (und auch im (periodischen) Aufwachmodus) den elektromagnetischen Schwingkreis 142 durch Schalten des dritten Pins 220_3 (z.B. Pin C) auf einen aus folgenden unterschiedlichen Betriebsmodi abzustimmen:
- einem hochohmigen Eingangsmodus, und
- einem Ausgangsmodus, in dem an dem jeweiligen Pin ein Bezugspotential (z.B. Masse) bereitgestellt wird.

Alternativ oder zusätzlich können auch die Abstimmkondensatoren 202_1 und 202_2 aus Abschnitt 1.2 zur Abstimmung des elektromagnetischen Schwingkreises 142 verwendet werden, welche eine Abstimmung sowohl für den Sendemodus als auch für den Empfangsmodus ermöglichen. Im Detail kann ein dritter Kondensator 202_1 in Reihe zwischen dem zweiten Anschluss 212 des elektromagnetischen Schwingkreises 142 und einem vierten Pin 220_4 (z.B. Pin D) des Microcontrollers 144 und ein vierter Kondensator 202_2 in Reihe zwischen dem zweiten Anschluss 212 des elektromagnetischen Schwingkreises 142 und einem fünften Pin 220_5 (z.B. Pin E) des Microcontrollers 144 geschaltet sein, wobei der Microcontroller 144 konfiguriert sein kann, um den elektromagnetischen Schwingkreis 142 durch Schalten des vierten Pins 220_4 (z.B. Pin D9 und des fünften Pins 220_5 (z.B. Pin E) jeweils auf einen aus folgenden unterschiedlichen Betriebsmodi abzustimmen:
- einem hochohmigen Eingangsmodus, und
- einem Ausgangsmodus, in dem an dem jeweiligen Pin ein Bezugspotential (z.B. Masse) bereitgestellt wird.

Mit anderen Worten, Fig. 15 zeigt optimierte Schaltung für RX- und TX-Abstimmung. Diese kann bei Microcontrollern ohne Komparatoren eingesetzt werden. Der zweite Pin 220_2 (z.B. Pin B) ist ein Eingang, bevorzug eines Aufnahmefähigen Timers (d.h. Timer mit Aufnahme-Funktion, engl. capture function). Der dritte Pin 220_3 (z.B. Pin C) kann auf Eingang (also hochohmig) oder auf Ausgang mit niedrigem Pegel geschaltet werden.

### 2.4.1 ECM Transistor / BIAS

Kern der Schaltung bildet ein sog. ECM-Transistor 240 (Q1, N-Kanal JFet, z.B. 2SK3230). Diese Art von Transistoren sind speziell für den Betrieb sog. Elektret-Mikrofone entwickelt. Es handelt sich dabei um JFETs, die üblicherweise bei 0 V Gate-Spannung betrieben werden. Dadurch kann der erste Anschluss 210 des elektromagnetischen Schwingkreises 142 direkt auf Masse 214 geschaltet werden, wobei der zweite Anschluss 212 des elektromagnetischen Schwingkreises 142 direkt mit dem Gate des ECM Transistors 240 verbunden sein kann. Dadurch, dass keine BIAS-Spannung benötigt wird, ist auch ein effizienter Betrieb in einem sog. Aufwachmodus mit Peeking (dt. spähen, lauschen) möglich. Dabei wacht der Microcontroller 144 periodisch auf und überprüft, ob ein Signal vorhanden ist. Würde eine BIAS-Spannung benötigt, so kann diese bevorzugt stabilisiert werden. Dazu werden Kondensatoren eingesetzt. Wird die BIAS-Spannung, um im Energiesparmodus Strom zu sparen, abgeschaltet, so wird nach dem Aufwachen einige Zeit benötigt, bis sich die BIAS-Spannung wieder auf einen Betriebswert eingepegelt hat. Dieses erhöht den Stromverbrauch, da der Microcontroller 144 länger wach sein muss.

Bei Ausführungsbeispielen kann ein ECM-Transistor, z.B. 2SK3230, verwendet werden, dessen Gate direkt mit einem elektromagnetischen Schwingkreis 142 (Resonanzfrequenz im Ultraschallbereich) verbunden sein, dessen zweiter Anschluss an Masse geht.

Bei Ausführungsbeispielen kann der Transistor in einem Peeking-Betrieb ohne zusätzliche BIAS-Spannung betrieben werden.

### 2.4.2 Versorgung des Transistors über einen Pull-up-Ausgang des Microcontrollers

Um Bauteile zu sparen und um eine möglichst große Verstärkung des ECM-Transistors 240 zu erzielen, kann das Drain des Transistors 240 direkt mit einem Eingangs-Pin (zweiter Pin 220_2 (z.B. Pin B) des Microcontrollers 144 verbunden sein. Dieser Pin kann während des Empfangszyklus auf einen Pull-up-Eingangsmodus geschaltet werden. In diesem Betriebsmodus schaltet der Microcontroller 144 den jeweiligen Pin als Eingang und schaltet eine Stromquelle mit geringem Strom mit Pegel der Versorgungsspannung ein. Im Energiesparmodus kann der zweite Pin 220_2 (z.B. Pin B) auf einen hochohmigen Eingangsmodus (äquivalent zu High-Z, also der Pin ist offen) geschaltet werden. Dadurch fließt kein Versorgungsstrom und der Stromverbrauch wird optimiert.

Damit der Microcontroller-Eingang (zweiter Pin220_2 (z.B. Pin B)) bei möglichst geringen Pegeln am elektromagnetischen Schwingkreis 142 zwischen High bzw. Low umgeschaltet wird, sollte der Pegel am Eingang (zweiter Pin220_2 (z.B. Pin B)) des Microcontrollers 144, wenn kein Signal durch den elektromagnetischen Schwingkreis 142 empfangen wird, etwa in der Mitte der Versorgungsspannung liegen. Die ECM-Transistoren 240 verfügen üblicherweise über einen sog. RANK. Dieser gibt an, in welchem Bereich sich der Strom des Transistors bei 0 V Gate-Spannung befindet. Dieser RANK kann so gewählt werden, dass dieser im Bereich des Stromes der Stromquelle des Microcontrollers im Pull-up-Eingangsmodus liegt.

Bei Ausführungsbeispielen kann der ECM-Transistor 240 durch eine Pull-up-Stromquelle des Microcontrollers 144 versorgt werden.

Bei Ausführungsbeispielen kann die Pull-up-Stromquelle nur im Empfangsmodus eingeschaltet werden.

Bei Ausführungsbeispielen kann der ECM-Transistor durch den RANK passend zur Stromstärke der Pull-up-Stromquelle ausgewählt werden.

### 2.4.3 Doppelte Nutzung der Anbindung des PWM-Ausgangs

Um Bauteile und Platz zu sparen, kann der gleiche elektromagnetische Schwingkreis 142 (LC Schwingkreis) auch zum Senden verwendet werden. Dazu wird ein PWM-Ausgang (z.B. der dritte Pin 220_3 (z.B. Pin C)) über einen zweiten Kondensator 208 (z.B. C2) mit dem elektromagnetischen Schwingkreis 142 auf einer Seite verbunden (siehe auch Abschnitt 1). Über den zweiten Kondensator 208 (z.B. C2) erfolgt im Sendefall die Einkoppelung der Sendeenergie in den elektromagnetischen Schwingkreis 142. Die andere Seite des elektromagnetischen Schwingkreises 142 kann auf Masse gelegt werden. Bei genügend kleinem ersten Widertand 230 (z.B. R1) oder auch, falls der erste Widerstand 230 (z.B. R1) nicht vorhanden ist, kann der PWM-Ausgang (dritter Pin 220_3 (z.B. Pin C)) in dem Fall, in dem er nicht zum Senden verwendet wird, entweder offen (Eingang) oder auf Masse geschaltet werden (Ausgang). Dadurch ergibt sich die Möglichkeit, dass der zweite Kondensator 208 (z.B. C2) - zusätzlich zu seiner Funktion als Einkoppelkondensator für die Energie im Sendefall - als Abstimmkondensator im Empfangsfall dient.

Bei Ausführungsbeispielen kann der dritte Pin 220_3 (z.B. Pin C) des Microcontrollers drei Funktionen erhalten:
- PWM-Ausgang im Sendemodus,
- offen im Empfangsmodus, und
- geschlossen zur Abstimmung des elektromagnetischen Schwingkreises 142.

Bei Ausführungsbeispielen kann der zweite Kondensator 208 (z.B. C2) doppelt genutzt werden:
- Energieeinkoppelung in den elektromagnetischen Schwingkreis 142 im Sendemodus, und
- zum Abstimmen im Empfangsmodus.

### 2.4.4 Offen Schalten des Source Pins des ECM-Transistors

Wird der Source-Anschluss des Transistors 240 (z.B. Q1) direkt mit Masse verbunden, so würde sich eine ähnliche Problematik wie in Fig. 12 dargestellt ergeben: Alle ECM-FETs verfügen (prinzipbedingt bei JFET Transistoren) über einen PN-Übergang von Gate zu Drain und Source. Also wird im Sendebetrieb ab 0,6 V Spannung am elektromagnetischen Schwingkreis wieder Clipping auftreten.

Bei Ausführungsbeispielen kann daher der Source-Anschluss des Transistors 240 (z.B. ECM Transistors) direkt oder über einen zweiten Widerstand 234 (z.B. R2) mit einem ersten Pin 220_1 (z.B. Pin A) des Microcontrollers 144 verbunden sein, wobei der Microcontroller 144 konfiguriert sein kann, um in dem normalen Empfangsmodus oder in dem Aufwachmodus den ersten Pin 220_1 (z.B. Pin A) auf einen Ausgangsmodus zu schalten, in dem an dem jeweiligen Pin ein Bezugspotential (z.B. Masse) bereitgestellt wird, und um in dem Sendemodus den ersten Pin 220_1 (z.B. Pin A) auf einen hochohmigen Eingangsmodus zu schalten.

Mit anderen Worten, der Source-Anschluss des Transistors 240 (z.B. Q1) wird nicht mit Masse sondern direkt oder über einen Widerstand 234 mit einem ersten Pin 220_1 (z.B. Pin A) des Microcontrollers 144 verbunden, um den Clipping-Effekt zu verhindern. Vor dem Sendebetrieb schaltet nun der Microcontroller 144 den ersten Pin 220_1 (z.B. Pin A) auf Eingang, also auf hochohmig. Damit erhöht sich der mögliche clipping-freie Bereich, analog wie in Abschnitt 2.3, von 0,6 V Schwingungsamplitude auf 0,6 V + Vcc/2.

Bei Ausführungsbeispielen kann die Source des ECM-FETs 240 (durch Eingang/Ausgang-Umschaltung des Microcontrollers 144) im Sendefall hochohmig geschaltet werden und im Empfangsfall mit niedriger Impedanz auf einen niedrigen Pegel gelegt werden.

Bei Ausführungsbeispielen kann (z.B. zusätzlich) der mit dem Drain des Transistors 240 verbundene zweite Pin 220_2 (z.B. Pin B) im Empfangsfall auf einen Pull-up-Eingangsmodus und im Sendefall auf einen hochohmigen Eingangsmodus geschaltet werden.

### 2.5 Messung der Resonanzfrequenz

Wenn, wie in Abschnitt 2.1 beschrieben, der elektromagnetische Schwingkreis 142 angepasst werden soll, ist es von Vorteil die aktuelle Resonanzfrequenz zu bestimmen. Nach einmaligem Anregen des elektromagnetischen Schwingkreises 142 schwingt der elektromagnetische Schwingkreis 142 auf seiner Resonanzfrequenz weiter. Diese kann anschließend durch das Auswerten der Null-Durchgänge mithilfe eines Komparators (z.B. des Microcontrollers oder eines externen Komparators) oder mit der Schaltung mit dem ECM Transistor 240 ausgemessen werden. Dies kann über Schalten des angeschlossenen Microcontroller-PWM-Pins (z.B. des dritten Pins 220_3 (z.B. Pin C)) oder äquivalent durch die Aussendung einer Nachricht (z.B. Erzeugung des magnetischen Signals 132) erfolgen. Die Messung kann für jede Kombination an Abstimmkondensatoren durchgeführt werden, um die Schwingkreisfrequenz möglichst genau zu treffen.

Als Referenzfrequenz zur Messung der Resonanzfrequenz kann der verbaute Quarz auf dem anderen Gerät 140 dienen.

Es gibt zwei geschickte Möglichkeiten, wann eine solche Messung durchgeführt wird, ohne dadurch den Empfang einer anderen Nachricht (z.B. Detektion eines magnetischen Signals 130) zu stören:
1. Der Microcontroller 144 überprüft in regelmäßigen Zeitabständen (Peeking-Verfahren, siehe Abschnitt 1), ob ein Signal empfangen wird. Wird kein Signal empfangen, so erfolgt ab und zu eine Messung der Resonanzfrequenz durch Aussenden einer TestNachricht. Wird direkt nach dem Messvorgang ein Signal detektiert, so wird die Messung verworfen, da sie durch das Signal beeinflusst worden sein könnte.
2. Das Kommunikationsprotokoll ist so gestaltet, dass nach dem Aussenden einer Nachricht nicht direkt geantwortet wird, sondern erst mit einer Verzögerung D. Damit kann direkt nach jeder ausgesendeten Nachricht die Resonanzfrequenz durch die Analyse der Schwingungsperiode des ausschwingenden, nicht mehr angeregten elektromagnetischen Schwingkreises 142 bestimmt werden.

Dies hat den Vorteil, dass die Resonanzfrequenz ohne zusätzlichen Hardware-Aufwand bestimmt werden kann.

Ferner hat dies den Vorteil, dass die Resonanzfrequenz so bestimmt werden kann, so dass kein Empfang gestört wird.

Bei Ausführungsbeispielen kann die Frequenz des elektromagnetischen Schwingkreises 142 durch direkte Messung der Schwingungsperiode nach einer Erregung (des elektromagnetischen Schwingkreises 142) gemessen werden. Die Erregung muss dabei nicht auf einer angepassten Frequenz erfolgen, da ausgenutzt werden kann, nach einmaligem Anregen des elektromagnetischen Schwingkreises 142 dieser auf seiner Resonanzfrequenz weiter schwingt.

Bei Ausführungsbeispielen kann die Erregung durch das Aussenden einer Testnachricht direkt nach erfolglosem Peeking erfolgen.

Bei Ausführungsbeispielen kann die Erregung durch Aussenden von Kommunikationsnachrichten erfolgen, wobei das verwendete Kommunikationsprotokoll so definiert sein kann, dass es nach dem Senden (z.B. der Erzeugung des magnetischen Signals 132) eine Pause gibt, bevor Kommunikationspartner antworten/senden (z.B. ein magnetisches Signal 130 detektiert wird).

Bei Ausführungsbeispielen können nach verschiedenen Erregungen verschiedene Kombinationen von Kondensatoren durchgetestet werden, wobei nach der Messung (z.B. der jeweiligen Schwingungsperioden) auf die beste bisher getestete Kombination geschaltet werden kann.

### 2.6 Externer Komparator - Interrupt aufwachen

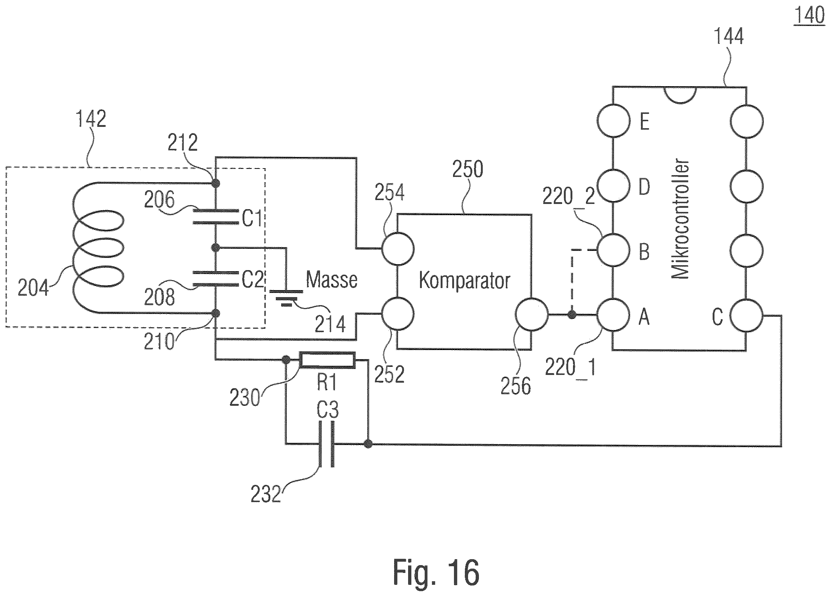

Durch die Verwendung eines externen Komparators ist ein noch stromsparender Betrieb als mit dem oben beschriebenen Peeking-Verfahren möglich, wie dies nachfolgend anhand von Fig. 16 erläutert wird.

Fig. 16 zeigt ein schematisches Blockschaltbild des anderen Geräts 140, gemäß einem weiteren Ausführungsbeispiel der vorliegenden Erfindung. Das andere Gerät 140 umfasst den Microcontroller 144 und die Konfigurationsschnittstelle 200 mit dem elektromagnetischen Schwingkreis 142.

Der elektromagnetische Schwingkreis 142 kann eine erste Spule 204 und zwei in Reihe geschaltete Kondensatoren 206 und 208 (z.B. einen ersten Kondensator 206 (z.B. C1) und einen zweiten Kondensator 208 (z.B. C2)) aufweisen. Die erste Spule 204 und die zwei in Reihe geschaltete Kondensatoren 206 und 208 können parallel geschaltet sein zwischen einem ersten Anschluss 210 und einem zweiten Anschluss 212 des elektromagnetischen Schwingkreises 142. Ein Anschluss 211 zwischen den zwei in Reihe geschalteten Kondensatoren 206 und 208 (z.B. C1 und C2) kann mit einem Bezugspotentialanschluss 214 (z.B. Masseanschluss) verbunden sein.

Der erste Anschluss 210 des elektromagnetischen Schwingkreises 142 kann mit einem ersten Eingang 252 des Komparators 250 verbunden sein, wobei der zweite Anschluss 212 des elektromagnetischen Schwingkreises 142 mit einem zweiten Eingang 254 des Komparators 250 verbunden sein kann. Ein Ausgang 256 des Komparators 250 kann mit einem ersten Pin 220_1 (z.B. Pin A) des Microcontrollers 144 verbunden sein.

Der Microcontroller 144 kann dabei konfiguriert sein, um ansprechend auf einen durch den ersten Pin 220_1 (z.B. Pin A) erzeugten Interrupt von einem Energiesparmodus in den normalen Empfangsmodus oder Aufwachmodus (z.B. Peeking-Modus) zu wechseln.

Beispielsweise kann der Microcontroller 144 konfiguriert sein, um den ersten Pin 220_1 (z.B. Pin A) in einen Capture-Modus (z.B. Aufnehm-Modus; z.B. eines Capture/Compare-Moduls) zu schalten, in dem auch der Interrupt bei einem Signal an diesem Pin 220_1 erzeugt werden kann. Alternativ kann der Ausgang 256 des Komparators 250 ferner mit einem zweiten Pin 220_2 (z.B. Pin B) des Microcontrollers 144 verbunden sein, wobei der Microcontroller 144 konfiguriert sein kann, um den zweiten Pin 220_2 (z.B. in dem normalen Empfangsmodus oder dem Aufwachmodus) in einen in einen Capture-Modus (z.B. Aufnehm-Modus; z.B. eines Capture/Compare-Moduls) zu schalten, wobei der erste Pin 220_1 zum Auslösen des Interrupts verwendet werden kann.

Wie bereits erwähnt wurde sollte der elektromagnetische Schwingkreis im Empfangsmodus (oder im Aufwachmodus) bevorzug abgestimmt sein.

Hierzu kann der elektromagnetische Schwingkreis 142 über eine Parallelschaltung aus einem ersten Widerstand 230 (z.B. R1) und einem dritten Kondensator 232 (z.B. C3) mit einem dritten Pin 220_3 (z.B. Pin C) des Microcontrollers 144 verbunden sein, wobei der Microcontroller 144 konfiguriert sein kann, um in dem normalen Empfangsmodus und/oder dem Aufwachmodus den elektromagnetischen Schwingkreis 142 durch Schalten des dritten Pins 220_3 (z.B. Pin C) auf einen aus folgenden unterschiedlichen Betriebsmodi abzustimmen:
- einem hochohmigen Eingangsmodus, und
- einem Ausgangsmodus, in dem an dem jeweiligen Pin ein Bezugspotential (z.B. Masse) bereitgestellt wird.

Alternativ oder zusätzlich können auch die Abstimmkondensatoren 202_1 und 202_2 aus Abschnitt 1.2 zur Abstimmung des elektromagnetischen Schwingkreises 142 verwendet werden, welche eine Abstimmung sowohl für den Sendemodus Als auch für den Empfangsmodus ermöglichen.

Zum Erzeugen eines magnetischen Signals 132 mit dem elektromagnetischen Schwingkreis 142 kann der Microcontroller 144 den dritten Pin 220_3 (z.B. Pin C) in einen PWM Ausgangsmodus schalten.

In dem Energiesparmodus kann der Microcontroller 144 den dritten Pin 220_3 (z.B. Pin C) auf einen Ausgangsmodus schalten, in dem an dem jeweiligen Pin ein Versorgungspotential (z.B. Vcc) oder Bezugspotential (z.B. Masse) bereitgestellt wird.

Mit anderen Worten, Fig. 16 zeigt eine Schaltung bei der ein Komparator 250 an einem Interrupt-Pin (z.B. erster Pin 220_1 (z.B. Pin A)) verwendet wird.

Komparatoren für den Frequenzbereich um 20 kHz sind sehr stromsparend (bis unter 1 µA) erhältlich.

Der Ausgang 256 des Komparators 250 wird an einen Interrupt-Pin (z.B. erster Pin 220_1 (z.B. Pin A)) des Microkontrollers gelegt (in Fig. 16 ist Pin A ein Interrupt Pin, in den vorherigen Figuren war Pin A ein Komparator-Eingang bzw. ein Schaltausgang).

Sobald ein magnetisches Wechselfeld nahe der Resonanzfrequenz des elektromagnetischen Schwingkreises 142 anliegt, wird der Microkontroller 144 durch einen Interrupt aufgeweckt. Bei manchen Microkontrollern 144 ist es möglich, einen Interrupt bei Änderungen am Timer-Capture-Eingang zu erzeugen. Ist dieses nicht möglich, so kann der Timer-Capture-Eingang (z.B. der zweite Pin 220_2 (z.B. Pin B)) zusätzlich an den Komparatorausgang 256 angeschlossen werden. Der Komparator 250 liefert damit sowohl ein Aufwachsignal als auch das Signal, welches entsprechend Abschnitt 1 dekodiert wird.

Da eine Abstimmung des elektromagnetischen Schwingkreises 142 über die Spannung an den zwei in Reihe geschalteten Kondensatoren 206 und 208 (z.B. C1 und C2) (vergleiche Abschnitt 1.2) nicht möglich ist, da der Microkontroller 144 nicht regelmäßig aufwacht und die richtige Resonanzfrequenz durch die Spannung an den zwei in Reihe geschalteten Kondensatoren 206 und 208 (z.B. C1 und C2) einstellen kann, kann die Abstimmung der Resonanzfrequenz durch zusätzliche Kondensatoren nach Abschnitt 1.1 erfolgen.

Alternativ (oder zusätzlich) besteht die Möglichkeit den dritten Pin 220_3 (z.B. Pin C) im Energiesparmodus auf Vcc zu legen (Ausgangsmodus, in dem an dem jeweiligen Pin ein Versorgungspotential bereitgestellt wird). Damit erhält man eine höhere Resonanzfrequenz. Das verwendete Aufwachsignal kann entsprechend angepasst werden, so dass dieses auch höhere Spektralkomponenten enthält. Nach dem Aufwachen kann der Microkontroller 144, wie in Abschnitt 1.2 beschrieben, die korrekte Resonanzfrequenz einstellen und die Datenübertragung kann wie in Abschnitt 1 beschrieben erfolgen. Eine höhere Resonanzfrequenz kann während des Energiesparmodus (engl. power-down) gewählt werden, damit das Aufwachsignal keine störenden hörbaren Frequenzanteile besitzt, da es ggf. von einem Mobiltelefon ausgesendet wird.

### 2.7 Rückkanal über Magnetfeldsensor des Mobiltelefons

Für viele Applikationen ist eine Rückmeldung von dem anderen Gerät 140 (z.B. Sensorknoten) an das konfigurierende Gerät 120 erwünscht. Sehr preisgünstig und platzsparend kann eine Rückmeldung über das generieren eines / mehrerer magnetischer Impulse durch die Spule des elektromagnetischen Schwingkreises 142 erfolgen. Diese magnetischen Impulse können durch den üblicherweise in Mobiltelefonen verbauten Magnetsensor des Kompasses detektiert werden. Allerdings sind dazu relativ große Stromstärken nötig.

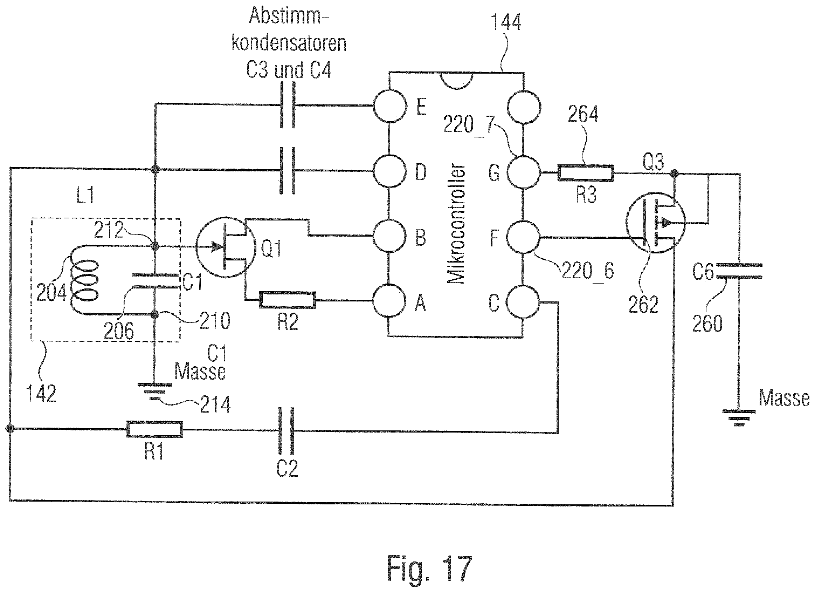

Fig. 17 zeigt ein schematisches Blockschaltbild des anderen Geräts 140, gemäß einem weiteren Ausführungsbeispiel der vorliegenden Erfindung. Das andere Gerät 140 umfasst den Microcontroller 144 und die Konfigurationsschnittstelle 200 mit dem elektromagnetischen Schwingkreis 142.

Der Microcontroller 144 kann konfiguriert sein, um durch Entladen eines sechsten Kondensators 260 (z.B. C6) einen magnetischen Impuls mit dem elektromagnetischen Schwingkreis 142 zu erzeugen.

Wie in Fig. 17 zu erkennen ist, kann der sechste Kondensator 260 (z.B. C6) hierzu über einen steuerbaren Schalter 262 (z.B. einen Transistor) mit dem elektromagnetischen Schwingkreis 142 verbunden sein, wobei ein sechster Pin 220_6 (z.B. Pin F) mit einem Steueranschluss des steuerbaren Schalters 262 verbunden ist, wobei der Microcontroller 144 konfiguriert sein kann, um den sechsten Kondensator 260 durch Schalten des sechsten Pins 220_6 (z.B. Pin F) von einem Betriebsmodi auf einen anderen Betriebsmodi (z.B. einen Pull-up-Eingangsmodus und ein Ausgangsmodus, in dem an dem jeweiligen Pin ein Bezugspotential (z.B. Masse) bereitgestellt wird) zu entladen. Ferner kann der Microcontroller 144 konfiguriert sein, um den sechsten Kondensator 260 durch Schalten eines siebten Pins 220_7 (z.B. Pin G), der mit dem sechsten Kondensator 260 verbunden ist, von einem Betriebsmodi auf einen anderen Betriebsmodi aufzuladen.

Beispielsweise kann der steuerbare Schalter 262 ein Feldeffekttransistor (z.B. MOSFET, p-Kanal MOSFET) sein, wobei der sechste Pin 220_6 (z.B. Pin F) des Microcontrollers 144 mit einem Gate des Feldeffekttransistor 262 verbunden sein kann, wobei der siebte Pin 220_7 (z.B. Pin G) des Microcontrollers 144 über einen dritten Widerstand 264 mit einem Drain des Feldeffekttransistors 262 verbunden sein kann, wobei der Drain des Feldeffekttransistors 262 mit dem sechsten Kondensator 260 verbunden sein kann. Der Microcontroller 144 kann dabei konfiguriert sein, um den sechsten Kondensator 260 durch Schalten des siebten Pins 220_7 (z.B. Pin G), der mit dem sechsten Kondensator verbunden ist, auf einen Ausgangsmodus, in dem an dem jeweiligen Pin ein Versorgungspotential (z.B. Vcc) bereitgestellt wird, aufzuladen, und um den sechsten Kondensator 260 durch Schalten des sechsten Pins 220_6 (z.B. Pin F) von einem Pull-up-Eingangsmodus in einen Ausgangsmodus, in dem an dem jeweiligen Pin ein Bezugspotential (z.B. Masse) bereitgestellt wird, zu entladen.

Mit anderen Worten, Fig. 17 zeigt eine Schaltung zur Erzeugung von magnetischen Impulsen mit einer Spule des elektromagnetischen Schwingkreises 142. Die relevanten Bauteile sind der dritte Widerstand 264 (z.B. R3), der Feldeffekttransistor 262 (z.B. Q3), der sechste Kondensator 260 (z.B. C6) und die erste Spule 204 (z.B. L1) des elektromagnetischen Schwingkreises. Die restliche Schaltung ist exemplarisch aus Abschnitt 1.4 übernommen und kann genauso durch die in den Abschnitten 1.1 bis 1.3 sowie 1.6 ersetzt werden.

Beim sechsten Kondensator 260 (z.B. C6) handelt es sich typischerweise um einen Tantal- oder Elektrolytkondensator im Bereich mehrerer hundert Microfarad. Diese Kondensatoren weisen üblicherweise einen hohen Leckstrom auf. Sind sie dauerhaft an der Betriebsspannung angeschlossen, erhöht sich somit die Ruhestromaufnahme der Schaltung massiv. Dieses Problem kann durch das im Folgenden beschriebene Verfahren gelöst werden. Erst kurz (Sekundenbereich) bevor ein magnetischer Impuls übertragen werden soll, wird der sechste Kondensator 260 (z.B. C6) über den dritten Widerstand 264 (z.B. R3) aufgeladen, indem dem Microkontroller den siebten Pin 220_7 (z.B. Pin G) auf Vcc legt. Ansonsten ist der siebte Pin 220_7 (z.B. Pin G) auf Masse oder hochohmig geschaltet.

Zur Aussendung des magnetischen Impulses wird der mit dem Gate des Feldeffekttransistors 262 (z.B. Q3) verbundene sechste Pin 220_6 (z.B. Pin F) durch den Microkontroller 144 von einem Pull-up-Eingangsmodus auf Ausgangsmodus, in dem ein Massepotential bereitgestellt wird, geschaltet. Dadurch Entlädt sich der Feldeffekttransistor 262 (z.B. Q3) durch die erste Spule 204 (L1) und erzeugt einen magnetischen Impuls.

Daten können durch das Vorhandensein eines Impulses, die Zeit, zu der der Impuls kommt, die magnetische Polarität des Pulses oder durch die Abfolge mehrerer Impulse sowie auch deren Polaritäten übertragen werden.

Bei Ausführungsbeispielen kann der sechste Kondensator 260 (z.B. C6) nur kurz vor der Erzeugung des magnetischen Impulses aufgeladen werden.

Bei Ausführungsbeispielen kann eine Erzeugung eines magnetischen Impulses durch Entladung eines Kondensators zur Informationsübertragung erfolgen.

Bei Ausführungsbeispielen kann ein Magnetsensor zur Datenübermittelung verwendet werden.

### 3. Weitere Ausführungsbeispiele

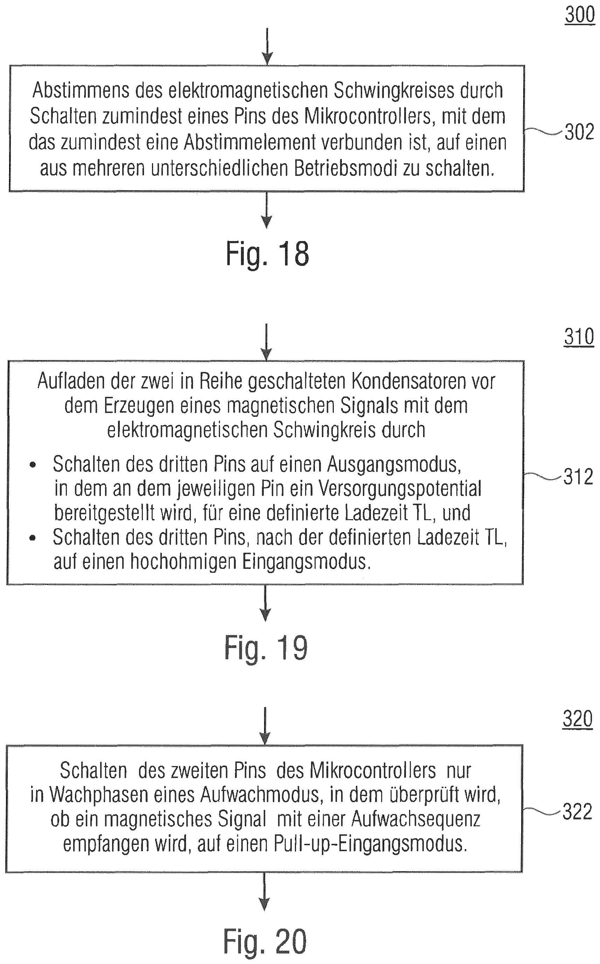

Fig. 18 zeigt ein Flussdiagramm eines Verfahrens 300 zum Abstimmen eines elektromagnetischen Schwingkreises einer Konfigurationsschnittstelle eines Teilnehmers eines Kommunikationssystems, wobei der elektromagnetischen Schwingkreis konfiguriert ist, um ein magnetisches Signal zu detektieren und/oder zu erzeugen, das zu und/oder von dem Teilnehmer zu übertragene Daten aufweist, wobei der elektromagnetische Schwingkreis mit einem Microcontroller des Teilnehmers verbunden ist, wobei der Microcontroller mit zumindest einem Abstimmelement zur Abstimmung des elektromagnetischen Schwingkreises verbunden ist. Das Verfahren 300 umfasst einen Schritt 302 des Abstimmens des elektromagnetischen Schwingkreises durch Schalten zumindest eines Pins des Microcontrollers, mit dem das zumindest eine Abstimmelement verbunden ist, auf einen aus mehreren unterschiedlichen Betriebsmodi zu schalten.

Fig. 19 zeigt ein Flussdiagramm eines Verfahrens 310 zum Betrieb eines elektromagnetischen Schwingkreises einer Konfigurationsschnittstelle eines Teilnehmers eines Kommunikationssystems, wobei der elektromagnetischen Schwingkreis konfiguriert ist, um ein magnetisches Signal zu detektieren und/oder zu erzeugen, das zu und/oder von dem Teilnehmer zu übertragene Daten aufweist, wobei der elektromagnetische Schwingkreis mit einem Microcontroller des Teilnehmers verbunden ist, wobei der elektromagnetische Schwingkreis in Reihe zwischen einem ersten Pin und einem zweiten Pin des Microcontrollers geschaltet ist, wobei der elektromagnetische Schwingkreis ferner mit einem dritten Pin des Microcontrollers verbunden ist, wobei der elektromagnetische Schwingkreis zwei in Reihe geschaltete Kondensatoren aufweist, wobei ein Anschluss zwischen den zwei in Reihe geschalteten Kondensatoren mit einem Bezugspotentialanschluss verbunden ist. Das Verfahren 310 umfasst einen Schritt 312 des Aufladens der zwei in Reihe geschalteten Kondensatoren vor dem Erzeugen eines magnetischen Signals mit dem elektromagnetischen Schwingkreis durch
- Schalten des dritten Pins auf einen Ausgangsmodus, in dem an dem jeweiligen Pin ein Versorgungspotential bereitgestellt wird, für eine definierte Ladezeit T_{L}, und
- Schalten des dritten Pins, nach der definierten Ladezeit T_{L}, auf einen hochohmigen Eingangsmodus.

Fig. 20 zeigt ein Flussdiagramm eines Verfahrens 320 zum Betrieb eines elektromagnetischen Schwingkreises einer Konfigurationsschnittstelle eines Teilnehmers eines Kommunikationssystems, wobei der elektromagnetischen Schwingkreis konfiguriert ist, um ein magnetisches Signal zu detektieren und/oder zu erzeugen, das zu und/oder von dem Teilnehmer zu übertragene Daten aufweist, wobei der elektromagnetische Schwingkreis mit einem Microcontroller des Teilnehmers verbunden ist, wobei ein erster Anschluss des elektromagnetischen Schwingkreises auf ein Bezugspotential geschaltet ist, wobei ein zweiter Anschluss des elektromagnetischen Schwingkreises mit einem Gate eines Transistors verbunden ist, der mit dem Microcontroller verbunden ist, wobei ein Drain-Anschluss des Transistors direkt mit einem zweiten Pin des Microcontrollers verbunden ist. Das Verfahren 320 umfasst einen Schritt des Schaltens des zweiten Pins des Microcontrollers nur in Wachphasen eines Aufwachmodus, in dem überprüft wird, ob ein magnetisches Signal mit einer Aufwachsequenz empfangen wird, auf einen Pull-up-Eingangsmodus.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nichtvergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Literaturverzeichnis

[1] US 2,381,097 A
[2] US 4,415,769 A
[3] US 3,764,746 A
[4] Optimalfilter, https://de.wikipedia.org/wiki/Optimalfilter, zuletzt geöffnet: 11.04.2019
[5] Schwingkreis, https://elektroniktutor.de/analogtechnik/par_swkr.html, zuletzt geöffnet: 16.04.2019
[6] (G)MSK-Spektrum, https://en.wikipedia.org/wiki/Minimum-shift_keying#/media/File:GMSK_PSD.png, zuletzt geöffnet: 15.04.2019
[7] Pulsdauermodulation, https://de.wikipedia.org/wiki/Pulsdauermodulation, zuletzt geöffnet: 16.04.2019
[8] UART-Kommunikation, https://de.wikipedia.org/wiki/Universal_Asynchronous_Receiver_Transmitter, zuletzt geöffnet: 17.04.2019
[9] ETSI TS 103 357
[10] IEEE 802.15.4w
[11] Datenblatt 2SK3230
[12] https://de.wikipedia.org/wiki/Kapazit%C3%A4tsdiode
[13] https://fahrplan.events.ccc.de/camp/2015/Fahrplan/system/attachments/2671/ original/Mythen_der_Elektronikentwicklung_v2.pdf
[14] https://www.analog-praxis.de/fallstricke-beim-einsatz-von-mlccs-a-535573/
[15] https://www.digikey.com/en/articles/techzone/2012/apr/protecting-inputs-in-digitalelectronics

## Patentansprüche

1. Teilnehmer (140) eines Kommunikationssystems,
wobei der Teilnehmer (140) einen Microcontroller (144) und eine Konfigurationsschnittstelle (200) aufweist,
wobei die Konfigurationsschnittstelle (200) einen mit dem Microcontroller (144) direkt verbundenen elektromagnetischen Schwingkreis (142) umfasst, der konfiguriert ist, um ein magnetisches Signal (130,132) zu detektieren und/oder zu erzeugen, das zu und/oder von dem Teilnehmer (140) zu übertragene Daten aufweist,
wobei der Microcontroller (144) mit zumindest einem Abstimmelement zur Abstimmung des elektromagnetischen Schwingkreises (142) verbunden ist,
wobei der Microcontroller (144) konfiguriert ist, um zumindest einen Pin des Microcontrollers (144), mit dem das zumindest eine Abstimmelement verbunden ist, auf einen aus mehreren unterschiedlichen Betriebsmodi zu schalten, um den elektromagnetischen Schwingkreis (142) abzustimmen,
**dadurch gekennzeichnet, dass**
der elektromagnetische Schwingkreis (142) in Reihe zwischen einem ersten Pin (220_1) des Microcontrollers (144) und einem Bezugspotentialanschluss (214) geschaltet ist,
wobei das zumindest eine Abstimmelement (202_1,202_2) zwischen dem ersten Pin (220_1) und zumindest einem zweiten Pin (220_2,220_3) des Microcontrollers (144) geschaltet ist,
wobei der Microcontroller (144) konfiguriert ist, um den zumindest einen zweiten Pin (220_2) auf einen aus mehreren unterschiedlichen Betriebsmodi zu schalten, um den elektromagnetischen Schwingkreis (142) abzustimmen.

2. Teilnehmer (140) nach dem vorangehenden Anspruch,
wobei die mehreren unterschiedlichen Betriebsmodi zumindest zwei aus einem hochohmigen Eingangsmodus, einem Pull-up-Eingangsmodus, und einem Ausgangsmodus sind, in dem an dem jeweiligen Pin ein Bezugspotential oder ein Versorgungspotential bereitgestellt wird.

3. Teilnehmer (140) nach einem der vorangehenden Ansprüche,
wobei der zumindest eine Pin des Microcontrollers (144) ein Eingangs-/Ausgangs-Pin ist.

4. Teilnehmer (140) nach einem der vorangehenden Ansprüche,
wobei der Microcontroller (144) konfiguriert ist, um den zumindest einen Pin zwischen zumindest zwei der mehreren unterschiedlichen Betriebsmodi umzuschalten, um den elektromagnetischen Schwingkreis (142) abzustimmen.

5. Teilnehmer (140) nach einem der vorangehenden Ansprüche,
wobei das zumindest eine Abstimmelement Teil des elektromagnetischen Schwingkreises (142) ist,
oder wobei das zumindest eine Abstimmelement mit dem elektromagnetischen Schwingkreis (142) verbunden ist.

6. Teilnehmer (140) nach einem der vorangehenden Ansprüche,
wobei der Microcontroller (144) konfiguriert ist, um den elektromagnetischen Schwingkreis (142) in Abhängigkeit von einer Trägerfrequenz des zu detektierenden und/oder zu erzeugenden magnetischen Signals (130,132) abzustimmen.

7. Teilnehmer (140) nach dem vorangehenden Anspruch,
wobei das zu detektierende und/oder zu erzeugende magnetische Signal (130,132) im Frequenzbereich von 10 Hz bis 20 kHz liegt.

8. Teilnehmer (140) nach einem der vorangehenden Ansprüche,
wobei der elektromagnetische Schwingkreis (142) eine erste Spule (204) und einen ersten Kondensator (206) aufweist.

9. Teilnehmer (140) nach einem der Ansprüche 1 bis 8,
wobei der Microcontroller (144) konfiguriert ist, um den elektromagnetischen Schwingkreis (142) durch Schalten des zumindest einen zweiten Pins (220_2) jeweils auf einen aus folgenden unterschiedlichen Betriebsmodi abzustimmen:
- einem hochohmigen Eingangsmodus, und
- einem Ausgangsmodus, in dem an dem jeweiligen Pin ein Bezugspotential bereitgestellt wird.

10. Teilnehmer (140) nach einem der Ansprüche 1 bis 9,
wobei der Microcontroller (144) konfiguriert ist, um durch Entladen eines sechsten Kondensators (260) einen magnetischen Impuls mit dem elektromagnetischen Schwingkreis (142) zu erzeugen,
wobei der sechste Kondensator (260) über einen steuerbaren Schalter (262) mit dem elektromagnetischen Schwingkreis (142) verbunden ist,
wobei ein sechster Pin (220_6) mit einem Steueranschluss des steuerbaren Schalters (262) verbunden ist,
wobei der Microcontroller (144) konfiguriert ist, um den sechsten Kondensator (260) durch Schalten des sechsten Pins (220_6) von einem Betriebsmodi auf einen anderen Betriebsmodi zu entladen,
wobei der Microcontroller (144) konfiguriert ist, um den sechsten Kondensator (260) durch Schalten eines siebten Pins (220_7), der mit dem sechsten Kondensator (260) verbunden ist, von einem Betriebsmodi auf einen anderen Betriebsmodi aufzuladen,
wobei der steuerbare Schalter (260) ein Feldeffekttransistor ist,
wobei der sechste Pin (220_6) des Microcontrollers (144) mit einem Gate-Anschluss des Transistors (262) verbunden ist,
wobei der siebte Pin (220_7) des Microcontroller (144) über einen dritten Widerstand (264) mit einem Drain-Anschluss des Feldeffekttransistors (262) verbunden ist,
wobei der Drain-Anschluss des Feldeffekttransistors (262) mit dem sechsten Kondensator (260) verbunden ist,
wobei ein Source-Anschluss des Feldeffekttransistors mit dem elektromagnetischen Schwingkreis (142) verbunden ist.

11. Teilnehmer (140) nach Anspruch 10,
wobei der Microcontroller (144) konfiguriert ist, um den sechsten Kondensator (260) durch Schalten des sechsten Pins (220_6) von einem Pull-up-Eingangsmodus in einen Ausgangsmodus, in dem an dem jeweiligen Pin ein Bezugspotential bereitgestellt wird, zu entladen.

12. Teilnehmer (140) nach einem der Ansprüche 10 bis 11,
wobei der Microcontroller (144) konfiguriert ist, um den sechsten Kondensator (260) durch Schalten des siebten Pins (220_7), der mit dem sechsten Kondensator (260) verbunden ist, auf einen Ausgangsmodus, in dem an dem jeweiligen Pin ein Versorgungspotential bereitgestellt wird, aufzuladen.

13. Verfahren (300) zum Abstimmen eines elektromagnetischen Schwingkreises (142) einer Konfigurationsschnittstelle (200) eines Teilnehmers eines Kommunikationssystems, wobei der elektromagnetischen Schwingkreis (142) konfiguriert ist, um ein magnetisches Signal (130,132) zu detektieren und/oder zu erzeugen, das zu und/oder von dem Teilnehmer (140) zu übertragene Daten aufweist, wobei der elektromagnetische Schwingkreis (142) direkt mit einem Microcontroller (144) des Teilnehmers verbunden ist, wobei der Microcontroller (144) mit zumindest einem Abstimmelement zur Abstimmung des elektromagnetischen Schwingkreises (142) verbunden ist,
**dadurch gekennzeichnet, dass**
der elektromagnetische Schwingkreis (142) in Reihe zwischen einem ersten Pin (220_1) des Microcontrollers (144) und einem Bezugspotentialanschluss (214) geschaltet ist, wobei das zumindest eine Abstimmelement (202_1,202_2) zwischen dem ersten Pin (220_1) und zumindest einem zweiten Pin (220_2,220_3) des Microcontrollers (144) geschaltet ist, wobei das Verfahren (300) aufweist:
Abstimmen (302) des elektromagnetischen Schwingkreises (142) durch Schalten zumindest des einen zweiten Pins des Microcontrollers (144), mit dem das zumindest eine Abstimmelement verbunden ist, auf einen aus mehreren unterschiedlichen Betriebsmodi.

14. Computerprogramm, umfassend Befehle, die bewirken, dass die Vorrichtung aus Anspruch 1 ein Abstimmen (302) des elektromagnetischen Schwingkreises (142) durch Schalten zumindest des einen zweiten Pins des Microcontrollers (144), mit dem das zumindest eine Abstimmelement verbunden ist, auf einen aus mehreren unterschiedlichen Betriebsmodi, durchführt.

## Claims

1. Participant (140) of a communication system,
wherein the participant (140) comprises a microcontroller (144) and a configuration interface (200),
wherein the configuration interface (200) includes an electromagnetic resonant circuit (142) connected directly to the microcontroller (144), configured to detect and/or to generate a magnetic signal (130, 132) comprising data to be transmitted to and/or from the participant (140),
wherein the microcontroller (144) is connected to at least one tuning element for tuning the electromagnetic resonant circuit (142),
wherein the microcontroller (144) is configured to switch at least one pin of the microcontroller (144), with which the at least one tuning element is connected, to one of several different operating modes in order to tune the electromagnetic resonant circuit (142),
**characterized in that**
the electromagnetic resonant circuit (142) is connected in series between a first pin (220_1) of the microcontroller (144) and a reference potential terminal (214),
wherein the at least one tuning element (202_1, 202_2) is connected between the first pin (220_1) and at least one second pin (220_2, 220_3) of the microcontroller (144),
wherein the microcontroller (144) is configured to switch the at least one second pin (220_2) to one of several different operating modes in order to tune the electromagnetic resonant circuit (142).

2. Participant (140) according to the preceding claim,
wherein the several different operating modes are at least two of a high-impedance input mode, a pull-up input mode and an output mode in which a reference potential or a supply potential is provided at the respective pin.

3. Participant (140) according to any one of the preceding claims,
wherein the at least one pin of the microcontroller (144) is an input/output pin.

4. Participant (140) according to any one of the preceding claims,
wherein the microcontroller (144) is configured to switch the at least one pin between at least two of the several different operating modes in order to tune the electromagnetic resonant circuit (142).

5. Participant (140) according to any one of the preceding claims,
wherein the at least one tuning element is part of the electromagnetic resonant circuit (142),
or wherein the at least one tuning element is connected to the electromagnetic resonant circuit (142).

6. Participant (140) according to any one of the preceding claims,
wherein the microcontroller (144) is configured to tune the electromagnetic resonant circuit (142) as a function of a carrier frequency of the magnetic signal (130, 132) to be detected and/or to be generated.

7. Participant (140) according to the preceding claim,
wherein the magnetic signal (130, 132) to be detected and/or to be generated is in the frequency range of 10 Hz to 20 kHz.

8. Participant (140) according to any one of the preceding claims,
wherein the electromagnetic resonant circuit (142) comprises a first coil (204) and a first capacitor (206).

9. Participant (140) according to any one of claims 1 to 8,
wherein the microcontroller (144) is configured to tune the electromagnetic resonant circuit (142) by switching the at least one second pin (220_2) to one of the following different operating modes, respectively:
- a high-impedance input mode, and
- an output mode in which a reference potential is provided at the respective pin.

10. Participant (140) according to any one of claims 1 to 9,
wherein the microcontroller (144) is configured to generate a magnetic impulse with the electromagnetic resonant circuit (142) by discharging a sixth capacitor (260),
wherein the sixth capacitor (260) is connected to the electromagnetic resonant circuit (142) via a controllable switch (262),
wherein a sixth pin (220_6) is connected to a control terminal of the controllable switch (262),
wherein the microcontroller (144) is configured to discharge the sixth capacitor (260) by switching the sixth pin (220_6) from one operating mode to another operating mode,
wherein the microcontroller (144) is configured to charge the sixth capacitor (260) by switching a seventh pin (220_7) connected to the sixth capacitor (260) from one operating mode to another operating mode,
wherein the controllable switch (260) is a field effect transistor,
wherein the sixth pin (220_6) of the microcontroller (144) is connected to a gate terminal of the transistor (262),
wherein the seventh pin (220_7) of the microcontroller (144) is connected to a drain terminal of the field effect transistor (262) via a third resistor (264),
wherein the drain terminal of the field effect transistor (262) is connected to the sixth capacitor (260),
wherein a source terminal of the field effect transistor is connected to the electromagnetic resonant circuit (142).

11. Participant (140) according to claim 10,
wherein the microcontroller (144) is configured to discharge the sixth capacitor (260) by switching the sixth pin (220_6) from a pull-up input mode into an output mode in which a reference potential is provided at the respective pin.

12. Participant (140) according to any one of claims 10 to 11,
wherein the microcontroller (144) is configured to charge the sixth capacitor (260) by switching the seventh pin (220_7) connected to the sixth capacitor (260) to an output mode in which a supply potential is provided at the respective pin.

13. Method (300) for tuning an electromagnetic resonant circuit (142) of a configuration interface (200) of a participant of a communication system, wherein the electromagnetic resonant circuit (142) is configured to detect and/or to generate a magnetic signal (131, 132) comprising data to be transmitted to and/or from the participant (140), wherein the electromagnetic resonant circuit (142) is connected directly to a microcontroller (144) of the participant, wherein the microcontroller (144) is connected to at least one tuning element for tuning the electromagnetic resonant circuit (142),
**characterized in that**
the electromagnetic resonant circuit (142) is connected in series between a first pin (220_1) of the microcontroller (144) and a reference potential terminal (214), wherein the at least one tuning element (202_1, 202_2) is connected between the first pin (220_1) and at least one second pin (220_2, 220_3) of the microcontroller (144), wherein the method (300) comprises:
tuning (302) the electromagnetic resonant circuit (142) by switching at least the one second pin of the microcontroller (144), with which the at least one tuning element is connected, to one of several different operating modes.

14. Computer program including instructions causing the apparatus of claim 1 to perform tuning (302) the electromagnetic resonant circuit (142) by switching at least the one second pin of the microcontroller (144), with which the at least one tuning element is connected, to one of several different operating modes.

## Revendications

1. Abonné (140) d'un système de communication,
dans lequel l'abonné (140) présente un microcontrôleur (144) et une interface de configuration (200),
dans lequel l'interface de configuration (200) comporte un circuit résonant électromagnétique (142) connecté directement au microcontrôleur (144), qui est configuré pour détecter et/ou générer un signal magnétique (130, 132) qui présente des données à transmettre au et/ou de l'abonné (140),
dans lequel le microcontrôleur (144) est connecté à au moins un élément d'accord destiné à accorder le circuit résonant électromagnétique (142),
dans lequel le microcontrôleur (144) est configuré pour commuter au moins une broche du microcontrôleur (144), à laquelle est connecté l'au moins un élément d'accord, à l'un parmi plusieurs modes de fonctionnement différents pour accorder le circuit résonant électromagnétique (142),
**caractérisé par le fait que**
le circuit résonant électromagnétique (142) est commuté en série entre une première broche (220_1) du microcontrôleur (144) et une connexion de potentiel de référence (214),
dans lequel l'au moins un élément d'accord (202_1, 202_2) est commuté entre la première broche (220_1) et au moins une deuxième broche (220_2, 220_3) du microcontrôleur (144),
dans lequel le microcontrôleur (144) est configuré pour commuter l'au moins une deuxième broche (220_2) à l'un parmi plusieurs modes de fonctionnement différents pour accorder le circuit résonant électromagnétique (142).

2. Abonné (140) selon la revendication précédente,
dans lequel les plusieurs modes de fonctionnement différents sont au moins deux parmi un mode d'entrée à haute impédance, un mode d'entrée pull-up et un mode de sortie dans lequel un potentiel de référence ou un potentiel d'alimentation est mis à disposition au niveau de la broche respective.

3. Abonné (140) selon l'une des revendications précédentes,
dans lequel l'au moins une broche du microcontrôleur (144) est une broche d'entrée/de sortie.

4. Abonné (140) selon l'une des revendications précédentes,
dans lequel le microcontrôleur (144) est configuré pour commuter l'au moins une broche entre au moins deux parmi les plusieurs modes de fonctionnement différents pour accorder le circuit résonant électromagnétique (142).

5. Abonné (140) selon l'une des revendications précédentes,
dans lequel l'au moins un élément d'accord fait partie du circuit résonant électromagnétique (142),
ou dans lequel l'au moins un élément d'accord est connecté au circuit résonant électromagnétique (142).

6. Abonné (140) selon l'une des revendications précédentes,
dans lequel le microcontrôleur (144) est configuré pour accorder le circuit résonant électromagnétique (142) en fonction d'une fréquence de porteuse du signal magnétique (130, 132) à détecter et/ou générer.

7. Abonné (140) selon la revendication précédente,
dans lequel le signal magnétique (130, 132) à détecter et/ou générer se situe dans la plage de fréquences de 10 Hz à 20 kHz.

8. Abonné (140) selon l'une des revendications précédentes,
dans lequel le circuit résonant électromagnétique (142) présente une première bobine (204) et un premier condensateur (206).

9. Abonné (140) selon l'une des revendications 1 à 8,
dans lequel le microcontrôleur (144) est configuré pour accorder le circuit résonant électromagnétique (142) en commutant l'au moins une deuxième broche (220_2) à l'un parmi les différents modes de fonctionnement suivants:
- un mode d'entrée à haute impédance, et
- un mode de sortie dans lequel un potentiel de référence est mis à disposition au niveau de la broche respective.

10. Abonné (140) selon l'une des revendications 1 à 9,
dans lequel le microcontrôleur (144) est configuré pour générer, en déchargeant un sixième condensateur (260), une impulsion magnétique par le circuit résonant électromagnétique (142),
dans lequel le sixième condensateur (260) est connecté, par l'intermédiaire d'un commutateur pouvant être commandé (262), au circuit résonant électromagnétique (142),
dans lequel une sixième broche (220_6) est connectée à une connexion de commande du commutateur pouvant être commandé (262),
dans lequel le microcontrôleur (144) est configuré pour décharger le sixième condensateur (260) en commutant la sixième broche (220_6) d'un mode de fonctionnement à un autre mode de fonctionnement,
dans lequel le microcontrôleur (144) est configuré pour charger le sixième condensateur (260), en commutant une septième broche (220_7) qui est connectée au sixième condensateur (260), d'un mode de fonctionnement à un autre mode de fonctionnement,
dans lequel le commutateur pouvant être commandé (260) est un transistor à effet de champ,
dans lequel la sixième broche (220_6) du microcontrôleur (144) est connectée à une connexion de grille du transistor (262),
dans lequel la septième broche (220_7) du microcontrôleur (144) est connectée, par l'intermédiaire d'une troisième résistance (264), à une connexion de drain du transistor à effet de champ (262),
dans lequel la connexion de drain du transistor à effet de champ (262) est connectée au sixième condensateur (260),
dans lequel une connexion de source du transistor à effet de champ est connectée au circuit résonant électromagnétique (142).

11. Abonné (140) selon la revendication 10,
dans lequel le microcontrôleur (144) est configuré pour décharger le sixième condensateur (260) en commutant la sixième broche (220_6) d'un mode d'entrée pull-up à un mode de sortie dans lequel un potentiel de référence est mis à disposition au niveau de la broche respective.

12. Abonné (140) selon l'une des revendications 10 à 11,
dans lequel le microcontrôleur (144) est configuré pour charger le sixième condensateur (260) en commutant la septième broche (220_7), qui est connectée au sixième condensateur (260), à un mode de sortie dans lequel un potentiel d'alimentation est mis à disposition au niveau de la broche respective.

13. Procédé (300) permettant d'accorder un circuit résonant électromagnétique (142) d'une interface de configuration (200) d'un abonné d'un système de communication, dans lequel le circuit résonant électromagnétique (142) est configuré pour détecter et/ou générer un signal magnétique (130, 132) qui présente des données à transmettre au et/ou de l'abonné (140), dans lequel le circuit résonant électromagnétique (142) est connecté directement à un microcontrôleur (144) de l'abonné, dans lequel le microcontrôleur (144) est connecté à au moins un élément d'accord destiné à accorder le circuit résonant électromagnétique (142),
**caractérisé par le fait que** le circuit résonant électromagnétique (142) est connecté en série entre une première broche (220_1) du microcontrôleur (144) et une connexion de potentiel de référence (214), dans lequel l'au moins un élément d'accord (202_1, 202_2) est connecté entre la première broche (220_1) et au moins une deuxième broche (220_2, 220_3) du microcontrôleur (144), dans lequel le procédé (300) présente le fait de:
accorder (302) le circuit résonant électromagnétique (142) en commutant au moins l'une deuxième broche du microcontrôleur (144), à laquelle est connecté l'au moins un élément d'accord, à l'un parmi plusieurs modes de fonctionnement différents.

14. Programme d'ordinateur, comportant des instructions qui amènent le dispositif selon la revendication 1 à accorder (302) le circuit résonant électromagnétique (142) en commutant au moins l'une deuxième broche du microcontrôleur (144), à laquelle est connecté l'au moins un élément d'accord, à l'un parmi plusieurs modes de fonctionnement différents.
